# EUROPEAN PATENT APPLICATION

(11) **EP 4 733 486 A1**
(43) Date of publication of application: **29.04.2026**
(21) Application number: 24825555.6
(22) Date of filing: 15.04.2024
(51) Int. Cl.: E02F 3/43, E02F 3/36, E02F 9/20, E02F 9/24

(54) **WORK MACHINE AND CONTROL METHOD FOR WORK MACHINE**

(30) Priority: 23.06.2023 JP 2023103670; 23.06.2023 JP 2023103671; 23.06.2023 JP 2023103672
(71) Applicant: KUBOTA CORPORATION, Osaka-shi, Osaka 556-8601 (JP)
(72) Inventor: MORI, Hiroya, Sakai-shi, Osaka 590-0908 (JP)
(74) Representative: Cabinet Beau de Loménie
(86) International application number: PCT/JP2024/014951
(87) International publication number: WO 2024/262145

(57) **Abstract**

Provided is a working machine capable of appropriately setting a holding position at which a to-be-held object is to be held and reducing variations in the operation of holding the to-be-held object.

A working machine (1) includes a machine body (2), a working device (20) provided on the machine body (2), an attachment (100) provided on the working device (20) to hold an elongated to-be-held object (W), a first sensor (81) to recognize a position of one end portion (W1b) of the to-be-held object (W), a setter (57) to set a holding position (PG) based on a recognition result from the first sensor (81), the holding position (PG) being a position at which the to-be-held object (W) is to be held by the attachment (100), a controller (51) to control the working device (20). The controller (51) is configured or programmed to control the working device (20) to allow the attachment (100) to hold the to-be-held object (W) at the holding position (PG) set by the setter (57).

## Description

### Technical Field

The present invention relates to working machines and methods of controlling working machines.

### Background Art

A working machine described in PTL 1 includes a lower traveling body, an upper turning body, and a working device provided on the upper turning body. The working device includes a boom swingable in an up-down direction, an arm provided on a distal end portion of the boom and swingable in a front-rear direction or an up-down direction, and a pipe-joining attachment connected to a distal end portion of the arm to hold a pipe. This working machine is operated by an operator to bring a pipe held by the pipe-joining attachment sufficiently close to a to-be-joined pipe in an underground groove and join the pipe to the to-be-joined pipe.

### Citation List

### Patent Literature

PTL 1: Japanese Unexamined Patent Application Publication No. 2023-62320

### Summary of Invention

### Technical Problem

The working machine according to PTL 1 needs to be operated by an operator to hold the pipe using the attachment. However, each operator has a different level of skill in the operation of holding the pipe, and an unskilled operator may fail to hold the pipe at an appropriate position or damage the pipe when holding the pipe.

According to the working machine of PTL 1, first, the pipe held by the attachment is moved to an operation start position above the groove in which the to-be-joined pipe is located (for example, an approach position directly above one end of the to-be-joined pipe in the groove). Then, the pipe is lowered into the groove, brought sufficiently close to a position at which the pipe is joinable to the to-be-joined pipe, and joined to the to-be-joined pipe. Thus, the worker needs to perform a cumbersome operation of moving the pipe held by the attachment in two steps.

When the working machine according to PTL 1 is used to join one end of the pipe held by the attachment to one end of the to-be-joined pipe in the underground groove, the operator needs to perform an operation of bringing the ends of both pipes sufficiently close to each other. Therefore, the operator is required to have advanced operational skills.

The present invention has been made to solve the above-described problem of the related art, and an object of the present invention is to provide a working machine capable of appropriately setting a holding position of a pipe to be held and reducing variations in a pipe holding operation.

**It** is also an object of the present invention to provide a working machine capable of easily moving a joining member held by an attachment to an operation start position.

**It** is also an object of the present invention to provide a working machine capable of accurately moving the joining member held by the attachment closer to a position at which the joining member is joinable to a to-be-joined member.

### Solution to Problem

A working machine according to an example embodiment of the present invention includes a machine body, a working device provided on the machine body, an attachment provided on the working device to hold an elongated to-be-held object, a first sensor to recognize a position of one end portion of the to-be-held object, a setter to set a holding position based on a recognition result from the first sensor, the holding position being a position at which the to-be-held object is to be held by the attachment, and a controller to control the working device, wherein the controller is configured or programmed to control the working device to allow the attachment to hold the to-be-held object at the holding position set by the setter.

The setter may be configured or programmed to set the holding position to a position at a predetermined distance from the one end portion of the to-be-held object recognized by the first sensor.

The setter may be configured or programmed to set the holding position such that the one end portion of the to-be-held object is recognizable by the first sensor when the to-be-held object is held by the attachment.

The attachment may include a holder to hold the to-be-held object and a joining functional unit positioned on an extension line extending in a longitudinal direction of the to-be-held object from the one end portion of the to-be-held object held by the holder, the joining functional unit being configured to approach or contact a to-be-joined member when the one end portion of the to-be-held object is joined to the to-be-joined member, the to-be-joined member being a member to which the one end portion of the to-be-held object is to be joined. The setter may be configured or programmed to set the holding position to a position at which a distance between the one end portion of the to-be-held object and the joining functional unit is a predetermined separation distance when the to-be-held object is held by the holder.

The attachment may include a horizontal rotation mechanism to horizontally rotate the holder. The controller may be configured or programmed to control an operation of the horizontal rotation mechanism such that a holding direction of the holder coincides with a direction perpendicular to the longitudinal direction of the to-be-held object.

The setter may be configured or programmed to set a pre-holding position to a position facing the holding position. The controller may be configured or programmed to control the attachment and the working device to move the attachment to the pre-holding position, move the attachment from the pre-holding position to the holding position with the holder in an open state, and bring the holder into a closed state to hold the to-be-held object when the attachment is moved to the holding position.

The holder may include a pair of holding claws. The closed state of the holder may be a state in which an interval between the pair of holding claws is less than when the holder is in the open state such that the to-be-held object is held between the pair of holding claws.

The working device may include a boom including a proximal end portion supported by the machine body such that the boom is rotatable, an arm supported by a distal end portion of the boom such that the arm is rotatable, and the attachment provided at a distal end portion of the arm.

The controller may be configured or programmed to, when the amount of displacement of (i) a position of the one end portion of the to-be-held object recognized by the first sensor while the working device and the attachment are controlled based on the holding position set by the setter to hold the to-be-held object from (ii) an expected position of the one end portion of the to-be-held object corresponding to the holding position set by the setter is greater than or equal to a predetermined value, control the working device to perform re-holding of the to-be-held object such that the amount of displacement is less than the predetermined value.

The controller may be configured or programmed to perform the re-holding by bringing the holder into the open state, moving the attachment in a direction that reduces the amount of displacement, and then bringing the holder into the closed state.

The working machine may further include a notifier to provide a notification using sound, light or a display when the first sensor fails to recognize the position of the one end portion of the to-be-held object.

The first sensor may be configured to recognize a position of a joining portion of a joining member that is to be joined to a to-be-joined member, the joining member being the to-be-held object held by the attachment. The working machine may include an approach-target-position setter to set, based on a recognition result from the first sensor, an approach target position to which the attachment is to be moved such that the joining member is moved to bring the joining portion to an operation start position in the vicinity of the to-be-joined member, and a controller to control the working device such that the attachment moves to the approach target position set by the approach-target-position setter.

A working machine according to an example embodiment of the present invention includes a machine body, a working device provided on the machine body, an attachment provided on the working device to hold a joining member, a first sensor to recognize a position of a joining portion of the joining member held by the attachment, the joining portion being a portion to be joined to a to-be-joined member, an approach-target-position setter to set, based on a recognition result from the first sensor, an approach target position to which the attachment is to be moved such that the joining member is moved to bring the joining portion to an operation start position in the vicinity of the to-be-joined member, and a controller to control the working device such that the attachment moves to the approach target position set by the approach-target-position setter.

The to-be-joined member may be in a groove located lower than a ground surface or on a base including at least a portion located higher than the ground surface. The approach-target-position setter may be configured or programmed to set the approach target position on or above the ground surface in the vicinity of the to-be-joined member or on a platform provided on the ground surface in the vicinity of the to-be-joined member.

The to-be-joined member may be in the groove located lower than the ground surface. The approach-target-position setter may be configured or programmed to set the approach target position on or above the ground surface in the vicinity of the groove.

The working machine may further include a position acquirer to acquire a position of a to-be-joined portion of the to-be-joined member, the to-be-joined portion being a portion to which the joining portion is to be joined. The approach-target-position setter may be configured or programmed to set the operation start position based on the recognition result from the first sensor and based on the position of the to-be-joined portion acquired by the position acquirer, the operation start position being set to a position at which the joining portion is in the vicinity of the to-be-joined portion.

The position acquirer may be configured or programmed to acquire the position of the to-be-joined portion based on an image of the to-be-joined portion captured by an imager or a ranging result from a ranging sensor.

The position acquirer may be configured or programmed to acquire the position of the to-be-joined portion based on three-dimensional design data indicating a position of the to-be-joined member or a result of detection performed by an underground radar to detect the position of the to-be-joined member embedded underground.

The position acquirer may be configured or programmed to, when the to-be-joined member is to be joined to a second to-be-joined member and the joining member is to be joined to the to-be-joined member joined to the second to-be-joined member, acquire the position of the to-be-joined portion based on a position of a second to-be-joined portion of the second to-be-joined member that is joined to the to-be-joined member and dimension information about a dimension to the to-be-joined portion from the second to-be-joined portion of the to-be-joined member that is joined to the second to-be-joined member.

The working machine may further include a second sensor to detect attitudes of the machine body and the attachment in a predetermined coordinate system, and a coordinate calculator to calculate a first coordinate set representing coordinates of the position of the joining portion in the predetermined coordinate system based on the recognition result from the first sensor and a detection result from the second sensor. The position acquirer may be configured or programmed to acquire a second coordinate set representing coordinates of the position of the to-be-joined portion in the predetermined coordinate system. The approach-target-position setter may be configured or programmed to set the operation start position to a third coordinate set representing coordinates in the vicinity of the second coordinate set, calculate a relative position of the third coordinate set with respect to the first coordinate set, and set the approach target position based on a position of the attachment detected by the second sensor and based on the relative position.

The working machine may further include a traveling device to support the machine body such that the machine body is allowed to travel, and a swiveling device to swivel the machine body relative to the traveling device. The working device may include a boom including a proximal end portion supported by the machine body such that the boom is rotatable about a first rotation axis, a boom driver to rotate the boom about the first rotation axis, an arm supported by a distal end portion of the boom such that the arm is rotatable about a second rotation axis, an arm driver to rotate the arm about the second rotation axis, and the attachment provided at a distal end portion of the arm. The controller may be configured or programmed to calculate driving amounts by which actuators of the traveling device, the swiveling device, the boom driver, and the arm driver are to be driven to move the attachment to the approach target position, and drive the actuators based on the calculated driving amounts to move the attachment to the approach target position.

The working machine may further include a swing device to horizontally rotate the working device relative to the machine body. The controller may be configured or programmed to calculate driving amounts by which actuators of the traveling device, the swiveling device, the swing device, the boom driver, and the arm driver are to be driven to move the attachment to the approach target position, and drive the actuators based on the calculated driving amounts to move the attachment to the approach target position.

The boom may include a first boom including a proximal end portion supported by the machine body such that the first boom is rotatable about the first rotation axis, a first boom driver to rotate the first boom about the first rotation axis, a second boom supported by a distal end portion of the first boom such that the second boom is rotatable about a third rotation axis, and a second boom driver to rotate the second boom about the third rotation axis. The arm may be supported by a distal end portion of the second boom such that the arm is rotatable about the second rotation axis. The controller may be configured or programmed to calculate driving amounts by which actuators of the traveling device, the swiveling device, the first boom driver, the second boom driver, and the arm driver are to be driven to move the attachment to the approach target position, and drive the actuators based on the calculated driving amounts to move the attachment to the approach target position.

The controller may be configured or programmed to, when the attachment is to be moved to the approach target position, actuate each of a portion of or all of to-be-driven actuators at the same speed or speeds within a predetermined range from start to end of movement of the attachment, the to-be-driven actuators being one or more of the actuators that are to be driven.

The controller may be configured or programmed to, when the attachment is to be moved to the approach target position, set movement speeds of to-be-driven actuators such that movements of a portion of or all of the to-be-driven actuators end at the same time or substantially at the same time, the to-be-driven actuators being one or more of the actuators that are to be driven.

The controller may be configured or programmed to control the working device to reduce a movement speed of the attachment from a preceding position and stop the attachment at the approach target position, the preceding position being a position at which the attachment falls a little short of the approach target position.

The working device may include a boom including a proximal end portion supported by the machine body such that the boom is rotatable about a first rotation axis, an arm supported by a distal end portion of the boom such that the arm is rotatable about a second rotation axis, and the attachment provided at a distal end portion of the arm. The first sensor may be provided in or on one of the boom, the arm, and the attachment. The position acquirer may be provided in or on one of the boom, the arm, and the attachment.

The first sensor may be configured to recognize a position of a joining portion of a joining member that is to be joined to a to-be-joined member, the joining member being the to-be-held object held by the attachment. The working machine may include a target-position setter to set, based on a recognition result from the first sensor, a target position to which the attachment is to be moved such that the joining portion of the joining member is moved to a joining start position at which an operation of joining the joining portion to the to-be-joined member is to be started, and a controller to control the working device such that the attachment moves to the target position set by the target-position setter.

A working machine according to an example embodiment of the present invention includes a machine body, a working device provided on the machine body, an attachment provided on the working device to hold a joining member, a first sensor to recognize a position of a joining portion of the joining member held by the attachment, the joining portion being a portion to be joined to a to-be-joined member, a target-position setter to set, based on a recognition result from the first sensor, a target position to which the attachment is to be moved such that the joining portion of the joining member is moved to a joining start position at which an operation of joining the joining portion to the to-be-joined member is to be started, and a controller to control the working device such that the attachment moves to the target position set by the target-position setter.

The working machine may further include a position acquirer to acquire a position of a to-be-joined portion of the to-be-joined member, the to-be-joined portion being a portion to which the joining portion is to be joined. The target-position setter may be configured or programmed to set the joining start position based on the position of the to-be-joined portion acquired by the position acquirer.

The working machine may further include a second sensor to detect attitudes of the machine body and the attachment in a predetermined coordinate system, and a coordinate calculator to calculate a first coordinate set representing coordinates of the position of the joining portion in the predetermined coordinate system based on the recognition result from the first sensor and based on a detection result from the second sensor. The position acquirer may be configured or programmed to acquire a second coordinate set representing coordinates of the position of the to-be-joined portion in the predetermined coordinate system. The target-position setter may be configured or programmed to set a joining-start-position coordinate set representing coordinates of the joining start position in the predetermined coordinate system based on the second coordinate set, calculate a relative position of the joining-start-position coordinate set with respect to the first coordinate set, and set the target position based on a position of the attachment detected by the second sensor and based on the relative position.

The working device may include a boom including a proximal end portion supported by the machine body such that the boom is rotatable, an arm supported by a distal end portion of the boom such that the arm is rotatable, and the attachment provided at a distal end portion of the arm. The controller may be configured or programmed to, when the attachment is to be moved to the target position, actuate the boom and the arm at the same speed or speeds within a predetermined range from start to end of movement of the attachment.

The working device may include a boom including a proximal end portion supported by the machine body such that the boom is rotatable, an arm supported by a distal end portion of the boom such that the arm is rotatable, and the attachment provided at a distal end portion of the arm. The controller may be configured or programmed to, when the attachment is to be moved to the target position, set movement speeds of the boom and the arm such that movements of the boom and the arm end at the same time or substantially at the same time.

The target-position setter may be configured or programmed to set an upper target position vertically above or substantially vertically above the target position. The controller may be configured or programmed to move the attachment to the upper target position and then vertically or substantially vertically lowers the attachment from the upper target position to the target position.

The controller may be configured or programmed to gradually reduce a movement speed of the attachment from a preceding position and stop the attachment at the target position, the preceding position being a position at which the attachment falls a little short of the target position.

The controller may be configured or programmed to, when the joining portion is located at an overshoot position which is closer to the to-be-joined portion than the joining start position, control the working device to move the joining portion in a direction returning from the overshoot position to the joining start position or stop the joining portion at the overshoot position.

The target-position setter may be configured or programmed to set a preliminary target position at a position at a predetermined distance from the target position. The controller may be configured or programmed to move the attachment to the preliminary target position and then move the attachment from the preliminary target position to the target position.

The working device may include a boom including a proximal end portion supported by the machine body such that the boom is rotatable, an arm supported by a distal end portion of the boom such that the arm is rotatable, and the attachment provided at a distal end portion of the arm. The first sensor may be provided in or on one of the boom, the arm, and the attachment. The position acquirer may be provided in or on one of the boom, the arm, and the attachment.

The to-be-joined member may be in a groove located lower than a ground surface. The controller may be configured or programmed to cause the attachment to hold the joining member located higher than the ground surface and move the joining member to the joining start position in the groove.

The joining member may be an elongated member, and the joining portion is located at one of opposite ends of the joining member in a longitudinal direction such that the joining portion is separated from the attachment when the joining member is held by the attachment.

The controller may be configured or programmed to move the joining portion to the joining start position and then move the attachment in a direction in which the joining portion approaches the to-be-joined portion to fit the joining portion to the to-be-joined portion.

A method of controlling a working machine according to an example embodiment of the present invention is a method of controlling a working machine including a machine body, a working device provided on the machine body, and an attachment provided on the working device to hold an elongated to-be-held object, the method including a position-recognizing step including recognizing a position of one end portion of the to-be-held object, a holding-position-setting step including setting a holding position based on a recognition result obtained in the position-recognizing step, the holding position being a position at which the to-be-held object is to be held by the attachment, and a holding step including holding the to-be-held object based on the holding position set in the holding-position-setting step.

A method of controlling a working machine according to an example embodiment of the resent invention is a method of controlling a working machine including a machine body, a working device provided on the machine body, and an attachment to hold a joining member, the method including a position-recognizing step including recognizing a position of a joining portion of the joining member held by the attachment, the joining portion being a portion to be joined to a to-be-joined member, and a step of setting, based on a recognition result obtained in the position-recognizing step, an approach target position to which the attachment is to be moved such that the joining member is moved to bring the joining portion to an operation start position in the vicinity of the to-be-joined member.

A method of controlling a working machine according to an example embodiment of the present invention is a method of controlling a working machine including a machine body, a working device provided on the machine body, and an attachment to hold a joining member, the method including a position-recognizing step including recognizing a position of a joining portion of the joining member held by the attachment, the joining portion being a portion to be joined to a to-be-joined member, and a target-position-setting step including setting, based on a recognition result obtained in the position-recognizing step, a target position to which the attachment is to be moved such that the joining portion of the joining member is moved to a joining start position at which an operation of joining the joining portion to the to-be-joined member is to be started.

### Advantageous Effects of Invention

According to the above-described working machine, a holding position of a to-be-held object to be held can be appropriately set, and variations in the operation of holding the to-be-held object can be reduced.

### Brief Description of Drawings

[FIG. 1A] FIG. 1A is a side view of the overall structure of a working machine.
[FIG. 1B] FIG. 1B is a plan view of the working machine in which a portion of a working device is omitted.
[FIG. 2A] FIG. 2A is a schematic diagram of a hydraulic system and a control system of the working machine.
[FIG. 2B] FIG. 2B is an electrical block diagram of a working machine according to a first embodiment.
[FIG. 2C] FIG. 2C illustrates an example of a display.
[FIG. 3A] FIG. 3A illustrates a pipe-joining attachment viewed from one side in a width direction.
[FIG. 3B] FIG. 3B is a plan view of the pipe-joining attachment.
[FIG. 3C] FIG. 3C illustrates the pipe-joining attachment viewed from one side in an axial direction.
[FIG. 4A] FIG. 4A illustrates various coordinate systems and an operation of holding and joining a pipe using the pipe-joining attachment.
[FIG. 4B] FIG. 4B illustrates the pipe joined to a to-be-joined pipe.
[FIG. 4C] FIG. 4C illustrates the pipe-joining attachment positioned at a pre-holding position.
[FIG. 4D] FIG. 4D illustrates an adjustment of the orientation of a holder at the pre-holding position.
[FIG. 5A] FIG. 5A is a flowchart of an example of an automatic holding-and-joining process of the pipe-joining attachment performed by the working machine.
[FIG. 5B] FIG. 5B is a flowchart of an example of pipe holding control.
[FIG. 5C] FIG. 5C is a flowchart of an example of control of movement to a holding position.
[FIG. 5D] FIG. 5D is a flowchart of an example of operation-start-position control for the held pipe.
[FIG. 5E] FIG. 5E is a flowchart of an example of speed control for each member at the front.
[FIG. 5F] FIG. 5F is a flowchart of an example of joining-start-position control for the held pipe.
[FIG. 5G] FIG. 5G is a flowchart of an example of speed control for each member at the front.
[FIG. 6A] FIG. 6A illustrates the manner in which the pipe held by the pipe-joining attachment is moved from an operation start position to a joining start position.
[FIG. 6B] FIG. 6B illustrates the manner in which the pipe held by the pipe-joining attachment is positioned at the joining start position.
[FIG. 6C] FIG. 6C illustrates the manner in which the pipe held by the pipe-joining attachment is joined to the to-be-joined pipe.
[FIG. 7A] FIG. 7A is an electrical block diagram of a working machine according to a second embodiment.
[FIG. 7B] FIG. 7B is a flowchart of an example of an operation-limiting process for when a pipe is held according to the second embodiment.
[FIG. 8A] FIG. 8A illustrates an example of a storage table.
[FIG. 8B] FIG. 8B illustrates an example of a storage table.
[FIG. 8C] FIG. 8C illustrates an example of a storage table.
[FIG. 8D] FIG. 8D illustrates an example of a storage table.
[FIG. 8E] FIG. 8E illustrates an example of a storage table.
[FIG. 8F] FIG. 8F illustrates an example of a storage table.
[FIG. 9A] FIG. 9A is an electrical block diagram of a working machine according to a third embodiment.
[FIG. 9B] FIG. 9B is a flowchart of an example of a peripheral monitoring process for when the pipe is held according to the third embodiment.
[FIG. 10] FIG. 10 is a flowchart of an example of a position detection process for the pipe.
[FIG. 11] FIG. 11 is a flowchart of an example of a target detection process for a target around the pipe.
[FIG. 12] FIG. 12 illustrates a permitted area set around a working machine based on the relative position between the held pipe and the target around the pipe.
[FIG. 13] FIG. 13 illustrates an example of relative position information displayed on a display.

### Description of Embodiments

Embodiments of the present invention will be described with reference to the drawings.

### First Embodiment

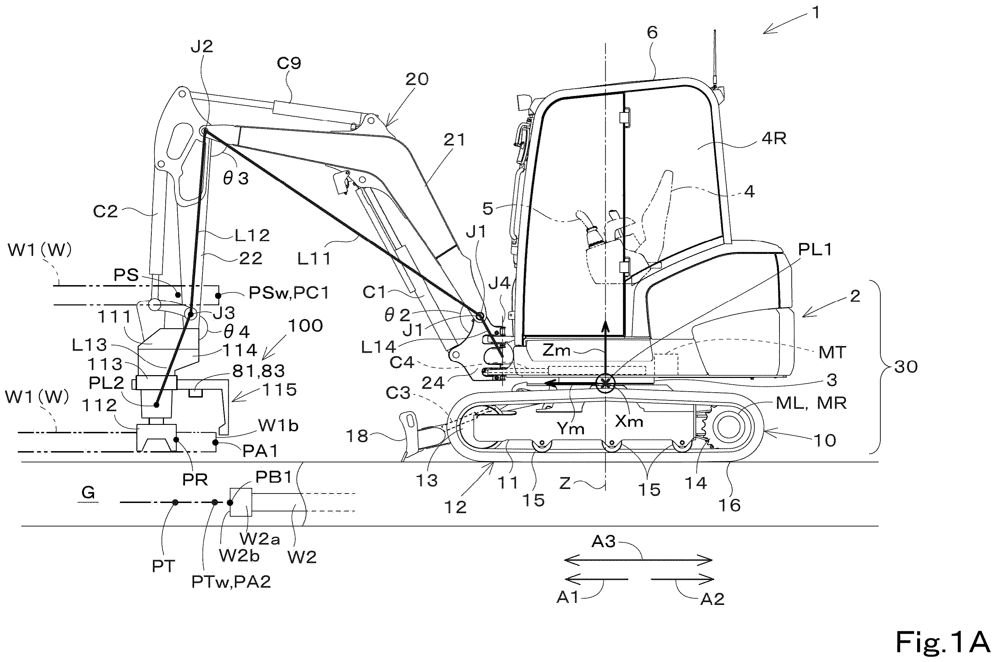

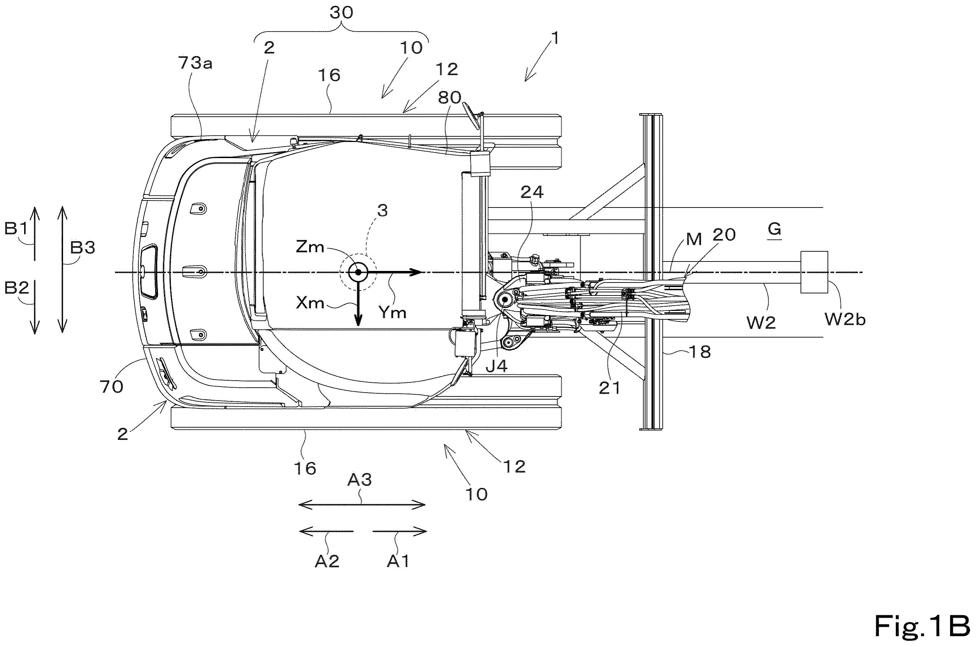

The overall structure of a working machine 1 will be described. FIG. 1A is a side view of the overall structure of the working machine. FIG. 1B is a plan view of the working machine in which a portion of a working device is omitted.

### Regarding overall structure of working machine 1

The working machine 1 according to a first embodiment is a backhoe with a pipe-joining attachment 100 attached instead of a bucket. The working machine 1 includes a main body 30 capable of traveling and a working device 20 provided on the main body 30. The main body 30 includes a machine body (swivel base) 2 and a traveling device 10 that enables the machine body (swivel base) 2 to travel. An operator's seat 4 for an operator to sit on and a protection mechanism 6 that protects the operator's seat 4 from the front, rear, left, right, and above are provided on the machine body 2.

The protection mechanism 6 is also referred to as a cabin. The protection mechanism 6 includes a frame attached to the machine body 2, a roof attached to the top of the frame, and a plurality of side walls attached to the front, rear, left, and right of the frame (details not illustrated). Each side wall has a transparent portion (window) that allows visual observation of the peripheral area from the operator's seat 4. The protection mechanism 6 partitions the space around the operator's seat 4 off from the outside. In other words, the protection mechanism 6 defines an operator's cabin 4R including the operator's seat 4. The protection mechanism 6 is not limited to a cabin and may be, for example, a canopy.

A manual operator 5 for operating the working machine 1 is provided around the operator's seat 4 in the protection mechanism 6 (operator's cabin 4R). The operator can operate the manual operator 5 while sitting on the operator's seat 4.

**In** the present embodiment, the direction in which the operator (operator) on the operator's seat 4 faces (direction of arrow A1 in FIGS. 1A and 1B) is referred to as front, the direction opposite thereto (direction of arrow A2 in FIGS. 1A and 1B and other figures) as rear, the left of the operator (near side in FIG. 1A, direction of arrow B1 in FIG. 1B) as left, and the right of the operator (far side in FIG. 1A, direction of arrow B2 in FIG. 1B) as right. The horizontal direction perpendicular to a front-rear direction A3 is referred to as a width direction B3 (see FIG. 1B). The rightward or leftward direction relative to the center of the machine body 2 in the width direction B3 is referred to as an outward width direction.

The traveling device 10 is a device that enables the machine body 2 to travel, and includes a traveling frame 11 and at least one traveling mechanism 12. The traveling frame (track frame) 11 is a structural body around which the traveling mechanism 12 is attached and above which the machine body 2 is supported.

The traveling mechanism 12 is, for example, a crawler traveling mechanism. The traveling mechanism 12 is provided on each of left and right sides of the traveling frame 11. Each traveling mechanism 12 includes an idler 13, a driving wheel 14, a plurality of rolling wheels 15, an endless crawler belt 16, and traveling motors (a left traveling motor ML and a right traveling motor MR).

The idler 13 is located at the front of the traveling frame 11. The driving wheel 14 is located at the rear of the traveling frame 11. The rolling wheels 15 are located between the idler 13 and the driving wheel 14. The crawler belt 16 is wrapped around the idler 13, the driving wheel 14, and the rolling wheels 15.

The left traveling motor ML is included in the traveling mechanism 12 on the left of the traveling frame 11. The right traveling motor MR is included in the traveling mechanism 12 on the right of the traveling frame 11. The left traveling motor ML and the right traveling motor MR include hydraulic motors. The driving wheels 14 of the traveling mechanisms 12 are powered and rotationally driven by the left traveling motor ML and the right traveling motor MR to rotate the crawler belts 16 in a circumferential direction.

A dozer 18 is mounted on a front portion of the traveling device 10. The dozer 18 swings upward and downward in response to extension and retraction of a dozer cylinder C3. The dozer cylinder C3 is attached to the traveling frame 11. The dozer cylinder C3 includes a hydraulic cylinder.

The machine body 2 is supported above the traveling frame 11 with a swivel bearing 3 provided therebetween such that the machine body 2 is capable of swiveling about an axis Zm (axis extending in an up-down direction: Z-axis). A swivel motor MT includes a hydraulic motor (hydraulic actuator included in a hydraulic device). The machine body 2 is powered by the swivel motor MT and swivels about the axis Zm.

The working device 20 is provided on the machine body 2. For example, the working device 20 is supported by a front portion of the machine body 2. The working device 20 includes a boom 21, an arm 22, a pipe-joining attachment 100 (hereinafter referred to as an attachment 100 as appropriate), and hydraulic actuators (a boom cylinder C1, an attachment swing cylinder C2, a dozer cylinder C3, a swing cylinder C4, and an arm cylinder C9). A proximal end portion of the boom 21 is attached to a swing bracket 24 such that the boom 21 is rotatable about a first rotation axis J1 (axis extending in the width direction of the machine body 2). Therefore, the boom 21 is swingable in the up-down direction (vertical direction). The arm 22 is attached to a distal end portion of the boom 21 such that the arm 22 is rotatable about a second rotation axis J2 (axis extending in the width direction of the boom 21) parallel to the first rotation axis J1. Therefore, the arm 22 is swingable in the front-rear direction or the up-down direction.

The attachment 100 is provided on a distal end portion of the arm 22 instead of a bucket (working tool) such that the attachment 100 is capable of swinging. As illustrated in FIG. 1A, the attachment 100 is a working tool to hold (grip) a joining member (for example, a pipe W1), which is an example of a to-be-held object W, and joining the held pipe W1 to a to-be-joined member (for example, a to-be-joined pipe W2) located in a target region (for example, a groove G). The groove G is a groove (underground groove) located lower than the ground surface and may be, for example, a flat-bottom groove formed by excavating the ground. The target region is not necessarily a groove, and may be, for example, a base having an upper surface on which the to-be-joined pipe W2 is located and including at least a portion formed above the ground surface (for example, a concrete base exposed on the ground or a steel base in the field). As illustrated in FIG. 1A, the attachment 100 includes an arm connector 111, a holder 112, an axial movement mechanism 113, a horizontal rotation mechanism 114, and a joining functional unit 115 (joining-target-pipe contact unit). The attachment 100 will be described in detail below.

A bucket or other working tools (hydraulic attachments) drivable by a hydraulic actuator may be attached to the working machine 1 instead of the attachment 100. Examples of the other working tools include a hydraulic breaker, a hydraulic crusher, an angle broom, an earth auger, a pallet fork, a sweeper, a mower, and a snow blower.

The swing bracket 24 swings left and right by rotating about a fourth rotation axis J4 (axis extending in the up-down direction of the machine body 2) in response to extension and retraction of the swing cylinder C4 provided in the machine body 2. The boom 21 swings up and down (forward and rearward) in response to extension and retraction of the boom cylinder C1. The arm 22 swings up and down (forward and rearward) in response to extension and retraction of the arm cylinder C9. The attachment 100 swings up and down (forward and rearward) in response to extension and retraction of the attachment swing cylinder C2. The attachment swing cylinder C2 is referred to as a bucket cylinder when a bucket is attached to the distal end of the arm 22. The swing cylinder C4, the boom cylinder C1, the arm cylinder C9, and the attachment swing cylinder C2 include hydraulic cylinders.

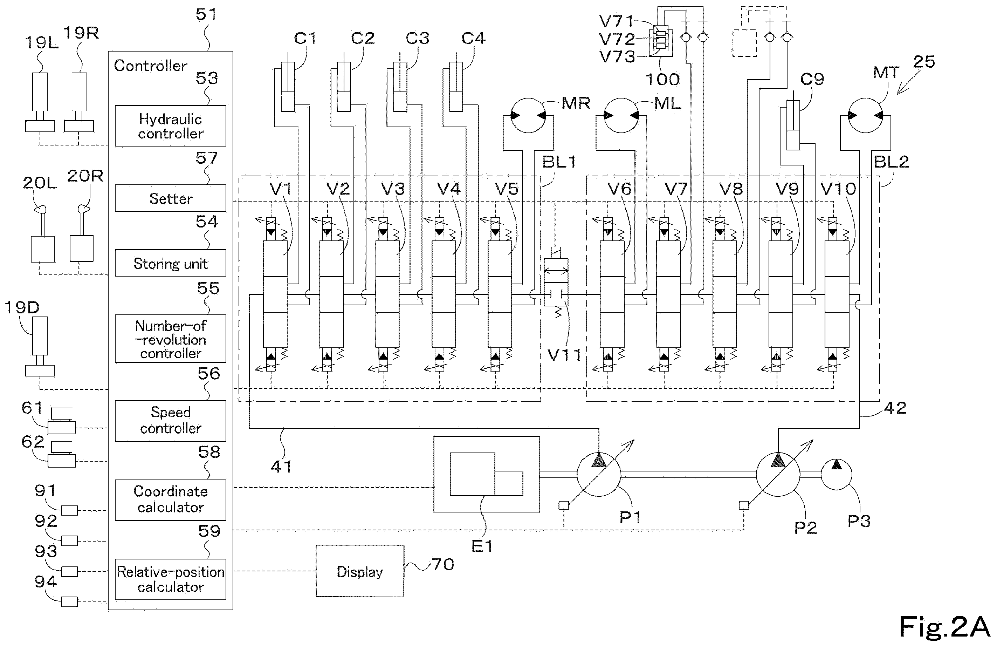

Regarding structure of hydraulic system and control system of working machine 1 FIG. 2A is a schematic diagram of a hydraulic system and a control system of the working machine. The hydraulic system of the working machine 1 includes a first hydraulic pump P1, a second hydraulic pump P2, a third hydraulic pump P3, and a plurality of control valves V1 to V10. The first hydraulic pump P1 and the second hydraulic pump P2 are variable displacement hydraulic pumps. The third hydraulic pump P3 is a fixed displacement hydraulic pump. The first hydraulic pump P1, the second hydraulic pump P2, and the third hydraulic pump P3 are powered by a prime mover E1 and driven to deliver hydraulic fluid stored in a hydraulic fluid tank. In this embodiment, the hydraulic system of the working machine 1 includes three hydraulic pumps (the first hydraulic pump P1, the second hydraulic pump P2, and the third hydraulic pump P3). However, the number of hydraulic pumps is not limited.

The control valves V1 to V10 are valves (solenoid control valves) that control the flow rates of hydraulic fluid supplied to respective hydraulic actuators (working hydraulic actuators and traveling hydraulic actuators). The control valves V1 to V10 are solenoid-type three-position switching valves in which the position of a spool is switched by the hydraulic fluid (pilot fluid) supplied from the third hydraulic pump P3. In other words, each of the control valves V1 to V10 includes a solenoid valve and is capable of changing the position of the spool in response to a change in the pressure of the pilot fluid on the spool in accordance with an opening of the solenoid valve. Although the solenoid valve is installed in each solenoid-type three-position switching valve in this embodiment, the solenoid valve may be provided as a separate component. Also, the control valves V1 to V10 are not limited to three-position switching valves, and may be, for example, two-position switching valves or four-position switching valves.

A boom control valve V1 controls the boom cylinder C1. A swing control valve V2 (= bucket control valve) controls the attachment swing cylinder C2 (= bucket cylinder). A dozer control valve V3 controls the dozer cylinder C3. A swing control valve V4 controls the swing cylinder C4. A right travel control valve V5 controls a traveling hydraulic actuator (right traveling motor MR) of a first traveling device 10R. A left travel control valve V6 controls a traveling hydraulic actuator (left traveling motor ML) of a second traveling device 10L. A first auxiliary control valve V7 controls an auxiliary actuator. In FIG. 2A, the first auxiliary control valve V7 controls the flow rate of the hydraulic fluid supplied to the attachment 100 serving as the auxiliary actuator (that is, a pipe-joining hydraulic actuator). A second auxiliary control valve V8 controls an auxiliary actuator. An arm control valve V9 controls the arm cylinder C9. A swivel control valve V10 controls the swivel motor MT.

The boom control valve V1, the swing control valve V2, the dozer control valve V3, the swing control valve V4, and the right travel control valve V5 are connected to a first fluid delivery passage 41 connected to the first hydraulic pump P1. The left travel control valve V6, the first auxiliary control valve V7, the second auxiliary control valve V8, the arm control valve V9, and the swivel control valve V10 are connected to a second fluid delivery passage 42 connected to the second hydraulic pump P2.

For convenience of description, the group including the boom control valve V1, the swing control valve V2, the dozer control valve V3, the swing control valve V4, and the right travel control valve V5 may be hereinafter referred to as a first block BL1, and the group including the left travel control valve V6, the first auxiliary control valve V7, the second auxiliary control valve V8, the arm control valve V9, and the swivel control valve V10 may be hereinafter referred to as a second block BL2.

A communicating valve V11 is provided between the first block BL1 and the second block BL2. The communicating valve V11 is a switching valve that switches between a first position and a second position, and is connected to the first fluid delivery passage 41 and the second fluid delivery passage 42. When the communicating valve V11 is in the first position, the first fluid delivery passage 41 and the second fluid delivery passage 42 communicate through the communicating valve V11. When the communicating valve V11 is in the second position, the communication between the first fluid delivery passage 41 and the second fluid delivery passage 42 is blocked by the communicating valve V11. The communicating valve V11 is not limited to a two-position switching valve, and may be, for example, a three-position switching valve or a four-position switching valve. The hydraulic system of the working machine 1 may be structured such that no communicating valve V11 is provided.

The working machine 1 includes a swiveling device 25 (see FIG. 2A). The swiveling device 25 includes the swivel bearing 3, the swivel motor MT, and hydraulic pumps (the first hydraulic pump P1 and the second hydraulic pump P2).

As illustrated in FIG. 2A, the attachment 100 includes a first control valve V71, a second control valve V72, and a third control valve V73 to which the hydraulic fluid from the first auxiliary control valve V7 is supplied after being divided into three streams. The first control valve V71 is a solenoid control valve for controlling the open/closed state of the holder 112. The second control valve V72 is a solenoid control valve for controlling the axial movement mechanism 113. The third control valve V73 is a solenoid control valve for controlling the horizontal rotation mechanism 114.

### Structure of control system of working machine 1

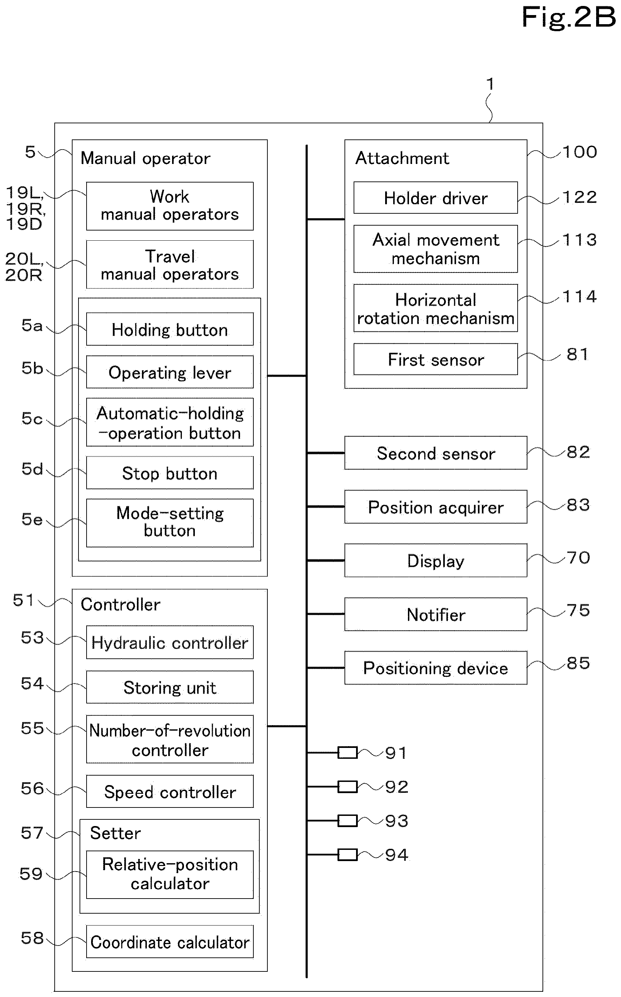

The structure of the control system of the working machine 1 will now be described with reference to FIGS. 2A and 2B. FIG. 2B is an electrical block diagram of the working machine.

As illustrated in FIGS. 2A and 2B, the control system of the working machine 1 includes a controller 51. The controller 51 includes a hydraulic controller 53 that controls the hydraulic system. The hydraulic controller 53 is a work controller that controls the hydraulic system of the working device 20 and the traveling device 10. The hydraulic controller 53 includes a CPU (processor) provided in the controller 51, an electronic/electrical circuit, and a program. The hydraulic controller 53 controls hydraulic devices provided in the working machine 1, such as the control valves V1 to V10, the communicating valve V11, and the hydraulic pumps (the first hydraulic pump P1 and the second hydraulic pump P2). The hydraulic controller 53 may be any unit that controls the hydraulic devices, and control targets are not limited to those in this embodiment.

The manual operator 5 is connected to the controller 51. The manual operator 5 includes work manual operators (a work manual operator 19L, a work manual operator 19R, and a work manual operator 19D) and travel manual operators (a travel manual operator 20L and a travel manual operator 20R).

The work manual operators (the work manual operator 19L, the work manual operator 19R, and the work manual operator 19D) are connected to the controller 51. The work manual operator 19L is positioned to be operable by the left hand of the operator (operator), and the work manual operator 19R is positioned to be operable by the right hand of the operator. The work manual operator 19D is positioned on the right side of the operator's seat 4 to be operable by the right hand of the operator separately from the work manual operator 19R. The work manual operator 19L and the work manual operator 19R are levers including potentiometers (detectors) that detect amounts of pivoting (amounts of operation), and are tiltable forward, rearward, leftward, and rightward. The work manual operator 19D is a lever including a potentiometer (detector) that detects an amount of pivoting (amount of operation), and is pivotable forward and rearward.

When the operator operates the work manual operator 19L, the potentiometer detects the amount and direction of the operation performed on the work manual operator 19L, and the detected amount and direction of the operation are input to the controller 51. Based on the amount and direction of the operation performed on the work manual operator 19L, the hydraulic controller 53 energizes a solenoid included in a swivel solenoid valve of the swivel control valve V10 to control the opening of the swivel solenoid valve, or energizes a solenoid included in an arm solenoid valve of the arm control valve V9 to control the opening of the arm solenoid valve. As a result, a pilot pressure is applied to a pressure receiver of the swivel control valve V10 to switch the position of the swivel control valve V10, so that the rotation direction of the swivel motor MT is switched in accordance with the position of the swivel control valve V10. Alternatively, a pilot pressure is applied to a pressure receiver of the arm control valve V9 to switch the position of the arm control valve V9, so that the arm cylinder C9 extends or contracts in accordance with the position of the arm control valve V9.

When the operator operates the work manual operator 19R, the potentiometer detects the amount and direction of the operation performed on the work manual operator 19R, and the detected amount and direction of the operation are input to the controller 51. The hydraulic controller 53 energizes a solenoid included in a boom solenoid valve of the boom control valve V1 to control the opening of the boom solenoid valve based on the amount and direction of the operation performed on the work manual operator 19R. Alternatively, the hydraulic controller 53 energizes a solenoid included in a solenoid valve of the swing control valve V2 (referred to as a bucket solenoid valve when the bucket is attached) to control the opening of the solenoid valve (bucket solenoid valve) based on the amount and direction of the operation performed on the work manual operator 19R. As a result, a pilot pressure is applied to a pressure receiver of the boom control valve V1 to switch the position of the boom control valve V1, so that the boom cylinder C1 extends or contracts in accordance with the position of the boom control valve V1. Alternatively, a pilot pressure is applied to a pressure receiver of the swing control valve V2 to switch the position of the swing control valve V2, so that the attachment swing cylinder C2 extends or contracts in accordance with the position of the swing control valve V2.

When the operator operates the work manual operator 19D, the potentiometer detects the amount and direction of the operation performed on the work manual operator 19D, and the detected amount and direction of the operation are input to the controller 51. The hydraulic controller 53 energizes a solenoid included in a dozer solenoid valve of the dozer control valve V3 to control the opening of the dozer solenoid valve based on the amount and direction of the operation performed on the work manual operator 19D. As a result, a pilot pressure is applied to a pressure receiver of the dozer control valve V3 to switch the position of the dozer control valve V3, so that the dozer cylinder C3 extends or contracts in accordance with the position of the dozer control valve V3.

As described above, the work manual operators (the work manual operator 19L, the work manual operator 19R, and the work manual operator 19D) may be operated to operate the machine body 2, the boom 21, the arm 22, the attachment 100 (only swinging), and the dozer 18.

The travel manual operators (the travel manual operator 20L and the travel manual operator 20R) are connected to the controller 51. The travel manual operator 20L and the travel manual operator 20R are located in front of the operator's seat 4. The travel manual operator 20L and the travel manual operator 20R are levers including potentiometers (detectors) that detect amounts of pivoting (amounts of operation), and are pivotable forward and rearward. The travel manual operator 20L and the travel manual operator 20R are not limited to levers, and may be, for example, pedals.

When the operator operates the travel manual operator 20L and the travel manual operator 20R, the potentiometers detect the amounts and directions of the operations performed on the travel manual operator 20L and the travel manual operator 20R, and the detected amounts and directions of the operations are input to the controller 51. The hydraulic controller 53 energizes a solenoid included in a left travel solenoid valve of the left travel control valve V6 based on the amount and direction of the operation performed on the travel manual operator 20L and energizes a solenoid included in a right travel solenoid valve of the right travel control valve V5 based on the amount and direction of the operation performed on the travel manual operator 20R. As a result, a pilot pressure is applied to pressure receivers of the right travel control valve V5 and the left travel control valve V6 to switch each of the right travel control valve V5 and the left travel control valve V6, so that the rotation directions of the right traveling motor MR and the left traveling motor ML are determined.

As described above, when the work manual operators (the work manual operator 19L, the work manual operator 19R, and the work manual operator 19D) and the travel manual operators (the travel manual operator 20L and the travel manual operator 20R) are operated, the controller 51 outputs control signals for energizing and deenergizing the solenoids to control the machine body 2, the boom 21, the arm 22, the attachment 100, the dozer 18, the first traveling device 10R, and the second traveling device 10L.

### Regarding pipe-joining attachment 100

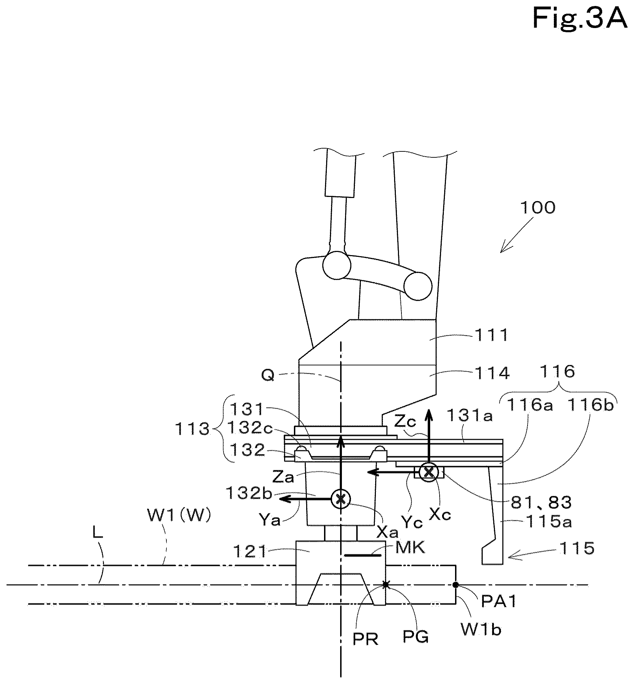

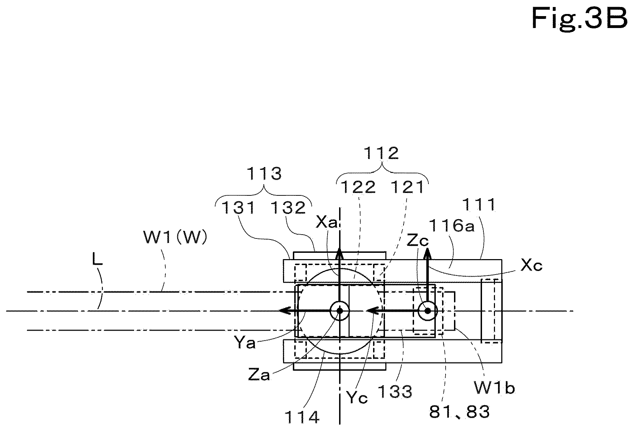

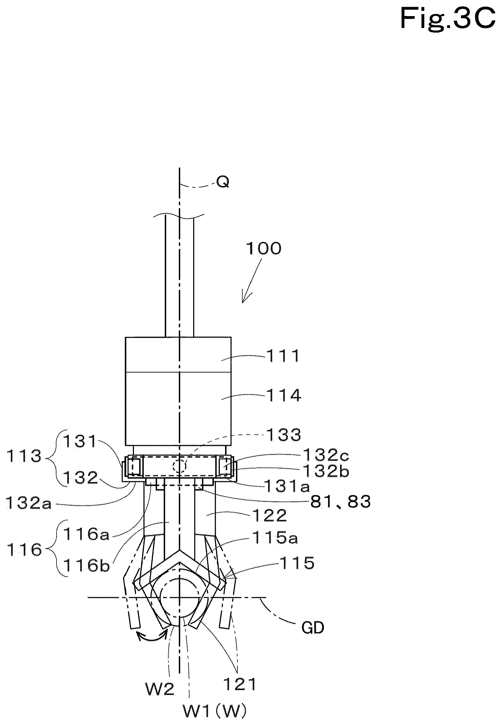

The attachment 100 will be described with reference to FIGS. 3A to 3C. FIG. 3A illustrates the pipe-joining attachment viewed from one side in the width direction. FIG. 3B is a plan view of the pipe-joining attachment. FIG. 3C illustrates the pipe-joining attachment viewed from one side in an axial direction.

The pipe W1 and the to-be-joined pipe W2 are, for example, earthquake-resistant pipes having earthquake-resistant joints bendable at a predetermined angle. The pipe W1 and the to-be-joined pipe W2 may be pipes other than earthquake-resistant pipes.

As illustrated in FIGS. 3A to 3C, the attachment 100 is capable of holding the pipe W1, and is also capable of horizontally rotating the held pipe W1 about a rotation axis Q extending in the up-down direction and moving the pipe W1 in an axial direction of the pipe W1. The attachment 100 includes the arm connector 111, the holder 112, the axial movement mechanism 113, the horizontal rotation mechanism 114, and the joining functional unit 115.

The arm connector 111 is at the upper end of the attachment 100 and is connected to the other end of the arm 22 of the working machine 1. The arm connector 111 may be connected to the other end of the arm 22 with a bolt or a pin, or be fitted to the other end of the arm 22 with a fitter. The arm connector 111 may be connected to the other end of the arm 22 by any structure.

The holder 112 is supported by the axial movement mechanism 113 such that the holder 112 is movable in the axial direction. The holder 112 holds the pipe W1. The holder 112 includes at least one pair of holding claws 121 and a holder driver 122.

The pair of holding claws 121 are arranged in the width direction perpendicular to the axial direction to be capable of holding the pipe W1. Proximal ends of the pair of holding claws 121 are connected to the holder driver 122. The pair of holding claws 121 are rotatable about the proximal ends relative to the holder driver 122 such that distal ends thereof move toward and away from each other. The pair of holding claws 121 clamp the pipe W1 in the width direction.

**In** the present embodiment, the holder 112 includes two pairs of holding claws 121. The two pairs of holding claws 121 are arranged in the axial direction of the pipe W1 relative to the holder driver 122.

The holder driver 122 applies driving force to the proximal ends of each pair of holding claws 121 to rotate the pair of holding claws 121 about the proximal ends such that the distal ends of the pair of holding claws 121 move toward and away from each other. The holder driver 122 generates the driving force using, for example, the hydraulic pressure output from the first auxiliary control valve V7 of the working machine 1 through the first control valve V71. However, the driving force may be generated by an electric motor or the like.

The axial movement mechanism 113 is supported by the horizontal rotation mechanism 114 such that the axial movement mechanism 113 is horizontally rotatable about the rotation axis Q. The axial movement mechanism 113 moves the holder 112 in the axial direction of the pipe W1 held by the holder 112. The axial movement mechanism 113 includes a guide 131, a slider 132, and an axial driver 133.

The guide 131 is connected to the horizontal rotation mechanism 114 such that the guide 131 is horizontally rotatable about the rotation axis Q. The guide 131 includes, for example, a pair of guide rails 131a extending along an axis L of the pipe W1. More specifically, the pair of guide rails 131a extend in the axial direction. Therefore, in the present embodiment, a longitudinal direction of the pair of guide rails 131a coincides with the axial direction. When viewed in the axial direction, the guide rails 131a are H-beams having flanges projecting in the width direction at the top and bottom. The guide rails 131a may be members other than H-beams.

The slider 132 is provided on the guide 131 such that the slider 132 is movable in the longitudinal direction of the guide 131, that is, in the axial direction. The slider 132 is substantially U-shaped in cross-section and covers the lower and side surfaces of the pair of guide rails 131a of the guide 131. More specifically, the slider 132 includes a bottom surface 132a and a pair of side surfaces 132b extending upward from the bottom surface 132a. The pair of side surfaces 132b of the slider 132 support rollers 132c in a rotatable manner. The rollers 132c roll along the flanges of the pair of guide rails 131a.

The axial driver 133 is capable of moving the slider 132 relative to the guide 131 in the longitudinal direction of the guide 131, that is, in the axial direction. The axial driver 133 is, for example, a hydraulic cylinder. The hydraulic cylinder receives, for example, the hydraulic pressure output from the first auxiliary control valve V7 of the working machine 1 through the second control valve V72. Although not illustrated, the hydraulic cylinder includes a cylinder tube fixed to the guide 131 by a support 116 that supports the joining functional unit 115. The hydraulic cylinder includes a piston rod fixed to the slider 132. The hydraulic cylinder extends in the longitudinal direction of the guide 131, that is, in the axial direction. Thus, the slider 132 can be moved relative to the guide 131 by moving the piston rod of the hydraulic cylinder relative to the cylinder tube in the axial direction.

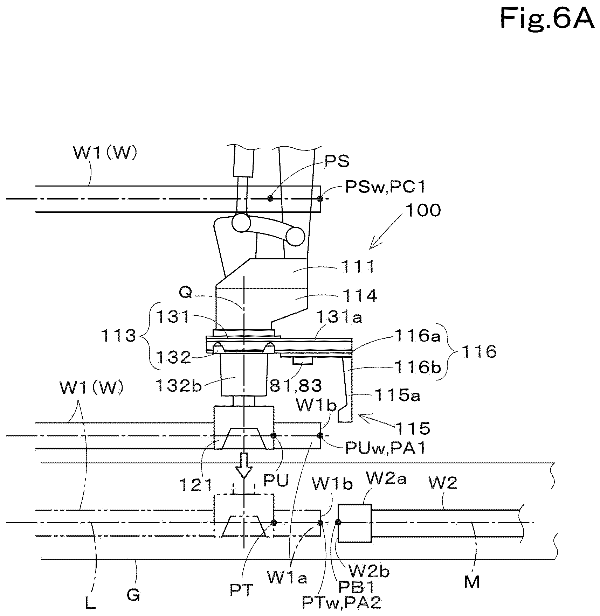

Thus, the pipe W1 held by the holder 112 of the attachment 100 can be moved in the axial direction. Therefore, the attachment 100 is capable of easily positioning a spigot W1a of the pipe W1 relative to a socket W2a (see FIGS. 6A to 6C) of the to-be-joined pipe W2 and easily inserting the spigot W1a of the pipe W1 into the socket W2a of the to-be-joined pipe W2.

The horizontal rotation mechanism 114 is connected to the arm 22 of the working machine 1 by the arm connector 111. In other words, the arm connector 111 is fixed to the top of the horizontal rotation mechanism 114. The axial driver 133 is connected to the bottom of the horizontal rotation mechanism 114 such that the axial driver 133 is horizontally rotatable about the rotation axis Q. The horizontal rotation mechanism 114 generates driving force for horizontally rotating the axial driver 133 about the rotation axis Q using, for example, the hydraulic pressure output from the first auxiliary control valve V7 of the working machine 1 through the third control valve V73.

Thus, the horizontal rotation mechanism 114 is capable of horizontally rotating the attachment 100 about the rotation axis Q relative to the arm 22 of the working machine 1. Therefore, the pipe W1 held by the holder 112 of the attachment 100 can be moved into the underground groove G or the like without moving or swiveling the working machine 1.

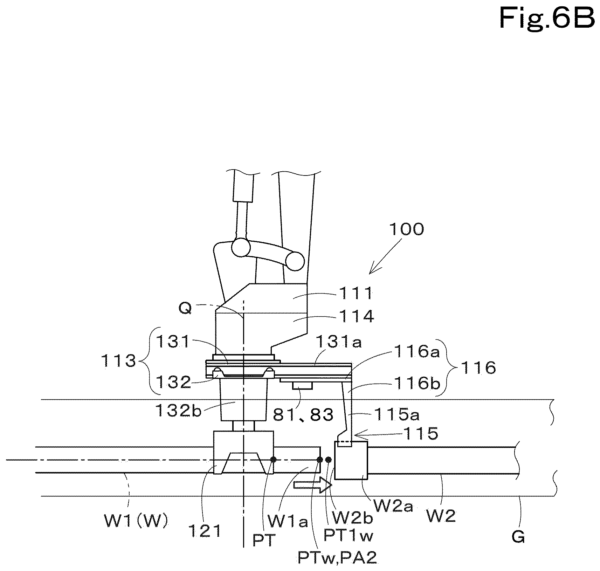

The joining functional unit 115 is fixed to the axial movement mechanism 113 by the support 116 such that the joining functional unit 115 is in the axial direction of the spigot W1a of the pipe W1 relative to the holder 112. As illustrated in FIG. 6B described below, the joining functional unit 115 is brought into contact with the socket W2a of the to-be-joined pipe W2 when the spigot W1a of the pipe W1 held by the holder 112 is positioned relative to the socket W2a of the to-be-joined pipe W2.

The support 116 is, for example, fixed to the guide 131 of the axial movement mechanism 113. The support 116 includes a support body 116a and a connection support 116b. The support body 116a is flat-plate-shaped and fixed to the guide 131 of the axial movement mechanism 113. The connection support 116b extends downward from the support body 116a. The connection support 116b supports the joining functional unit 115.

When viewed in the axial direction, the joining functional unit 115 includes straight portions 115a having an interval therebetween increasing downward to form an inverted V shape. More specifically, the joining functional unit 115 includes a pair of straight portions 115a having upper ends connected to each other and lower ends spaced from each other in the width direction. The upper ends of the pair of straight portions 115a are fixed to a lower end portion of the connection support 116b of the support 116. Since the joining functional unit 115 is structured as described above, even when the socket W2a of the to-be-joined pipe W2 has a different outer diameter, the straight portions 115a of the joining functional unit 115 can be brought into contact with the outer peripheral surface of the socket W2a of the to-be-joined pipe W2.

When the socket W2a of the to-be-joined pipe W2 is viewed in the axial direction, the pair of straight portions 115a of the joining functional unit 115 come into contact with portions of the outer peripheral surface of the socket W2a of the to-be-joined pipe W2 that are in directions at an angle relative to the width direction (for example, in directions at 45 degrees relative to the width direction). Therefore, the attachment 100 is positioned relative to the socket W2a of the to-be-joined pipe W2 in the width direction and the direction perpendicular to the width direction.

The pair of straight portions 115a of the joining functional unit 115 may come into contact with portions of the outer peripheral surface of the socket W2a of the to-be-joined pipe W2 that are on one or the other side in the width direction, or come into contact with portions of the outer peripheral surface of the socket W2a of the to-be-joined pipe W2 that are in a direction perpendicular to the width direction. More specifically, when the socket W2a is viewed in the axial direction of the to-be-joined pipe W2 (along an axis M), the joining functional unit 115 may come into contact with portions of the outer peripheral surface of the socket W2a of the to-be-joined pipe W2 that are in at least one of the width direction and the direction perpendicular to the width direction. One of the pair of straight portions 115a of the joining functional unit 115 may come into contact with the outer peripheral surface of the socket W2a of the to-be-joined pipe W2.

Since the attachment 100 can be positioned relative to the to-be-joined pipe W2 in the width direction and the direction perpendicular to the width direction as described above, the spigot W1a of the pipe W1 held by the holder 112 of the attachment 100 can be positioned relative to the socket W2a of the to-be-joined pipe W2 in the width direction and the direction perpendicular to the width direction.

### Regarding holding manual operators of manual operator 5

As illustrated in FIG. 2B, the manual operator 5 includes holding manual operators (a holding button 5a, an operating lever 5b, an automatic-holding-operation button 5c, a stop button 5d, and a mode-setting button 5e). The holding manual operators are connected to the controller 51.

The operating lever 5b is positioned on the left side of the operator's seat 4 to be operable by the left hand of the operator separately from the work manual operator 19L. The operating lever 5b includes a potentiometer (detector) that detects an amount of pivoting (amount of operation), and is pivotable forward, rearward, leftward, and rightward.

When the operator operates the operating lever 5b, the potentiometer detects the amount and direction of the operation performed on the operating lever 5b, and the detected amount and direction of the operation are input to the controller 51. The hydraulic controller 53 energizes a solenoid included in a solenoid valve of the second control valve V72 to control the opening of the solenoid valve based on the amount and direction (for example, forward or rearward) of the operation performed on the operating lever 5b. As a result, a pilot pressure is applied to a pressure receiver of the second control valve V72 to switch the position of the second control valve V72, so that the axial movement mechanism 113 moves forward or rearward in accordance with the position of the second control valve V72. The hydraulic controller 53 also energizes a solenoid included in a solenoid valve of the third control valve V73 to control the opening of the solenoid valve based on the amount and direction (for example, leftward or rightward) of the operation performed on the operating lever 5b. As a result, a pilot pressure is applied to a pressure receiver of the third control valve V73 to switch the position of the third control valve V73, so that the rotation direction of the horizontal rotation mechanism 114 is switched to leftward rotation or rightward rotation in accordance with the position of the third control valve V73.

The holding button 5a, the automatic-holding-operation button 5c, and the stop button 5d are press buttons arranged on the top of the operating lever 5b, and are capable of being pressed downward with the thumb of the left hand gripping the operating lever 5b.

Each time the operator presses the holding button 5a, a holding ON signal or a holding OFF signal is input to the controller 51. The hydraulic controller 53 energizes a solenoid included in a solenoid valve of the first control valve V71 to control the opening of the solenoid valve in accordance with the holding ON signal or the holding OFF signal. As a result, a pilot pressure is applied to a pressure receiver of the first control valve V71 to switch the position of the first control valve V71, so that the holder 112 (pair of holding claws 121) is set to a closed state (state in which the pipe W1 is held) or an open state (state in which the pipe W1 is not held) in accordance with the position of the first control valve V71.

The mode-setting button 5e is a dial switch provided on the top of the operating lever 5b, and is operated by the operator to select one of a holding operation mode, a crane mode, and a bucket mode. The controller 51 receives a mode signal indicating the mode selected by the mode-setting button 5e. The holding operation mode is a mode for performing an operation of joining the pipe W1 to the to-be-joined pipe W2 using the attachment 100. The crane mode is a mode in which a lifting operation using a lifting hook included in the working device 20 is enabled. The bucket mode is a mode in which an operation using a bucket is enabled.

When the operator presses the automatic-holding-operation button 5c in the holding operation mode, an automatic operation signal indicating an instruction to perform an automatic holding operation is input from the automatic-holding-operation button 5c to the controller 51. The controller 51 controls the hydraulic controller 53 to perform the automatic holding operation of the attachment 100 based on the automatic operation signal. The automatic holding operation of the attachment 100 is a series of operations including an operation of holding the pipe W1 by the attachment 100 (that is, an operation of moving toward the pipe W1 to be held and holding the pipe W1), an operation of moving the attachment 100 to an approach target position PS (that is, an operation of moving the held pipe W1 to an operation start position PSw), an operation of moving the attachment 100 to a target position PT (that is, an operation of moving the held pipe W1 from the operation start position PSw to a joining start position PTw), and a joining operation of the attachment 100 (that is, an operation of joining the pipe W1 to the to-be-joined pipe W2), which are automatically performed in that order.

When an operation in the holding operation mode is performed, the first auxiliary control valve V7 is set to an open state. For example, the controller 51 may set the first auxiliary control valve V7 to the open state when the holding operation mode is selected, or the operator may operate a pedal or a slider (not illustrated) provided on the work manual operator 19 to open the first auxiliary control valve V7.

When the operator presses the stop button 5d during the automatic holding operation of the attachment 100, a stop signal is input from the stop button 5d to the controller 51. In response to the stop signal, the controller 51 stops the automatic holding operation of the attachment 100. When the stop button 5d is operated again (that is, when an instruction to resume is issued), the controller 51 may restart the automatic holding operation of the attachment 100. Thus, the operation that has been stopped may be restarted to complete the series of operations of the automatic holding operation of the attachment 100.

As described above, during a manual operation of the holding button 5a and the operating lever 5b by the operator and the automatic holding operation in the holding operation mode, the controller 51 outputs control signals for energizing and deenergizing the solenoids of the first control valve V71, the second control valve V72, and the third control valve V73 to control the opening/closing of the holder 112, the forward/rearward movement of the axial movement mechanism 113, and the rotation of the horizontal rotation mechanism 114 in the attachment 100.

### Regarding display 70 and notifier 75

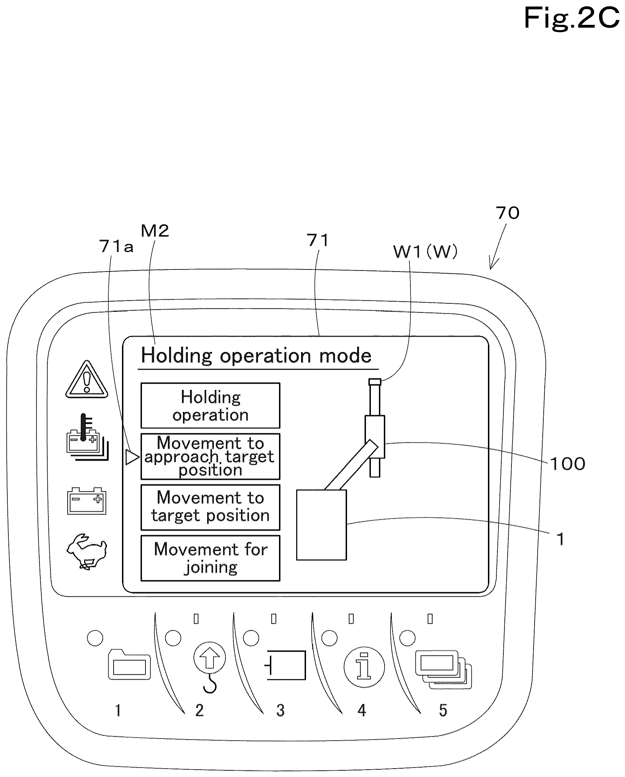

As illustrated in FIGS. 2A and 2B, the working machine 1 includes a display 70. The display 70 includes a display unit 71 and is capable of displaying information regarding the working machine 1 and information regarding the peripheral area. The display unit 71 includes a panel, such as a liquid crystal panel. For example, as illustrated in FIG. 2C, the display unit 71 is capable of displaying an image showing the operational state of the working machine 1. When one of the holding operation mode, the crane mode, and the bucket mode is selected by the mode-setting button 5e, the display unit 71 may display the selected mode. In FIG. 2C, the display unit 71 displays a message M2 indicating that the holding operation mode is selected.

As illustrated in FIG. 2C, during the automatic holding operation of the attachment 100, the display 70 displays which control of the automatic holding operation is being performed. For example, the display 70 displays which of the holding control, control of movement to the approach target position PS, control of movement to the target position PT, and joining control for the to-be-joined pipe W2 is being performed for the attachment 100. In FIG. 2C, a state display unit 71a is movable depending on which control of the automatic holding operation is being performed. In this example, the state display unit 71a indicates that the control of movement of the attachment 100 to the approach target position PS (control of movement of the pipe W1 to the operation start position PSw) is being performed. When the stop button 5d is operated to stop or restart the operation, the display 70 may display that information on the display unit 71.

The working machine 1 includes a notifier 75. The notifier 75 is a device for providing a notification to the operator. The notifier 75 is, for example, a sound emitter (e.g., a speaker or a buzzer) or a light (e.g., an alarm light, an interior light, a boom light, or a front/rear light). The notifier 75 may be a device that provides a notification using sound or light not only to the operator but also to, for example, a person around the working machine 1.

### Regarding number-of-revolution control unit 55 and speed control unit 56

As illustrated in FIG. 2A, a first setting member 61 and a second setting member 62 are connected to the controller 51. The first setting member 61 is a member that receives a selection regarding setting of the number of revolutions of the prime mover E1 (member that sets the number of revolutions of the prime mover E1). The second setting member 62 is a member that receives a selection regarding setting of the speed of the hydraulic actuator (member that sets the speed of the hydraulic actuator). The controller 51 includes a number-of-revolution controller 55, a speed controller 56, and a storing unit (memory and/or storage) 54.

The number-of-revolution controller 55 includes the CPU (processor) provided in the controller 51, an electronic/electrical circuit, and a program. The number-of-revolution controller 55 sets the number of revolutions of the prime mover E1 based on an operation signal of the first setting member 61. In other words, the number-of-revolution controller 55 increases or decreases the number of revolutions of the prime mover E1 based on the operation of the first setting member 61.

The speed controller 56 includes the CPU (processor) provided in the controller 51, an electronic/electrical circuit, and a program, and sets an operational speed based on operation signals input from the first setting member 61 and the second setting member 62. The speed controller 56 energizes the solenoid valves included in the control valves V1 to V10 to control the control valves V1 to V10 with control signals corresponding to the amounts of the operations performed on the work manual operators 19L, 19R, and 19D based on the operational speed read from the storing unit 54. More specifically, the speed controller 56 changes the openings of the control valves V1 to V10 to control the maximum speeds of the hydraulic actuators connected to the control valves V1 to V10.

### Regarding coordinate systems

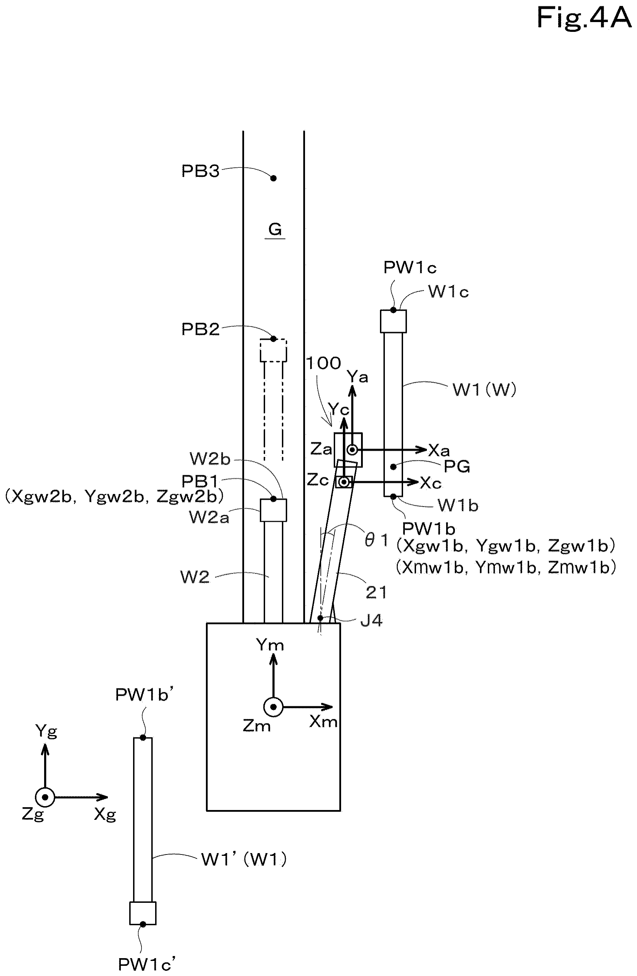

FIG. 4A illustrates various coordinate systems and an operation of holding and joining the pipe using the attachment. The coordinate systems involving the working machine 1 include a global coordinate system, a working-machine coordinate system, a coordinate system of a first sensor 81 described below, and a coordinate system of the attachment 100.

The global coordinate system is a three-dimensional coordinate system represented by (Xg, Yg, Zg) with an origin fixed to the globe. The global coordinate system is, for example, a coordinate system of the GNSS or GPS.

The working-machine coordinate system is a three-dimensional coordinate system represented by (Xm, Ym, Zm) with respect to the working machine 1. In the embodiment, the working-machine coordinate system has an origin position PL1 at the intersection between the axis Zm, which is a rotation center axis of the machine body 2, and a plane perpendicular to the axis Zm in a swing circle of the machine body 2. However, the origin position PL1 is not limited to this. The axis Ym is an axis extending in the front-rear direction of the machine body 2 and perpendicular to the axis Zm. The axis Ym is a reference axis extending in the front-rear direction of the machine body 2. The axis Xm is an axis perpendicular to the axis Zm and the axis Ym and extending in the width direction of the machine body 2.

**In** the embodiment, the coordinate system of the first sensor 81 (camera coordinate system) is a three-dimensional coordinate system represented by (Xc, Yc, Zc) with an origin at the center of an imaging plane of a camera. The Zc-axis of the camera coordinate system (Xc, Yc, Zc) is an axis extending through the optical center of the first sensor 81 (camera) and perpendicular to the imaging plane. The Yc-axis is an axis perpendicular to the Zc-axis. The Xc-axis is an axis perpendicular to both the Zc-axis and the Yc-axis.

The coordinate system of the attachment 100 is a three-dimensional coordinate system represented by (Xa, Ya, Za) with respect to the attachment 100. In the embodiment, the coordinate system of the attachment 100 has an origin position PL2 at the intersection between the axis Za, which is the rotation axis Q of the attachment 100, and the rotation center of the horizontal rotation mechanism 114 perpendicular to the axis Za. However, the origin position PL2 is not limited to this. The axis Ya is an axis extending in the front-rear direction of the attachment 100 and perpendicular to the axis Za. The axis Xa is an axis perpendicular to the axis Za and the axis Ya and extending in the width direction of the attachment 100.

### Regarding devices to detect positions of pipe W1 and joining target pipe W2

As illustrated in FIG. 2B, the working machine 1 includes the first sensor 81, a second sensor 82, and a position acquirer 83, which are connected to the controller 51.

As illustrated in FIG. 1, the first sensor 81 is provided on the attachment 100. The first sensor 81 recognizes the position of a joining portion of the joining member (pipe W1) held by the attachment 100, the joining portion being a portion to be joined to the to-be-joined member (to-be-joined pipe W2). In other words, the first sensor 81 recognizes the position of one end portion W1b of the pipe W1. In this embodiment, the first sensor 81 is a camera (for example, a CCD camera). However, the first sensor 81 may be, for example, a laser imaging, detection, and ranging (LiDAR) system or a time-of-flight (TOF) camera.

As illustrated in FIGS. 3A to 3C, the first sensor 81 (camera) is provided on, for example, the lower surface of the support body 116a of the support 116. The camera has an imaging area that covers a reference line mark MK (mark with a known length) provided on the exterior of the holder 112 at a height position similar to that of the pipe W1, and the position of the one end portion W1b of the pipe W1 held by the holder 112. In other words, the captured image includes an image of the reference line mark MK and an image of the one end portion W1b of the held pipe W1. Therefore, the position of the one end portion W1b of the pipe W1 held by the holder 112 can be determined by triangulation using reference points at both ends of the reference line mark MK, an end portion of the holder 112, and the one end portion W1b of the pipe W1. The position of the one end portion W1b of the held pipe W1 may also be determined by calculating the relative distance between the image of the reference line mark MK and the image of the one end portion W1b of the pipe W1 by image processing. Also, the imaging area of the camera may cover the joining functional unit 115 and at least a portion (end portion adjacent to the joining functional unit 115) of the holder 112, and the position of the one end portion W1b of the pipe W1 held by the holder 112 may be determined based on the relationship between an axial length (known length) of a line connecting the joining functional unit 115 and the holder 112 in the captured image and the one end portion W1b of the pipe W1 held by the holder 112. In this case, the reference line mark MK on the holder 112 may be omitted.

When the first sensor 81 is a time-of-flight (TOF) camera or a LiDAR system, the position of the one end portion W1b of the pipe W1 held by the holder 112 can be detected by a ranging function. Although the first sensor 81 is provided on the attachment 100, the first sensor 81 is not limited to this, and may be provided on the boom 21 or the arm 22.

Referring to FIGS. 1A and 4A, the position acquirer 83 acquires the position of a to-be-joined portion of the to-be-joined member (to-be-joined pipe W2), the to-be-joined portion being a portion (one end portion W2b of the to-be-joined pipe W2) to which the joining portion (one end portion W1b of the pipe W1) is joined. The position acquirer 83 is, for example, a LiDAR system, a TOF camera, a camera (CCD camera), or the like and is provided on the attachment 100. For example, the position acquirer 83 and the first sensor 81 are arranged at the same location (side by side and adjacent to each other). Although the position acquirer 83 is provided on the attachment 100, the position acquirer 83 is not limited to this, and may be provided on the boom 21 or the arm 22. In addition, the position acquirer 83 is not limited to a device that acquires the position of the one end portion W2b of the to-be-joined pipe W2 based on an imaging result from an imager, and may be, for example, a ranging sensor that measures a distance using laser light, electromagnetic waves such as millimeter waves, or ultrasonic waves.

The second sensor 82 detects the attitudes of the main body 30 and the attachment 100. The second sensor 82 includes, for example, an inertia measurement unit (IMU) and potentiometers. Cylinder stroke sensors may be used instead of the potentiometers. The inertia measurement unit (IMU) is provided on, for example, the main body 30 and is capable of determining the roll angle, the pitch angle, and the yaw angle of the working machine 1 (main body 30). The potentiometers include a boom angle sensor 91, an arm angle sensor 92, a working-tool angle sensor 93, and a swing angle sensor 94, and are provided at the respective positions on the working device 20 or the machine body 2.

Referring to FIG. 1A, the boom angle sensor 91 detects a swing angle θ2 (rotational position) of the boom 21. The arm angle sensor 92 detects a swing angle θ3 (rotational position) of the arm 22. The working-tool angle sensor 93 detects a swing angle θ4 (rotational position) of the attachment 100 (or the bucket) around a third rotation axis J3 relative to the distal end portion of the arm 22. The swing angle sensor 94 detects a swing angle θ1 (rotational position) of the swing bracket 24 (see FIG. 4A for the swing angle θ1). As illustrated in FIG. 2A, the boom angle sensor 91, the arm angle sensor 92, the working-tool angle sensor 93, and the swing angle sensor 94 are connected to the controller 51.

The boom angle sensor 91, the arm angle sensor 92, the working-tool angle sensor 93, and the swing angle sensor 94 are potentiometers in the present embodiment, but are not limited to this, and other angle sensors may be used. Cylinder stroke sensors may be used to detect the strokes (extension positions) of the boom cylinder C1, the arm cylinder C9, the attachment swing cylinder C2, and the swing cylinder C4, and the swing angles of the boom 21, the arm 22, the attachment 100 (or the bucket), and the swing bracket 24 may be calculated based on the results of the detection.

The storing unit 54 stores data (working machine data) related to the working machine 1. Referring to FIG. 1A, the working machine data includes a length L11 of the boom 21, a length L12 of the arm 22, a length L13 of the attachment 100, and a length L14 of the swing bracket 24. The length L11 of the boom 21 corresponds to the distance from the first rotation axis J1 to the second rotation axis J2. The length L12 of the arm 22 corresponds to the distance from the second rotation axis J2 to the third rotation axis J3. The length L13 of the attachment 100 corresponds to the distance from the third rotation axis J3 to the origin position PL2 of the coordinate system of the attachment 100. The length L14 of the swing bracket 24 corresponds to the distance from the first rotation axis J1 to the rotation center of the swing bracket 24. The working machine data also includes information of the position of the rotation center of the swing bracket 24 relative to the origin position PL1 of the working-machine coordinate system (for example, the position of the swivel axis) and information of an end position PR of the holder 112 in the axial direction from the origin position PL2 of the coordinate system of the attachment 100. The end position PR of the holder 112 is at an end adjacent to the joining functional unit 115. The controller 51 is capable of determining the end position PR of the holder 112 relative to the origin position PL1 using the lengths L11, L12, L13, and L14, the information of the positions, the swing angles θ1, θ2, θ3, and θ4, and the origin positions PL1 and PL2. In other words, the end position PR of the holder 112 in the working-machine coordinate system can be determined.

When the working machine 1 is used with the swing bracket 24 fixed relative to the axis Ym (front-rear direction of the machine body 2) or when the working machine 1 has no swing function, the controller 51 can determine the end position PR of the holder 112 relative to the origin position PL1 using the lengths L11, L12, and L13, the information of the positions (information of the position of the first rotation axis J1 relative to the origin position PL1 of the working-machine coordinate system is used instead of the information of the position of the rotation center of the swing bracket 24 relative to the origin position PL1 of the working-machine coordinate system), the swing angle θ1, θ2, and θ3, and the origin positions PL1 and PL2.

More specifically, although the first sensor 81 recognizes the position of the one end portion W1b of the pipe W1 held by the attachment 100, that is, the position in the coordinate system of the first sensor 81, the position of the one end portion W1b in the working-machine coordinate system may be recognized based on the information of the position of the origin of the coordinate system of the first sensor 81 relative to the origin position PL2 illustrated in FIG. 1 and the working-machine coordinate system.

**In** addition, although the position acquirer 83 recognizes the position of the one end portion W2b of the to-be-joined pipe W2, that is, the position in the coordinate system of the position acquirer 83 (substantially the same as the coordinate system of the first sensor 81), the position of the one end portion W2b of the to-be-joined pipe W2 in the working-machine coordinate system may be recognized based on the information of the position of the origin of the coordinate system of the position acquirer 83 (= coordinate system of the first sensor 81) relative to the origin position PL2 illustrated in FIG. 1 and the working-machine coordinate system.

### Regarding positioning structure of working machine 1

The working machine 1 includes a positioning device 85. The positioning device 85 is capable of detecting the position thereof (measured position information including latitude and longitude) by using a satellite positioning system (positioning satellites), such as D-GPS, GPS, GLONASS, BeiDou, Galileo, or Quasi-Zenith Satellite System (QZSS). More specifically, the positioning device 85 includes a receiver that receives satellite signals (e.g., positions of the positioning satellites, transmission times, and correction information) transmitted from the positioning satellites through an antenna or the like, and determines the position (for example, latitude and longitude) of the working machine 1, that is, the vehicle body position, based on the satellite signals. The receiver of the positioning device 85 is attached to the upper surface of the protection mechanism 6 (for example, at the position of the axis Zm in FIG. 1B). The location at which the receiver is attached is not limited to that in the embodiment. When it is not necessary to acquire (detect) the position of the working machine 1 in the global coordinate system, the positioning device 85 of the working machine 1 may be omitted.

The controller 51 includes a setter 57 and a coordinate calculator 58. Although the setter 57 includes a relative-position calculator 59, the relative-position calculator 59 may be provided separately from the setter 57. The setter 57, the coordinate calculator 58, and the relative-position calculator 59 include the CPU (processor) provided in the controller 51, electronic/electrical circuits, and programs. The setter 57, the coordinate calculator 58, and the relative-position calculator 59 will be described below with reference to each of the holding control for the pipe W1, the control of movement of the held pipe W1 to the operation start position PSw, and the operation of moving the held pipe W1 downward from the operation start position PSw to the joining start position PTw.

### Structure related to holding control for pipe W1

Referring to FIG. 4A, assume that the pipe W1 placed at a location other than the groove G is to be held by the attachment 100 and that the operator has operated the working device 20 (for example, the boom 21 and the arm 22) and the machine body (swivel base) 2 so that the first sensor 81 is positioned in an area where the first sensor 81 can recognize the pipe W1 and that the pipe W1 is recognized by the first sensor 81. When the pipe W1 is recognized by the first sensor 81, the operator's operation is not necessary. When the first sensor 81 is a wide-angle camera, a time-of-flight (TOF) camera, a LiDAR system, or the like having a large recognition area, the operator's operation for positioning the first sensor 81 in the area where the first sensor 81 can recognize the pipe W1 is not necessary.

For example, the first sensor 81 recognizes a position PW1b of the one end portion W1b of the pipe W1 to be held. The position PW1b is defined by coordinates (Xgwlb, Ygwlb, Zgwlb) in the global coordinate system and by coordinates (Xmwlb, Ymw1b, Zmwlb) in the working-machine coordinate system. At this time, a position PW1c of the other end may also be recognized. When a pipe W1' is to be held, the first sensor 81 recognizes a position PW1b' of one end portion of the pipe W1' to be held. At this time, a position PW1c' of the other end may also be recognized.

The setter 57 sets a holding position PG at which the pipe W1 is to be held by the attachment 100 based on a recognition result from the first sensor 81. For example, the setter 57 sets the holding position PG at a position at a predetermined distance from (predetermined distance inward from) the position of the one end portion W1b of the pipe W1 recognized by the first sensor 81. More specifically, the setter 57 uses the image captured by the first sensor 81 (camera) to set the holding position PG at the position at the predetermined distance inward from the position of the one end portion W1b of the pipe W1.

The setter 57 may set the holding position PG to a position such that the one end portion W1b of the pipe W1 is recognizable by the first sensor 81 when the pipe W1 is held by the attachment 100.

The setter 57 may set the holding position PG to a position at which the distance between the position of the one end portion W1b of the pipe W1 and the joining functional unit 115 is a predetermined separation distance when the pipe W1 is held by the holder 112. The separation distance is less than a distance by which the slider 132 of the axial movement mechanism 113 moves forward (that is, a movement distance for joining the pipe W1 to the to-be-joined pipe W2).

The setter 57 may set the holding position PG to a position at which the distance between the position of the one end portion W1b of the pipe W1 and the joining functional unit 115 is the predetermined separation distance when the holder 112 holds the pipe W1.

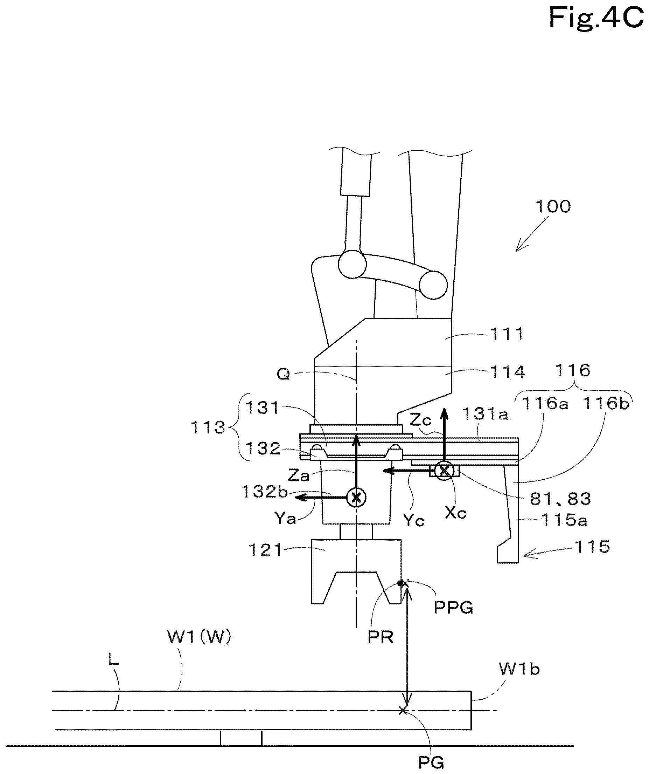

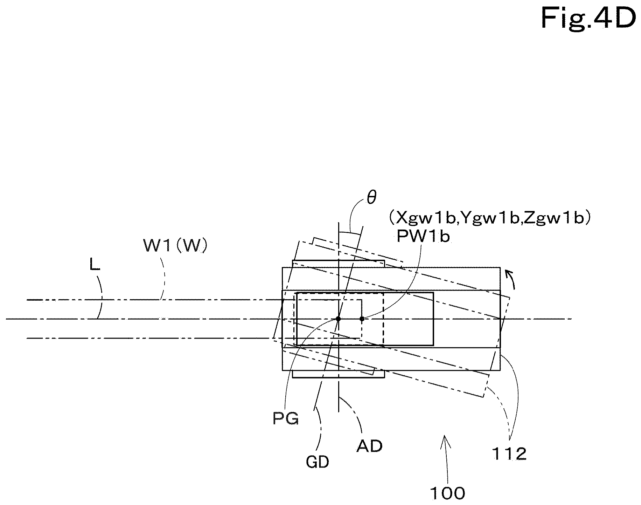

FIG. 4C illustrates the pipe-joining attachment positioned at a pre-holding position. FIG. 4D illustrates an adjustment of the orientation of the holder at the pre-holding position. As illustrated in FIG. 4C, the controller 51 positions the attachment 100 at a pre-holding position PPG above the holding position PG set for the pipe W1 to be held, and acquires a pipe axial direction of the pipe W1 to be held based on the recognition result from the first sensor 81. Then, as illustrated in FIG. 4D, the controller 51 controls the horizontal rotation mechanism 114 to horizontally rotate the holder 112 so that a holding direction GD of the holder 112 coincides with a direction AD perpendicular to the acquired pipe axial direction. In other words, the holder 112 is horizontally rotated by an angle θ so that the holding direction GD of the holder 112 and the direction AD perpendicular to the pipe axial direction of the pipe W1 coincide (the holder 112 is in the position shown by the solid lines in FIG. 4D).

The coordinate calculator 58 calculates the coordinates of the position of the one end portion W1b of the pipe W1 to be held by the attachment 100 and the coordinates of the position of the attachment 100 in the working-machine coordinate system based on the recognition result from the first sensor 81 and a detection result from the second sensor 82.

The relative-position calculator 59 calculates the relative position from the coordinates of the position of the attachment 100 to the coordinates of the position of the one end portion W1b of the pipe W1 to be held.

The setter 57 sets the coordinates of a position that faces (for example, a position that is above) the holding position PG set for the pipe W1 to be held as the pre-holding position PPG, and sets the coordinates of the position at the predetermined distance inward from the position of the one end portion W1b of the pipe W1 to be held as the holding position PG.

For example, based on the relative position calculated by the relative-position calculator 59, the holding position PG set by the setter 57, and the pre-holding position PPG set by the setter 57, the controller 51 calculates amounts of movement control for the actuators of the traveling device 10, the swivel motor MT, the swing cylinder C4, the boom cylinder C1, and the arm cylinder C9 for moving the attachment 100 to the holding position PG on the pipe W1 to be held and to the pre-holding position PPG a little short of the holding position PG. Then, the controller 51 drives the actuators by the calculated amounts of movement control to move the attachment 100 to the pre-holding position PPG of the pipe W1 to be held and then to the holding position PG.

**In** the case of FIG. 4A, to move the attachment 100 from the position illustrated in FIG. 4A to the pre-holding position PPG above the holding position PG on the pipe W1, the controller 51 calculates an amount of extension/retraction control (amount of movement control) of the swing cylinder C4 for changing the swing angle of the swing bracket 24 from the swing angle θ1 to a swing angle for the holding position PG, and also calculates amounts of extension/retraction control (amounts of movement control) of the boom cylinder C1 and the arm cylinder C9 for positioning the boom 21 illustrated in FIG. 4A and the arm 22 to the pre-holding position PPG above the holding position PG. Since it is not necessary to drive the traveling device 10 and the swivel motor MT in this case, amounts of movement control for the traveling device 10 and the swivel motor MT are zero. The swing angle of the swing bracket 24 may be changed to the swing angle for the holding position PG by driving the swivel motor MT instead of the swing cylinder C4.

The controller 51 controls the attachment 100 and the working device 20 to move the attachment 100 to the pre-holding position PPG with the holder 112 in the closed state, set the holder 112 to the open state when the attachment 100 is moved to the pre-holding position PPG, move the attachment 100 to the holding position PG when the holder 112 is set to the open state, and set the holder 112 to the closed state when the attachment 100 is moved to the holding position PG.

The closed state of the holder 112 is a state in which the interval between the pair of holding claws 121 is less than that in the open state so that the pipe W1 is held between the pair of holding claws 121.

Alternatively, the closed state of the holder 112 may be a state in which the pair of holding claws 121 are completely closed and in which the pipe W1 to be held can be retained while the pair of holding claws 121 are completely closed. Alternatively, the closed state of the holder 112 may be a state in which a holding force of the pair of holding claws 121 has reached a predetermined value for retaining the pipe W1 to be held. Alternatively, the closed state of the holder 112 may be a state in which an angle or a position of the pair of holding claws 121 has reached a threshold for retaining the pipe W1 to be held.

When the attachment 100 is moved to the holding position PG and when the holder 112 is set to the closed state, the first sensor 81 recognizes the position of the one end portion W1b of the pipe W1 held by the holder 112. When the position of the one end portion W1b of the pipe W1 recognized by the first sensor 81 while the pipe W1 is held by the holder 112 is displaced by an amount greater than or equal to a predetermined value from a position set by the setter 57 as a position of the one end portion W1b of the pipe W1 for when the pipe W1 is held at the holding position PG, the controller 51 performs re-holding of the pipe W1 by the holder 112.

The controller 51 brings the holder 112 into the open state, moves the attachment 100 in a direction that reduces the displacement, and sets the holder 112 to a closed state. When the holder 112 is set to the closed state, the first sensor 81 recognizes the position of the one end portion W1b of the pipe W1 held by the holder 112.

### Structure related to control of movement of held pipe W1 to operation start position PSw

Referring to FIGS. 1A and 4A, the setter 57 (approach-target-position setter) sets the approach target position PS for the attachment 100 to a position above the groove G based on the recognition result from the first sensor 81. More specifically, based on the recognition result from the first sensor 81, the setter 57 sets the approach target position PS, which is a position to which the attachment 100 is to be moved, such that the pipe W1 held by the attachment 100 is moved to bring the one end portion W1b of the pipe W1 to the operation start position PSw in the vicinity of the to-be-joined pipe W2. For example, the setter 57 sets the approach target position PS on the ground surface near the to-be-joined pipe W2, the ground surface near the groove G in which the to-be-joined pipe W2 is located, or a platform on the ground surface near the to-be-joined pipe W2.

For example, referring to FIGS. 1A and 6A, based on the recognition result from the first sensor 81, the setter 57 sets the operation start position PSw for the pipe W1 held by the attachment 100 to a position corresponding to the target region (for example, the groove G) in which the to-be-joined pipe W2 is located. For example, after the pipe W1 placed in a temporary placement area illustrated in FIG. 4A is held, setting and movement control are performed to move the held pipe W1 to the operation start position PSw above the groove G.

The controller 51 controls the working device 20 to move the attachment 100 holding the pipe W1 to the approach target position PS set by the setter 57.

When the attachment 100 is at the approach target position PS, the one end portion W1b of the pipe W1 held by the attachment 100 is at the operation start position PSw above the groove G. The operation start position PSw is a position above an upper target position PU above the joining start position PTw, which is a position for starting an operation of joining the pipe W1 held by the attachment 100 to the to-be-joined pipe W2. The setter 57 sets the operation start position PSw to a position at which the one end portion W1b of the pipe W1 is near the one end portion W2b of the to-be-joined pipe W2 based on the recognition result from the first sensor 81 and the position of the one end portion W2b of the to-be-joined pipe W2 acquired by the position acquirer 83.

The position acquirer 83 detects the one end portion W2b of the to-be-joined pipe W2 in the groove G to acquire the position of the one end portion W2b of the to-be-joined pipe W2. For example, the position acquirer 83 acquires the position of the to-be-joined pipe W2 based on an image of the to-be-joined pipe W2 captured by an imager or a ranging result from the ranging sensor.

The position acquirer 83 may also acquire the position of the to-be-joined pipe W2 based on three-dimensional design data indicating the position of the to-be-joined pipe W2. For example, the position acquirer 83 acquires the position of the one end portion W2b of the to-be-joined pipe W2 by determining the coordinates of the position of the one end portion W2b of the to-be-joined pipe W2 in the global coordinate system (for example, coordinates (Xgw2b, Ygw2b, Zgw2b) in the global coordinate system in FIG. 4A) using three-dimensional design data specifying installation of the pipe W1 in the groove G. The position acquirer 83 may also acquire the position of the to-be-joined pipe W2 based on the result of detection performed by an underground radar to detect the position of the to-be-joined pipe W2 embedded underground.

When the to-be-joined member (previous pipe W1) is joined to a second to-be-joined member (to-be-joined pipe W2) and the joining member (next pipe W1) is joined to the to-be-joined member (previous pipe W1) joined to the to-be-joined pipe W2, the position acquirer 83 may acquire the position of the to-be-joined portion (previous pipe W1) based on a position of a second to-be-joined portion at which the second to-be-joined member (to-be-joined pipe W2) is joined to the to-be-joined member (previous pipe W1) and information of a dimension from the second to-be-joined portion at which the to-be-joined member (previous pipe W1) is joined to the second to-be-joined member to the to-be-joined portion.

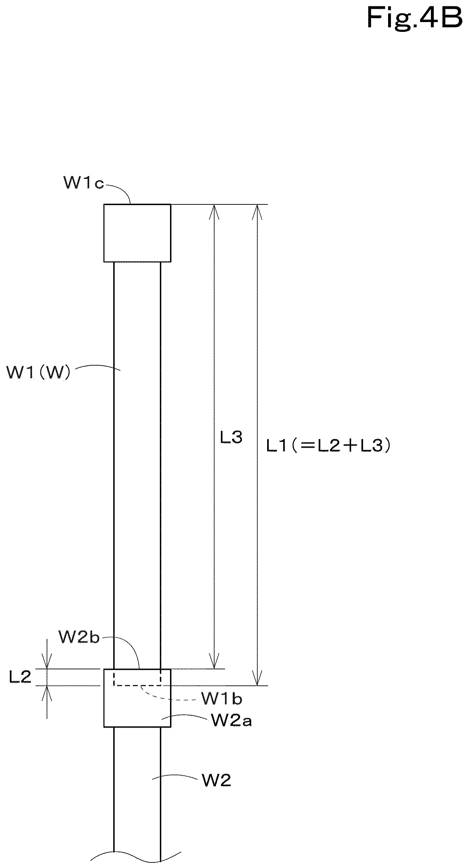

As illustrated in FIG. 4, for example, the position acquirer 83 may add a pipe axial dimension of the previously joined pipe W1 to a position of the one end portion W2b of the previous to-be-joined pipe W2 (that is, the position defined by a second coordinate set PB1) in the global coordinate system, and acquire the obtained position as a position PB2 of the one end portion W2b of the current to-be-joined pipe W2. FIG. 4B illustrates the pipe joined to the to-be-joined pipe. Referring to FIG. 4B, when the pipe axial dimension that is used is an effective pipe axial dimension L3 (= L1 - L2), that is, a dimension obtained by subtracting a length L2 of a portion of the pipe W1 inserted in the to-be-joined pipe W2 in the pipe axial direction from a pipe axial dimension L1 of the pipe W1, the position of the one end portion W2b of the current to-be-joined pipe W2 can be more accurately calculated.

Based on the recognition result from the first sensor 81 and the detection result from the second sensor 82, the coordinate calculator 58 calculates a first coordinate set PA1 (see FIG. 1A) representing coordinates of the position of the one end portion W1b of the pipe W1 held by the attachment 100 in the working-machine coordinate system.

The position acquirer 83 acquires the second coordinate set PB1 representing coordinates of the position of the one end portion W2b of the to-be-joined pipe W2 (see FIG. 1A). The setter 57 sets the operation start position PSw to a third coordinate set PC1 (see FIG. 6A) representing coordinates of a position above the second coordinate set PB1 acquired by the position acquirer 83. The position acquirer 83 sets, for example, the second coordinate set PB1 and the third coordinate set PC1 in the working-machine coordinate system.

The relative-position calculator 59 calculates the relative position of the third coordinate set PC1 with respect to the first coordinate set PA1. The setter 57 sets the approach target position PS based on the position of the attachment 100 detected by the second sensor 82 and the relative position. The controller 51 controls the working device 20 to move the attachment 100 to the approach target position PS set by the setter 57.

The controller 51 calculates amounts of movement control for the actuators of the traveling device 10, the swivel motor MT, the swing cylinder C4, the boom cylinder C1, and the arm cylinder C9 for moving the pipe W1 held by the attachment 100 to the operation start position PSw, and drives the actuators by the calculated amounts of movement control to move the pipe W1 held by the attachment 100 to the operation start position PSw.

When the attachment 100 is moved from the position at which the pipe W1 is held in the temporary placement area to the approach target position PS, the controller 51 causes each of a plurality of actuators to be driven among the actuators to operate at a movement speed that is constant or within a predetermined range from the start to the end of the movement.

When the attachment 100 is moved to the approach target position PS, the controller 51 sets movement speeds of the to-be-driven actuators such that movements of a portion of or all of the to-be-driven actuators end at the same time or substantially at the same time (end within a predetermined end time range). For example, if the controller 51 determines that one of the actuators to be driven finishes moving before another one of the actuators to be driven when the pipe W1 held by the attachment 100 is moved to the operation start position PSw, the controller 51 reduces the movement speed of the one of the actuators to be driven so that movement periods of the actuators to be driven are the same. For example, the amounts of movement control for each actuator include a movement distance and a movement speed (alternatively, a movement angle and an angular speed). The controller 51 calculates a movement time (= movement distance/movement speed, or movement angle/angular speed) for each actuator, and determines that an actuator with a shorter movement time than those of the other actuators is an actuator that finishes moving earlier. The controller 51 makes the movement time of the actuator that finishes moving earlier equal to the movement time of the other actuators so that the movement periods of the actuators are the same.

The controller 51 controls the working device 20 to reduce the movement speed of the attachment 100 (for example, the speed controller 56 reduces the movement speeds of the actuators to be driven) from a preceding position and stop the attachment 100 at the approach target position PS. The preceding position is a position at which the attachment 100 falls a little short of the approach target position PS.

### Structure related to control of movement of held pipe W1 to joining start position PTw

FIG. 6A illustrates the manner in which the pipe held by the pipe-joining attachment is moved from the operation start position to the joining start position. In other words, FIG. 6A illustrates the movement of the attachment 100 from the approach target position PS to the target position PT.

Based on the recognition result from the first sensor 81, the setter 57 (target-position setter) sets the target position PT, which is a position to which the attachment 100 is to be moved, such that the one end portion W1b of the pipe W1 is moved to the joining start position PTw at which the operation of joining the one end portion W1b of the pipe W1 to the to-be-joined pipe W2 is to be started. The joining start position PTw is a position at which the one end portion W1b of the pipe W1 held by the holder 112 can be joined to the one end portion W2b of the to-be-joined pipe W2 by moving the slider 132 of the axial movement mechanism 113 forward. In other words, the joining start position PTw is a position within the movement area of the axial movement mechanism 113 relative to the one end portion W2b of the to-be-joined pipe W2.

Based on the recognition result from the first sensor 81 and the detection result from the second sensor 82, the coordinate calculator 58 calculates the first coordinate set PA1 representing the coordinates of the position of the one end portion W1b of the pipe W1 held by the attachment 100 in the working-machine coordinate system. The position acquirer 83 acquires the second coordinate set PB1 representing the coordinates of the position of the one end portion W2b of the to-be-joined pipe W2 in the working-machine coordinate system. The setter 57 sets a joining-start-position coordinate set PA2 representing coordinates of the joining start position PTw in the working-machine coordinate system based on the second coordinate set PB1. The relative-position calculator 59 of the setter 57 calculates the relative position of the joining-start-position coordinate set PA2 with respect to the first coordinate set PA1. The setter 57 sets the target position PT for the attachment 100 based on the position of the attachment 100 detected by the second sensor 82 and the relative position calculated by the relative-position calculator 59. The target position PT of the attachment 100 is a position at which the one end portion W1b of the pipe W1 held by the attachment 100 is at the joining start position PTw.

The controller 51 calculates the amounts of movement control for the actuators of the boom cylinder C1 and the arm cylinder C9 for moving the attachment 100 from the approach target position PS to the target position PT (that is, for moving the pipe W1 held by the attachment 100 from the operation start position PSw to the joining start position PTw), and drives the actuators by the calculated amounts of movement control to move the attachment 100 from the approach target position PS to the target position PT. Since the pipe W1 held by the attachment 100 is simply lowered from the operation start position PSw to the joining start position PTw, the amounts of movement control for the actuators of the traveling device 10, the swivel motor MT, and the swing cylinder C4 are zero. In other words, these actuators are not driven.

The controller 51 controls the working device 20 to move the attachment 100 from the approach target position PS to the target position PT.

When the attachment 100 is moved from the approach target position PS to the target position PT, the controller 51 causes each of the boom 21 and the arm 22 to operate at a movement speed that is constant or within a predetermined range from the start to the end of the movement. When the attachment 100 is moved from the approach target position PS to the target position PT, the controller 51 may cause each of the boom cylinder C1 and the arm cylinder C9 to operate at a cylinder speed that is constant or within a predetermined range from the start to the end of the movement instead of controlling the movement speed of each of the boom 21 and the arm 22.

When the attachment 100 is moved to the target position PT, the controller 51 sets movement speeds of the boom 21 and the arm 22 such that movements of the boom 21 and the arm 22 end at the same time or substantially at the same time (within a predetermined end time range). For example, if the controller 51 determines that one of the boom 21 and the arm 22 finishes moving before the other when the attachment 100 is moved from the approach target position PS to the target position PT, the controller 51 reduces the movement speed of the one of the boom 21 and the arm 22 so that movement periods of the boom 21 and the arm 22 are the same. If the controller 51 determines that one of the boom cylinder C1 and the arm cylinder C9 finishes moving before the other when the attachment 100 is moved from the approach target position PS to the target position PT, the controller 51 may reduce the movement speed of the one of the boom cylinder C1 and the arm cylinder C9 so that movement periods of the boom cylinder C1 and the arm cylinder C9 are the same.

The setter 57 sets the upper target position PU (see FIG. 6A) to a position substantially vertically above the target position PT. For example, the setter 57 sets the upper target position PU (see FIG. 6A) to a position above the target position PT and higher than the to-be-joined pipe W2 based on the relative position calculated by the relative-position calculator 59. The controller 51 controls the working device 20 to substantially vertically lower the attachment 100 from the upper target position PU to the target position PT. In other words, the controller 51 controls the working device 20 to position the pipe W1 held by the attachment 100 at an upper position PUw and then substantially vertically lower the pipe W1 from the upper position PUw to the joining start position PTw.

The controller 51 gradually reduces the movement speed of the attachment 100 from the preceding position, which is a position at which the attachment 100 falls a little short of the target position PT, and stops the attachment 100 at the target position PT. For example, the controller 51 controls the working device 20 to reduce the movement speed of the attachment 100 from the predetermined preceding position for the target position PT and stop the attachment 100 at the target position PT. In other words, the controller 51 controls the working device 20 to reduce the movement speed of the pipe W1 held by the attachment 100 (for example, the speed controller 56 reduces the movement speeds of the actuators to be driven) and stop the pipe W1 at the joining start position PTw.

When the one end portion W1b of the pipe W1 held by the attachment 100 is at an overshoot position PT1w that is closer to the one end portion W2b of the to-be-joined pipe W2 than the joining start position PTw, the controller 51 controls the working device 20 to move the one end portion W1b of the pipe W1 in a direction returning from the overshoot position PT1w to the joining start position PTw (target position PT for the attachment 100) or stop the one end portion W1b of the pipe W1 at the overshoot position PT1w.

The setter 57 may set a preliminary target position, which is a position farther from the to-be-joined pipe W2 than the target position PT by a predetermined distance, based on the relative position calculated by the relative-position calculator 59. In this case, the controller 51 controls the working device 20 to position the attachment 100 at the preliminary target position and then move the attachment 100 from the preliminary target position to the target position PT.

The storing unit 54 stores various positions (e.g., the holding position PG, the approach target position PS, the upper target position PU, and the target position PT), various positions of the pipe W1 (e.g., the operation start position PSw, the joining start position PTw, and the overshoot position PT1w), and various coordinate data (e.g., the first coordinate set PA1, the second coordinate set PB1, the third coordinate set PC1, and the joining-start-position coordinate set PA2) set by the setter 57.

### Structure related to joining control for joining held pipe W1 to Joining target pipe W2)

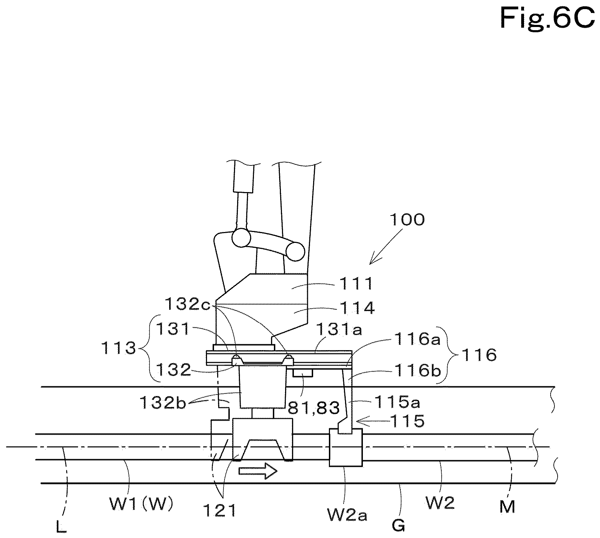

FIG. 6B illustrates the manner in which the pipe held by the pipe-joining attachment is positioned at the joining start position. FIG. 6C illustrates the manner in which the pipe held by the pipe-joining attachment is joined to the to-be-joined pipe. When the held pipe W1 is positioned at the joining start position PTw as illustrated in FIG. 6B, the held pipe W1 can be joined to the to-be-joined pipe W2 from the joining start position PTw by driving only the attachment 100, as illustrated in FIG. 6C. More specifically, the slider 132 of the axial movement mechanism 113 moves forward to insert the one end portion W1b of the pipe W1 held by the holder 112 into the one end portion W2b of the to-be-joined pipe W2 and join the pipe W1 to the to-be-joined pipe W2.

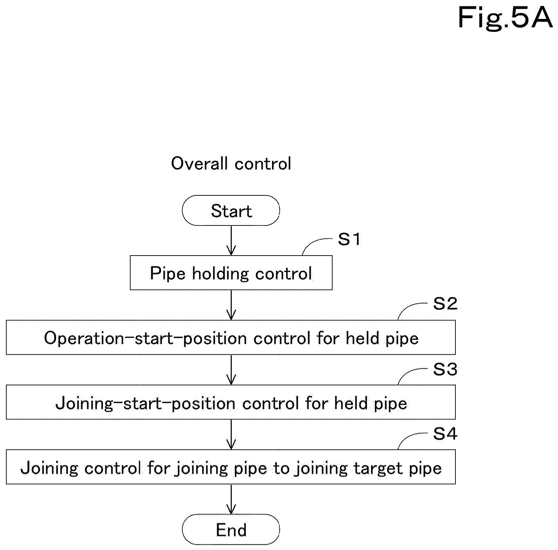

An automatic holding-and-joining process of the pipe-joining attachment 100 performed by the working machine 1 will be described with reference to FIGS. 5A to 5G. FIG. 5A is a flowchart of an example of the automatic holding-and-joining process of the pipe-joining attachment performed by the working machine. Referring to FIG. 5A, when the operator presses the automatic-holding-operation button 5c in the holding operation mode, the controller 51 performs a series of operations including holding of the pipe W1, movement of the held pipe W1 to the target position PT through the operation start position PSw, and joining of the pipe W1 to the to-be-joined pipe W2.

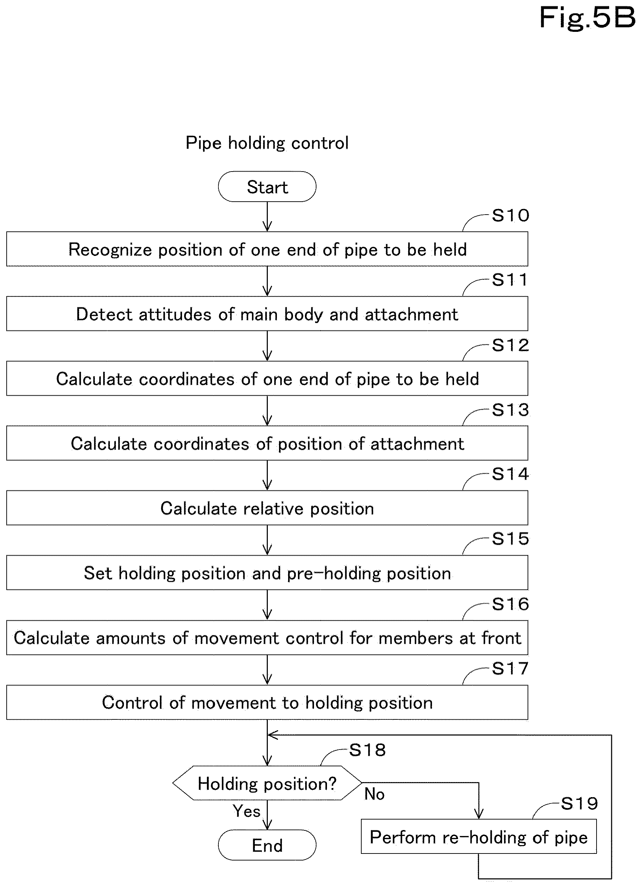

First, the controller 51 performs holding control for the pipe W1 (S1). The holding control (S1) is performed in accordance with a flowchart illustrated in FIG. 5B. FIG. 5B is a flowchart of an example of the pipe holding control.

The first sensor 81 recognizes the position of the one end portion W1b of the pipe W1 to be held (S10). When the first sensor 81 fails to recognize the position of the one end portion W1b of the pipe W1, the notifier 75 provides a notification using sound, light or a display. More specifically, when the first sensor 81 is not directed toward the temporary placement area (for example, when a camera image does not include an image of the one end portion W1b of the pipe W1), when the pipe W1 is included in the image but the one end portion W1b is out of view, or when no pipe W1b is placed in the temporary placement area, the controller 51 informs the operator of the situation by using the notifier 75 or the display 70. Then, the controller 51 may prompt the operator to perform an operation for driving the working device 20 (for example, the boom 21 and the arm 22) and the machine body (swivel base) 2 to direct the first sensor 81 toward the temporary placement area (that is, to cause the first sensor 81 to detect the temporary placement area), provides a notification that the pipe W1 is in the temporary placement area but the one end portion W1b is out of view, or provides a notification that no pipe W1 is present in the temporary placement area.

The second sensor 82 detects the attitudes of the main body 30 and the attachment 100 (S11). The coordinate calculator 58 calculates the coordinates of the position of the one end portion W1b of the pipe W1 to be held by the attachment 100 in the working-machine coordinate system based on the position of the one end portion W1b of the pipe W1 recognized by the first sensor 81 and the detection result from the second sensor 82 (S12).

The coordinate calculator 58 calculates the coordinates of the position of the attachment 100 in the working-machine coordinate system based on the detection result from the second sensor 82 (S13). The relative-position calculator 59 calculates the relative position from the coordinates of the position of the attachment 100 to the coordinates of the position of the one end portion W1b of the pipe W1 to be held (S14).

The setter 57 sets the coordinates of a position above the holding position PG set for the pipe W1 to be held as the pre-holding position PPG, and sets the coordinates of a position at a predetermined distance inward from the position of the one end portion W1b of the pipe W1 to be held as the holding position PG (S15).

Based on the relative position calculated by the relative-position calculator 59, the holding position PG set by the setter 57, and the pre-holding position PPG set by the setter 57, the controller 51 calculates amounts of movement control for the actuators of the traveling device 10, the swivel motor MT, the swing cylinder C4, the boom cylinder C1, and the arm cylinder C9 for moving the attachment 100 to the holding position PG on the pipe W1 to be held and to the pre-holding position PPG a little short of the holding position PG (S16).

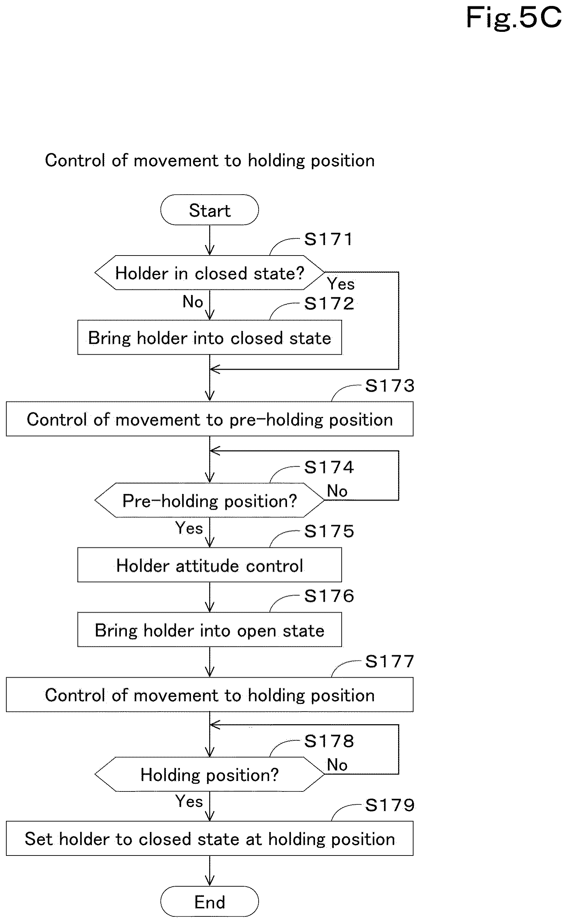

The controller 51 performs the control of movement to the holding position PG (S17). The controller 51 controls the attachment 100 and the working device 20 to drive the actuators by the calculated amounts of movement control to move the attachment 100 to the pre-holding position PPG for the pipe W1 to be held and then to the holding position PG. The control of movement to the holding position PG is performed in accordance with a flowchart illustrated in FIG. 5C. FIG. 5C is a flowchart of an example of the control of movement to the holding position.

Referring to FIG. 5C, the controller 51 determines whether or not the holder 112 is in the closed state before the attachment 100 starts to move (S171). When the holder 112 is not in the closed state (No in S171), the holder 112 is set to the closed state (S172). When the holder 112 is in the closed state (Yes in S171), the controller 51 proceeds to S173.

The controller 51 moves the attachment 100 to the pre-holding position PPG with the holder 112 in the closed state (S173). The controller 51 determines whether or not the attachment 100 has reached the pre-holding position PPG (S174). When the attachment 100 has not reached the pre-holding position PPG (No in S174), the controller 51 returns to the process in S174. When the attachment 100 has reached the pre-holding position PPG (Yes in S174), the controller 51 performs attitude control for the holder 112 (S175). The controller 51 controls the horizontal rotation mechanism 114 so that the direction AD perpendicular to the pipe axial direction of the pipe W1 to be held coincides with the holding direction GD of the holder 112.

The controller 51 sets the holder 112 to the open state (S176). When the holder 112 is set to the open state, the controller 51 moves the attachment 100 to the holding position PG (S177). The controller 51 determines whether or not the attachment 100 has reached the holding position PG (S178). When the attachment 100 has not reached the holding position PG (No in S178), the controller 51 returns to the process in S178. When the attachment 100 has reached the holding position PG (Yes in S178), the controller 51 sets the holder 112 to the closed state (S179) and proceeds to S18 in FIG. 5B.

The controller 51 determines whether or not the pipe W1 is held at the holding position PG (S18). When the attachment 100 is moved to the holding position PG and the holder 112 is set to the closed state, the first sensor 81 recognizes the position of the one end portion W1b of the pipe W1 held by the holder 112. When the position of the one end portion W1b of the pipe W1 recognized by the first sensor 81 while the pipe W1 is held by the holder 112 is displaced by a amount of displacement that is greater than or equal to a predetermined value relative to an expected position set by the setter 57 as a position of the one end portion W1b of the pipe W1 corresponding to the holding position PG (No in S18), the controller 51 performs re-holding of the pipe W1 by the holder 112 (S19).

The controller 51 brings the holder 112 into the open state, moves the attachment 100 in a direction that reduces the amount of displacement, and brings the holder 112 into a closed state. When the holder 112 is brought into the closed state, the first sensor 81 recognizes the position of the one end portion W1b of the pipe W1 held by the holder 112 (S18).

When the pipe W1 is held by the holder 112 at the holding position PG (Yes in S18), the controller 51 proceeds to S2 in FIG. 5A.

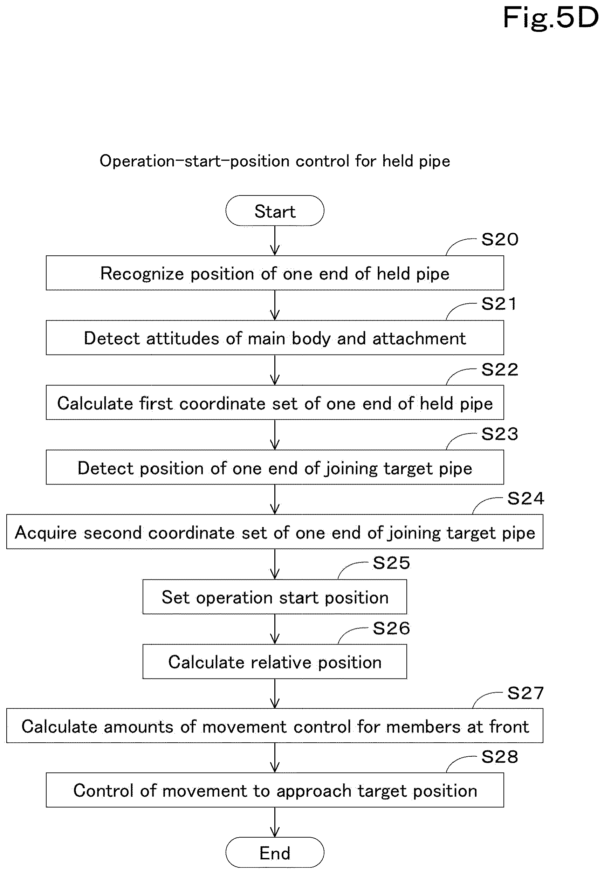

Next, as illustrated in FIG. 5A, the controller 51 performs operation-start-position control for the held pipe W1 (that is, control of movement of the attachment 100 by which the pipe W1 has been held in the temporary placement area to the approach target position PS) (S2). The operation-start-position control (S2) is performed in accordance with a flowchart illustrated in FIG. 5D. FIG. 5D is a flowchart of an example of operation-start-position control for the held pipe.

The first sensor 81 recognizes the position of the one end portion W1b of the held pipe W1 (S20). Here, S20 may be omitted, and the position of the one end portion W1b of the held pipe W1 recognized in S18 in FIG. 5D may be used.

The second sensor 82 detects the attitudes of the main body 30 and the attachment 100 (S21). The coordinate calculator 58 calculates the coordinates of the position of the one end portion W1b of the pipe W1 held by the attachment 100 in the working-machine coordinate system based on the position of the one end portion W1b of the pipe W1 recognized by the first sensor 81 and the detection result from the second sensor 82 (S22).

The position acquirer 83 detects the one end portion W2b of the to-be-joined pipe W2 in the groove G to acquire the position of the one end portion W2b of the to-be-joined pipe W2 (S23). The position acquirer 83 acquires the second coordinate set PB1 representing the coordinates of the position of the one end portion W2b of the to-be-joined pipe W2 (S24). The setter 57 sets the operation start position PSw to the third coordinate set PC1 representing the coordinates of a position above the second coordinate set PB1 acquired by the position acquirer 83 (S25).

The relative-position calculator 59 calculates the relative position of the third coordinate set PC1 with respect to the first coordinate set PA1 (S26).

The controller 51 calculates the amounts of movement control for the actuators of the traveling device 10, the swivel motor MT, the swing cylinder C4, the boom cylinder C1, and the arm cylinder C9 for moving the pipe W1 held by the attachment 100 to the operation start position PSw based on the relative position calculated by the relative-position calculator 59 and the operation start position PSw set by the setter 57 (S27).

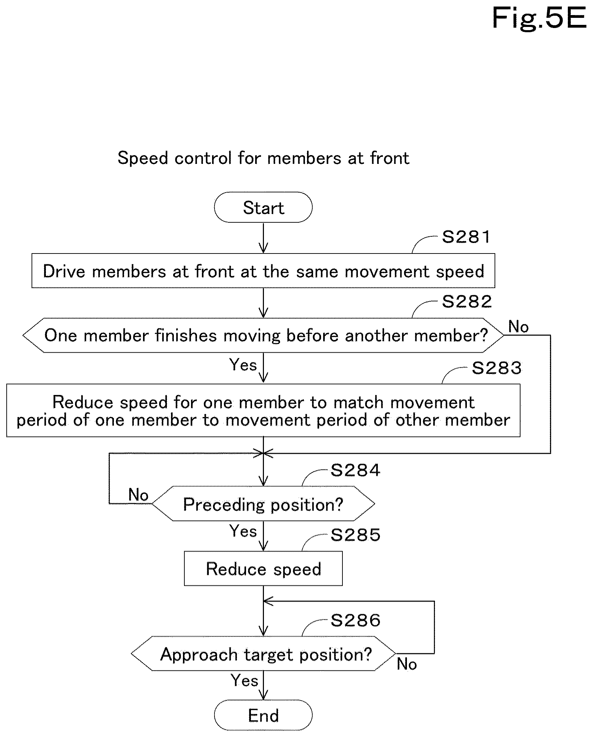

The controller 51 performs control of movement of the attachment 100 to the approach target position PS (S28). The controller 51 drives the actuators by the calculated amounts of movement control and thereby controls the working device 20 to move the attachment 100 to the approach target position PS set by the setter 57. In other words, control of movement of the one end portion W1b of the pipe W1 held by the attachment 100 to the operation start position PSw is performed. The control of movement to the operation start position PSw is performed in accordance with a flowchart illustrated in FIG. 5E. FIG. 5E is a flowchart of an example of speed control for each member at the front.

As illustrated in FIG. 5E, when the attachment 100 is moved to the approach target position PS, the controller 51 controls each of a plurality of actuators to be driven among the actuators at a movement speed that is constant or within a predetermined range from the start to the end of the movement (S281).

The controller 51 determines whether or not one of the actuators to be driven finishes moving before another one of the actuators (S282). When, for example, the amount of movement control for one of the actuators is less than the amount of movement control for another one of the actuators, the controller 51 determines that the one of the actuators finishes moving before the other one of the actuators (Yes in S282), and reduces the movement speed of the one of the actuators to match the movement period of the one of the actuators to that of the other one of the actuators (S283). In other words, the controller 51 sets the movement speeds of the plurality of actuators (for example, the boom cylinder C1 and the arm cylinder C9) such that the movements of the actuators end at the same time or substantially at the same time.

After S283 or if No in S282, the controller 51 determines whether or not the preceding position for the approach target position PS has been reached (S284). When it is determined that the preceding position has been reached (Yes in S284), the controller 51 reduces the movement speed of the attachment 100 from the preceding position (S285). When the attachment 100 is at the approach target position PS (Yes in S286), the controller 51 proceeds to S3 in FIG. 5A. As illustrated in FIG. 6A, when the attachment 100 is at the approach target position PS (when the end position PR of the holder 112 illustrated in FIG. 1A coincides with the approach target position PS), the pipe W1 held by the attachment 100 is at the operation start position PSw.

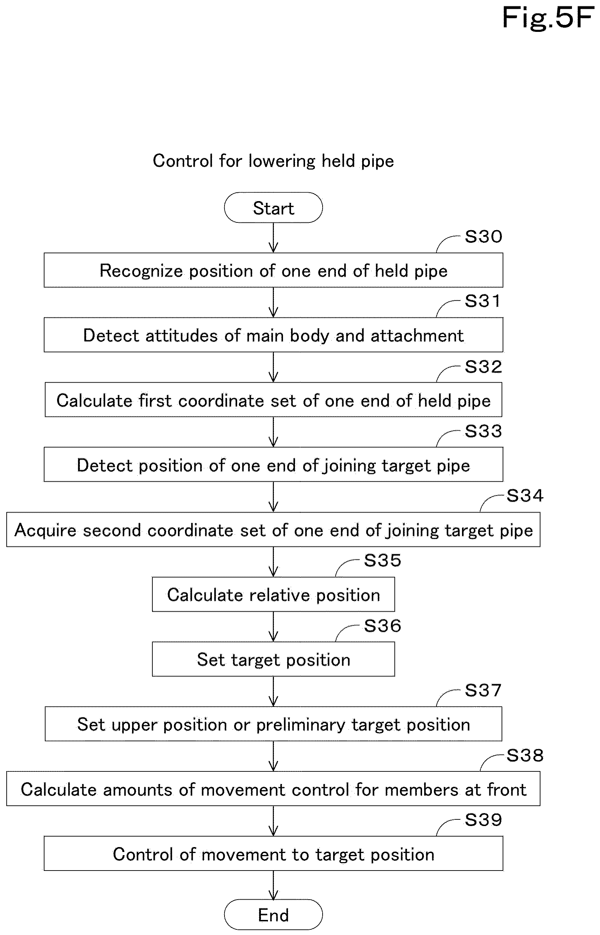

Next, as illustrated in FIG. 5A, the controller 51 performs joining-start-position control for the held pipe W1 (that is, control of movement of the attachment 100 from the approach target position PS to the target position PT) (S3). The joining-start-position control (S3) is performed in accordance with a flowchart illustrated in FIG. 5F. FIG. 5F is a flowchart of an example of joining-start-position control for the held pipe.

The first sensor 81 recognizes the position of the one end portion W1b of the held pipe W1 (S30). For example, as illustrated in FIG. 6A, the position of the one end portion W1b of the pipe W1 is recognized when the pipe W1 is at the operation start position PSw.

The second sensor 82 detects the attitudes of the main body 30 and the attachment 100 (S31). The coordinate calculator 58 calculates the first coordinate set PA1 of the position of the one end portion W1b of the pipe W1 held by the attachment 100 in the working-machine coordinate system based on the position of the one end portion W1b of the pipe W1 recognized by the first sensor 81 and the detection result from the second sensor 82 (S32).

The position acquirer 83 detects the one end portion W2b of the to-be-joined pipe W2 in the groove G to acquire the position of the one end portion W2b of the to-be-joined pipe W2 (S33). The position acquirer 83 acquires the second coordinate set PB1 representing the coordinates of the position of the one end portion W2b of the to-be-joined pipe W2 (S34). Here, S33 and S34 may be omitted, and the second coordinate set PB1 acquired in S24 in FIG. 5D may be used. The setter 57 sets the joining-start-position coordinate set PA2 representing the coordinates of the joining start position PTw in the working-machine coordinate system based on the second coordinate set PB1. The relative-position calculator 59 of the setter 57 calculates the relative position of the joining-start-position coordinate set PA2 with respect to the first coordinate set PA1 (S35).

The setter 57 sets the target position PT (see FIG. 6A) for the attachment 100 based on the position of the attachment 100 detected by the second sensor 82 and the relative position calculated by the relative-position calculator 59 (S36). More specifically, the target position PT is the position for moving the one end portion W1b of the pipe W1 held by the attachment 100 to the joining start position PTw, as illustrated in FIG. 6A.

The setter 57 sets the upper target position PU (see FIG. 6A), which is substantially vertically above the target position PT, based on the relative position calculated by the relative-position calculator 59 (S37). The setter 57 may set the preliminary target position, which is a position farther from the to-be-joined pipe W2 than the target position PT by a predetermined distance, based on the relative position calculated by the relative-position calculator 59 (S37).

The controller 51 calculates the amounts of movement control for the actuators of the boom cylinder C1 and the arm cylinder C9 for moving the attachment 100 from the approach target position PS to the target position PT (in other words, for moving the pipe W1 held by the attachment 100 from the operation start position PSw to the joining start position PTw) (S38).

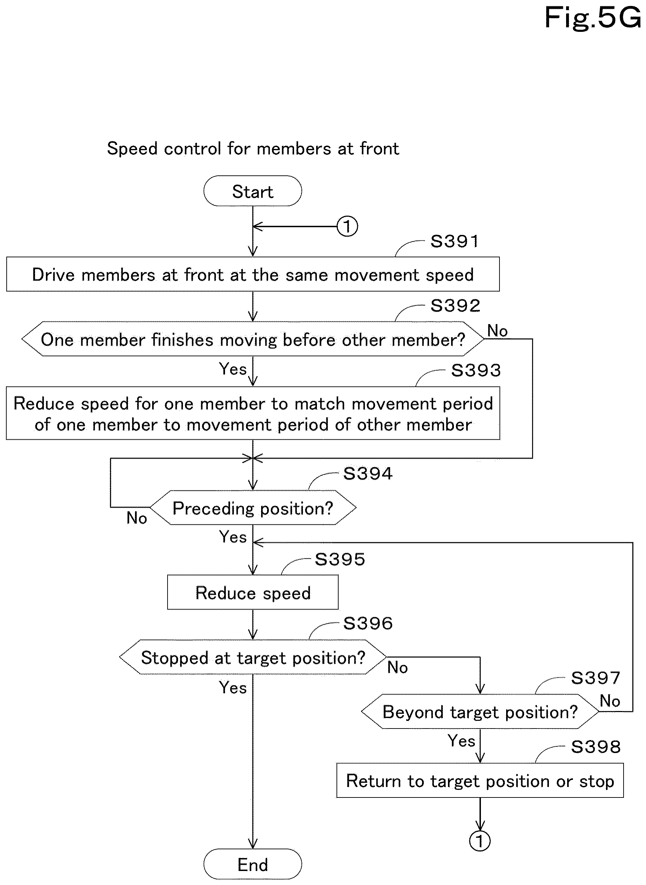

The controller 51 performs control of movement of the attachment 100 to the target position PT (S39). The controller 51 drives the actuators by the calculated amounts of movement control and thereby controls the working device 20 to move the attachment 100 to the target position PT set by the setter 57. The control of movement to the target position PT is performed in accordance with a flowchart illustrated in FIG. 5G. FIG. 5G is a flowchart of an example of speed control for each member at the front.

As illustrated in FIG. 5G, when the attachment 100 is moved from the approach target position PS to the target position PT, the controller 51 drives each of the boom cylinder C1 and the arm cylinder C9 at a movement speed that is constant or within a predetermined range from the start to the end of the movement or until a deceleration condition described below is met (Yes in S394) (S391).

The controller 51 determines whether or not one of the boom cylinder C1 and the arm cylinder C9 finishes moving before the other (S392). When, for example, the amount of movement control for one of the boom cylinder C1 and the arm cylinder C9 is less than the amount of movement control for the other, the controller 51 determines that the one of the boom cylinder C1 and the arm cylinder C9 finishes moving before the other (Yes in S392) and reduces the movement speed of the one of the boom cylinder C1 and the arm cylinder C9 to match the movement period of the one of the boom cylinder C1 and the arm cylinder C9 to that of the other (S393). In other words, the controller 51 sets the movement speeds of the boom cylinder C1 and the arm cylinder C9 such that the movements of the boom cylinder C1 and the arm cylinder C9 end at the same time or substantially at the same time.

After S393 or if No in S392, the controller 51 determines whether or not the preceding position for the target position PT has been reached by the pipe W1 held by the attachment 100 (S394). When it is determined that the preceding position has been reached (Yes in S394), the controller 51 reduces the movement speed of the pipe W1 held by the attachment 100 from the preceding position (S395), and determines whether or not the pipe W1 held by the attachment 100 is at the target position PT (S396).

When it is determined that the pipe W1 held by the attachment 100 is not at the target position PT (No in S396), and when the pipe W1 held by the attachment 100 is not moved beyond the target position PT (No in S397), the controller 51 returns to S395. When the pipe W1 held by the attachment 100 is moved beyond the target position PT (Yes in S397), the controller 51 returns the pipe W1 held by the attachment 100 to the target position PT or stops the attachment 100 (S398), and returns to the process in S391. When the pipe W1 held by the attachment 100 is stopped at a position other than the target position PT, the controller 51 causes at least one of the display 70 and the notifier 75 to inform the operator of the situation.

When the attachment 100 is at the target position PT as illustrated in FIG. 6B (Yes in S396), the controller 51 proceeds to S4 in FIG. 5A. As illustrated in FIG. 6B, when the attachment 100 is at the target position PT (when the end position PR of the holder 112 in FIG. 1A coincides with the target position PT), the pipe W1 held by the attachment 100 is at the joining start position PTw.

Next, as illustrated in FIG. 5A, the controller 51 performs joining control for joining the held pipe W1 to the to-be-joined pipe W2 (S4). More specifically, the controller 51 drives only the attachment 100. Namely, the slider 132 of the axial movement mechanism 113 moves forward so that the one end portion W1b of the pipe W1 held by the holder 112 is inserted into the one end portion W2b of the to-be-joined pipe W2 from the target position PT (joining start position) illustrated in FIG. 6B. Thus, as illustrated in FIG. 6C, the pipe W1 is joined to the to-be-joined pipe W2.

In the above-described first embodiment, the working machine 1 is of a type having a swing function. However, the working machine 1 does not necessarily have a swing device (swing cylinder C4). In other words, the working machine 1 may be of a type having no swing function (for example, an ultra-compact swivel machine). Irrespective of whether the swing function is provided, the working machine 1 may include a two-piece boom.

Main characteristic items of and effects achieved by working machines 1 according to the above-described first embodiment are as follows.

### Setting holding position PG on pipe W1 to be held

(Item A1) A working machine 1 including a machine body 2, a working device 20 provided on the machine body 2, an attachment 100 provided on the working device 20 to hold an elongated to-be-held object W, a first sensor 81 to recognize a position of one end portion W1b of the to-be-held object W, a setter 57 to set a holding position PG based on a recognition result from the first sensor 81, the holding position PG being a position at which the to-be-held object W is to be held by the attachment 100, and a controller 51 to control the working device 20, wherein the controller 51 is configured or programmed to control the working device 20 to allow the attachment 100 to hold the to-be-held object at the holding position PG set by the setter 57.

With this working machine 1, the holding position PG on the to-be-held object W (for example, the pipe W1) to be held can be appropriately set, and variations in the operation of holding the to-be-held object W (for example, the pipe W1) can be reduced. The controller 51 may control the attachment 100 based on the holding position PG set by the setter 57 to cause the attachment 100 to hold the to-be-held object W at the holding position PG. Alternatively, the display 70 may display a screen showing the holding position PG set by the setter 57 or a screen showing an operation guide for moving the attachment 100 to the holding position PG, and an operator may manually perform an operation of causing the attachment 100 to hold the to-be-held object W at the holding position PG.

(Item A2) The working machine 1 according to item A1, wherein the setter 57 is configured or programmed to set the holding position PG to a position at a predetermined distance from the one end portion W1b of the to-be-held object W recognized by the first sensor 81.

With this working machine 1, the pipe W1 can always be held at the holding position PG at the predetermined distance from the one end portion W1b of the pipe W1. Therefore, variations in the holding position PG on the pipe W1 can be reduced.

(Item A3) The working machine 1 according to item A1 or A2, wherein the setter 57 is configured or programmed to set the holding position PG such that the one end portion W1b of the to-be-held object W is recognizable by the first sensor 81 when the to-be-held object W is held by the attachment 100.

With this working machine 1, when the attachment 100 holds the to-be-held object W, the attachment 100 can hold the to-be-held object W while recognizing the position of the one end portion W1b of the to-be-held object W with the first sensor 81. Therefore, the to-be-held object W can be more reliably held.

(Item A4) The working machine 1 according to any one of items A1 to A3, wherein the attachment 100 includes a holder 112 to hold the to-be-held object W and a joining functional unit 115 positioned on an extension line extending in a longitudinal direction of the to-be-held object W from the one end portion W1b of the to-be-held object W held by the holder 112, the joining functional unit 115 being configured to approach or contact a to-be-joined member (for example, to-be-joined pipe W2) when the one end portion W1b of the to-be-held object W is joined to the to-be-joined member, the to-be-joined member being a member to which the one end portion W1b of the to-be-held object W is to be joined, and the setter 57 is configured or programmed to set the holding position PG to a position at which a distance between the one end portion W1b of the to-be-held object W and the joining functional unit 115 is a predetermined separation distance when the to-be-held object W is held by the holder 112.

With this working machine 1, when the pipe W1 is held by the holder 112 at the holding position PG, the distance between the position of the one end portion W1b of the pipe W1 and the joining functional unit 115 is the predetermined separation distance. Therefore, an operation of joining the held pipe W1 to the to-be-joined pipe W2 can be smoothly performed. The joining operation is an operation of joining the pipe W1 positioned close to the to-be-joined pipe W2 to the to-be-joined pipe W2, for example, an operation of driving only the attachment 100 to join the pipe W1 held by the attachment 100 to the to-be-joined pipe W2.

The setter 57 may also set the holding position PG at a position at which the distance between the position of the one end portion W1b of the pipe W1 and the joining functional unit 115 is the predetermined separation distance and at which the position of the one end portion W1b of the pipe W1 is recognizable by the first sensor 81 when the pipe W1 is held by the holder 112.

In this case, when the pipe W1 is held by the holder 112 at the holding position PG, the distance between the position of the one end portion W1b of the pipe W1 and the joining functional unit 115 is the predetermined separation distance. Therefore, the operation of joining the held pipe W1 to the to-be-joined pipe W2 can be smoothly performed. In addition, the position of the one end portion W1b of the held pipe W1 can be recognized by the first sensor 81. Therefore, the position of the one end portion W1b of the held pipe W1 can be determined at any time, and the manner in which the pipe W1 is held can be recognized.

(Item A5) The working machine 1 according to item A4, wherein the attachment 100 includes a horizontal rotation mechanism 114 to horizontally rotate the holder 112, and the controller 51 is configured or programmed to control an operation of the horizontal rotation mechanism 114 such that a holding direction GD of the holder 112 coincides with a direction AD perpendicular to the longitudinal direction of the to-be-held object W.

With this working machine 1, the direction AD perpendicular to the pipe axial direction of the pipe W1 to be held coincides with the holding direction GD of the holder 112, so that the possibility that the pipe W1 will be displaced in the pipe axial direction when held can be reduced. Therefore, the pipe W1 can be reliably held at the holding position PG. In addition, the possibility that the orientation of the pipe W1 held by the holder 112 will be changed horizontally can be reduced, and the pipe W1 can be held without a change in the orientation of the pipe W1. If, for example, the pipe W1 is held horizontally and obliquely to the pipe axial direction of the pipe W1, the orientation of the pipe W1 held by the holder 112 will be changed accordingly to an oblique horizontal direction. However, the possibility that the orientation will change can be reduced.

(Item A6) The working machine 1 according to any one of items A1 to A5, wherein the setter 57 is configured or programmed to set a pre-holding position PPG to a position facing the holding position PG, and the controller 51 is configured or programmed to control the attachment 100 and the working device 20 to move the attachment 100 to the pre-holding position PPG, move the attachment 100 from the pre-holding position PPG to the holding position PG with the holder 112 in an open state, and bring the holder 112 into a closed state to hold the to-be-held object W when the attachment 110 is moved to the holding position PG.

With this working machine 1, the holder 112 is in the open state at the pre-holding position PPG above the holding position PG set on the pipe W1 to be held, and is brought into the closed state at the holding position PG below the pre-holding position PPG. Therefore, the pipe W1 to be held can be appropriately held at the holding position PG by the holder 112. Accordingly, irrespective of the worker's operational skill, the attachment 100 can be automatically moved to the holding position PG on the pipe W1 to be held and caused to hold the pipe W1. As a result, the operation for holding the pipe W1 to be held does not vary depending on the worker, and the operational load on the worker can be reduced.

(Item A7) The working machine 1 according to any one of items A4 to A6, wherein the holder 112 includes a pair of holding claws 121, and the closed state of the holder 112 is a state in which an interval between the pair of holding claws 121 is less than when the holder 112 is in the open state such that the to-be-held object W is held between the pair of holding claws 121.

With this working machine 1, the closed state of the holder 112 is a state in which the pipe W1 to be held is gripped. Thus, the pipe W1 can be retained.

The holder 112 may include a pair of holding claws 121, and the closed state of the holder 112 may be a state in which the pair of holding claws 121 are completely closed and in which the pipe W1 to be held is retainable while the pair of holding claws 121 are completely closed. With this structure, the closed state of the holder 112 is a state in which the pipe W1 to be held is retained and in which the pair of holding claws 121 are completely closed. Therefore, the pipe W1 can be reliably retained.

The holder 112 may include a pair of holding claws 121, and the closed state of the holder 112 may be a state in which a holding force of the pair of holding claws 121 has reached a predetermined value for retaining the pipe W1 to be held. With this structure, since the closed state of the holder 112 is a state in which the holding force of the pair of holding claws 121 has reached the predetermined value for retaining the pipe W1 to be held, the pipe W1 can be retained by an appropriate force.

The holder 112 may include a pair of holding claws 121, and the closed state of the holder 112 may be a state in which an angle or a position of the pair of holding claws 121 has reached a threshold for retaining the pipe W1 to be held. With this structure, since the closed state of the holder 112 is a state in which the angle or the position of the pair of holding claws 121 has reached the threshold for retaining the pipe W1 to be held, the pipe W1 can be retained by an appropriate force.

(Item A8) The working machine 1 according to any one of items A1 to A7, wherein the working device 20 includes a boom 21 including a proximal end portion supported by the machine body 2 such that the boom 21 is rotatable, an arm 22 supported by a distal end portion of the boom 21 such that the arm 22 is rotatable, and the attachment 100 provided at a distal end portion of the arm 22.

With this working machine 1, which includes the boom 21, the arm 22, and the attachment 100, the holding position PG on the to-be-held object W (for example, the pipe W1) to be held can be appropriately set, and variations in the operation of holding the to-be-held object W (for example, the pipe W1) can be reduced.

(Item A9) The working machine 1 according to any one of items A1 to A8, wherein the controller 51 is configured or programmed to, when the amount of displacement of (i) a position of the one end portion W1b of the to-be-held object W recognized by the first sensor 81 while the working device 20 and the attachment 100 are controlled based on the holding position PG set by the setter 57 to hold the to-be-held object W from (ii) an expected position of the one end portion W1b of the to-be-held object W corresponding to the holding position PG set by the setter 57 is greater than or equal to a predetermined value, control the working device 20 to perform re-holding of the to-be-held object W such that the amount of displacement is less than the predetermined value.

With this working machine 1, when the position at which the holder 112 holds the pipe W1 differs from the holding position PG, re-holding is performed by the holder 112. Therefore, the pipe W1 is reliably held at the holding position PG.

(Item A10) The working machine 1 according to item A9, wherein the controller 51 is configured or programmed to perform the re-holding by bringing the holder 112 into the open state, moving the attachment 100 in a direction that reduces the amount of displacement, and then bringing the holder 112 into the closed state.

With this working machine 1, when the position at which the holder 112 holds the pipe W1 differs from the holding position PG, the attachment 100 is moved in the direction that reduces the amount of displacement, and then the holder 112 is brought into the closed state. Therefore, the pipe W1 can be held at the holding position PG. When the holder 112 is brought into the closed state, the first sensor 81 recognizes the position of the one end portion W1b of the pipe W1 held by the holder 112. Therefore, it can be determined whether or not the pipe W1 is held at the holding position PG.

(Item A11) The working machine 1 according to any one of items A1 to A10, further including a notifier 75 to provide a notification using sound, light or a display when the first sensor 81 fails to recognize the position of the one end portion W1b of the to-be-held object W.

With this working machine 1, a notification indicating that the position of the one end portion W1b of the to-be-held object W cannot be recognized or a notification indicating that no to-be-held object W is present can be provided to assist the automatic holding operation for the to-be-held object W.

(Item A12) The working machine 1 according to any one of items A1 to A11, wherein the first sensor 81 is configured to recognize a position of a joining portion (for example, one end portion W1b) of a joining member (for example, pipe W1) that is to be joined to a to-be-joined member (for example, to-be-joined pipe W2), the joining member being the to-be-held object W held by the attachment 100, and the working machine 1 includes an approach-target-position setter (setter 57) to set, based on a recognition result from the first sensor 81, an approach target position PS to which the attachment 100 is to be moved such that the joining member is moved to bring the joining portion to an operation start position PSw in the vicinity of the to-be-joined member, and a controller 51 to control the working device 20 such that the attachment 100 moves to the approach target position PS set by the approach-target-position setter (setter 57).

With this working machine 1, the controller 51 is capable of performing a process of recognizing the position of the joining portion (for example, one end portion W1b) of the joining member (for example, pipe W1) held by the attachment 100 and moving the joining portion to the operation start position PSw. Therefore, the process of moving the joining portion to the operation start position PSw can be easily performed. Thus, the joining member held by the attachment 100 can be easily moved to the operation start position PSw.

(Item A13) A method of controlling a working machine 1 including a machine body 2, a working device 20 provided on the machine body 2, and an attachment 100 provided on the working device 20 to hold an elongated to-be-held object W, the method including a position-recognizing step (S10) including recognizing a position of one end portion W1b of the to-be-held object W, a holding-position-setting step (S15) including setting a holding position PG based on a recognition result obtained in the position-recognizing step, the holding position being a position at which the to-be-held object is to be held by the attachment, and a holding step (S17) including holding the to-be-held object W based on the holding position PG set in the holding-position-setting step.

According to the method of controlling the working machine 1, the holding position PG on the to-be-held object W to be held (for example, the pipe W1) can be appropriately set, and variations in the operation of holding the to-be-held object W (for example, the pipe W1) can be reduced.

Setting operation start position PSw for held pipe W1 to position corresponding to target region

(Item B1) A working machine 1 including a machine body 2, a working device 20 provided on the machine body 2, an attachment 100 provided on the working device 20 to hold a joining member (for example, pipe W1), a first sensor 81 to recognize a position of a joining portion (for example, one end portion W1b) of the joining member held by the attachment 100, the joining portion being a portion to be joined to a to-be-joined member (for example, to-be-joined pipe W2), an approach-target-position setter (setter 57) to set, based on a recognition result from the first sensor 81, an approach target position PS to which the attachment 100 is to be moved such that the joining member is moved to bring the joining portion to an operation start position PSw in the vicinity of the to-be-joined member, and a controller 51 to control the working device 20 such that the attachment 100 moves to the approach target position PS set by the approach-target-position setter (setter 57).

With this working machine 1, the controller 51 is capable of performing a process of recognizing the position of the joining portion (for example, one end portion W1b) of the joining member (for example, pipe W1) held by the attachment 100 and moving the joining portion to the operation start position PSw. Therefore, the process of moving the joining portion to the operation start position PSw can be easily performed. Thus, the joining member held by the attachment 100 can be easily moved to the operation start position PSw.

The controller 51 controls the working device 20 to move the pipe W1 held by the attachment 100 to the operation start position PSw. Therefore, irrespective of the worker's operational skill, the held pipe W1 can be automatically and reliably moved to the operation start position PSw. As a result, the operation of moving the held pipe W1 to the operation start position PSw does not vary depending on the worker, and the operational load on the worker can be reduced. In addition, the held pipe W1 can always be brought closer to the to-be-joined pipe W2 in the target region from the operation start position PSw, and variations in the movement route to the to-be-joined pipe W2 in the target region can be reduced. Therefore, the operation of moving the held pipe W1 to the target region can be efficiently performed.

(Item B2) The working machine 1 according to item A12 or B1, wherein the to-be-joined member is in a groove G located lower than a ground surface or on a base including at least a portion located higher than the ground surface, and the approach-target-position setter (setter 57) is configured or programmed to set the approach target position PS or above the ground surface in the vicinity of the to-be-joined member or on a platform provided on the ground surface in the vicinity of the to-be-joined member.

With this working machine 1, the joining member held by the attachment 100 can be appropriately brought closer to the ground surface near the to-be-joined member or the platform on the ground surface near the to-be-joined member.

(Item B3) The working machine 1 according to item B1 or B2, wherein the to-be-joined member is in the groove G located lower than the ground surface, and the approach-target-position setter (setter 57) is configured or programmed to set the approach target position PS on or above the ground surface in the vicinity of the groove G.

With this working machine 1, the joining member held by the attachment 100 can be appropriately brought closer to the ground surface near the groove G.

More specifically, the setter 57 sets the approach target position PS to a position above the target region (groove G). In other words, the operation start position PSw is set to a position above the target region. Therefore, the pipe W1 held by the attachment 100 can simply be lowered to bring the pipe W1 closer to the to-be-joined pipe W2 in the target region, and variations in the lowering route to the to-be-joined pipe W2 in the target region can be reduced. Therefore, the operation of lowering the held pipe W1 to the target region can be efficiently performed.

(Item B4) The working machine according to any of items B1 to B3, further including a position acquirer 83 to acquire a position of a to-be-joined portion of the to-be-joined member, the to-be-joined portion being a portion to which the joining portion is to be joined, and the approach-target-position setter (setter 57) is configured or programmed to set the operation start position PSw based on the recognition result from the first sensor 81 and based on the position of the to-be-joined portion acquired by the position acquirer 83, the operation start position PSw being set to a position at which the joining portion is in the vicinity of the to-be-joined portion.

With this working machine 1, the joining member held by the attachment 100 can be more accurately moved to the operation start position PSw.

(Item B5) The working machine according to item B4, wherein the position acquirer 83 is configured or programmed to acquire the position of the to-be-joined portion based on an image of the to-be-joined portion captured by an imager or a ranging result from a ranging sensor.

With this working machine 1, the operation start position PSw can be appropriately set.

(Item B6) The working machine 1 according to item B4, wherein the position acquirer 83 is configured or programmed to acquire the position of the to-be-joined portion based on three-dimensional design data indicating a position of the to-be-joined member or a result of detection performed by an underground radar to detect the position of the to-be-joined member embedded underground.

With this working machine 1, when the three-dimensional design data is used to acquire the position of the one end portion W2b of the to-be-joined pipe W2, it is not necessary to measure the one end portion W2b of the to-be-joined pipe W2 in the target region. Therefore, the work efficiency can be increased. When the position of the to-be-joined portion is acquired based on the result of detection performed by the underground radar to detect the position of the to-be-joined member embedded underground, the one end portion W2b of the actual to-be-joined pipe W2 can be determined, and excavation to expose the one end portion W2b of the actual to-be-joined pipe W2 can be efficiently performed. Therefore, the work efficiency can be increased.

(Item B7) The working machine 1 according to item B4, wherein the position acquirer 83 is configured or programmed to, when the to-be-joined member (previous pipe W1) is to be joined to a second to-be-joined member (to-be-joined pipe W2) and the joining member (next pipe W1) is to be joined to the to-be-joined member (previous pipe W1) joined to the second to-be-joined pipe W2, acquire the position of the to-be-joined portion (previous pipe W1) based on a position of a second to-be-joined portion of the second to-be-joined member (to-be-joined pipe W2) that is joined to the to-be-joined member (previous pipe W1) and dimension information about a dimension to the to-be-joined portion from the second to-be-joined portion of the to-be-joined member (previous pipe W1) that is joined to the second to-be-joined member.

With this working machine 1, it is not necessary to measure the position of the to-be-joined portion. Therefore, the work efficiency can be increased.

For example, the position acquirer 83 may add a pipe axial dimension of the previously joined pipe W1 to the position of the one end portion W2b of the previous to-be-joined pipe W2 in the global coordinate system, and acquire the obtained position as the position of the one end portion W2b of the current to-be-joined pipe W2.

In this case, the position acquirer 83 adds the pipe axial dimension of the previously joined pipe W1 to the position of the one end portion W2b of the previous to-be-joined pipe W2 in the global coordinate system, and acquires the obtained position as the position of the one end portion W2b of the current to-be-joined pipe W2. Thus, the position of the one end portion W2b of the current to-be-joined pipe W2 can be determined simply by adding the dimension of the pipe W1 joined to the previous to-be-joined pipe W2 to the position of the one end portion W2b of the previous to-be-joined pipe W2. Therefore, it is not necessary to measure the one end portion W2b of the to-be-joined pipe W2 in the target region. As a result, the work efficiency can be increased.

(Item B8) The working machine 1 according to any one of items B4 to B7, further including a second sensor 82 to detect attitudes of the machine body 2 and the attachment 100 in a predetermined coordinate system, and a coordinate calculator 58 to calculate a first coordinate set PA1 representing coordinates of the position of the joining portion in the predetermined coordinate system based on the recognition result from the first sensor 81 and a detection result from the second sensor 82, wherein the position acquirer 83 is configured or programmed to acquire a second coordinate set PB1 representing coordinates of the position of the to-be-joined portion in the predetermined coordinate system, and the approach-target-position setter (setter 57) is configured or programmed to set the operation start position PSw to a third coordinate set PC1 representing coordinates in the vicinity of the second coordinate set PB1, calculate a relative position of the third coordinate set PC1 with respect to the first coordinate set PA1, and set the approach target position PS based on a position of the attachment 100 detected by the second sensor 82 and based on the relative position.

With this working machine 1, the relative position from the held pipe W1 to the operation start position PSw positioned above the to-be-joined pipe W2 is calculated. Therefore, the amount of movement from the position of the held pipe W1 to the operation start position PSw can be determined, and drive control for efficiently moving the held pipe W1 to the operation start position PSw can be performed.

(Item B9) The working machine 1 according to any one of items B1 to B8, further including a traveling device 10 to support the machine body 2 such that the machine body 2 is allowed to travel, and a swiveling device 25 to swivel the machine body 2 relative to the traveling device 10, wherein the working device 20 includes a boom 21 including a proximal end portion supported by the machine body 2 such that the boom 21 is rotatable about a first rotation axis, a boom driver (boom cylinder C1) to rotate the boom 21 about the first rotation axis, an arm 22 supported by a distal end portion of the boom 21 such that the arm 22 is rotatable about a second rotation axis, an arm driver (arm cylinder C9) to rotate the arm 22 about the second rotation axis, and the attachment 100 provided at a distal end portion of the arm, and the controller 51 is configured or programmed to calculate driving amounts by which actuators of the traveling device 10, the swiveling device 25, the boom driver (boom cylinder C1), and the arm driver (arm cylinder C9) are to be driven to move the attachment 100 to the approach target position PS, and drive the actuators based on the calculated driving amounts to move the attachment 100 to the approach target position PS.

With this working machine 1, the pipe W1 held by the attachment 100 can be appropriately moved to the operation start position PSw. For example, when the working machine 1 is of a type having no swing function (for example, an ultra-compact swivel machine), the pipe W1 held by the attachment 100 can be appropriately moved to the operation start position PSw.

(Item B10) The working machine 1 according to item B9, further including a swing device (swing cylinder C4) to horizontally rotate the working device 20 relative to the machine body 2, wherein the controller 51 is configured or programmed to calculate driving amounts by which actuators of the traveling device 10, the swiveling device 25, the swing device (swing cylinder C4), the boom driver (boom cylinder C1), and the arm driver (arm cylinder C9) are to be driven to move the attachment 100 to the approach target position PS, and drive the actuators based on the calculated driving amounts to move the attachment 100 to the approach target position PS.

With this working machine 1, when the working machine 1 of a type having a swing function, the pipe W1 held by the attachment 100 can be appropriately moved to the operation start position PSw.

(Item B11) The working machine 1 according to item B9 or B10, wherein the boom 21 includes a first boom including a proximal end portion supported by the machine body 2 such that the first boom is rotatable about the first rotation axis, a first boom driver to rotate the first boom about the first rotation axis, a second boom supported by a distal end portion of the first boom such that the second boom is rotatable about a third rotation axis, and a second boom driver to rotate the second boom about the third rotation axis, the arm 22 is supported by a distal end portion of the second boom such that the arm 22 is rotatable about the second rotation axis, and the controller 51 is configured or programmed to calculate driving amounts by which actuators of the traveling device 10, the swiveling device 25, the first boom driver, the second boom driver, and the arm driver (arm cylinder C9) are to be driven to move the attachment 100 to the approach target position PS, and drive the actuators based on the calculated driving amounts to move the attachment 100 to the approach target position PS.

With this working machine 1, when the working machine 1 is of a two-piece-boom type, the pipe W1 held by the attachment 100 can be appropriately moved to the operation start position PSw.

(Item B12) The working machine 1 according to any one of items B9 to B11, wherein the controller 51 is configured or programmed to, when the attachment 100 is to be moved to the approach target position PS, actuate each of a portion of or all of to-be-driven actuators at the same speed or speeds within a predetermined range from start to end of movement of the attachment 100, the to-be-driven actuators being one or more of the actuators that are to be driven.

With this working machine 1, wobbling of the pipe W1 can be reduced when the pipe W1 held by the attachment 100 is moved to the operation start position PSw. Since wobbling of the pipe W1 moved to the operation start position PSw is reduced, it is not necessary to wait for the pipe W1 to stop wobbling or perform a process of reducing the wobbling of the pipe W1. Therefore, the process of lowering toward the to-be-joined pipe W2 in the target region can be quickly performed.

(Item B13) The working machine 1 according to any one of items B9 to B22, wherein the controller 51 is configured or programmed to, when the attachment 100 is to be moved to the approach target position PS, set movement speeds of to-be-driven actuators such that movements of a portion of or all of the to-be-driven actuators end at the same time or substantially at the same time, the to-be-driven actuators being one or more of the actuators that are to be driven.

With this working machine 1, the occurrence of wobbling due to the actuators to be driven stopping at different times can be reduced.

(Item B14) The working machine 1 according to any one of items B1 to B13, wherein the controller 51 is configured or programmed to control the working device 20 to reduce a movement speed of the attachment 100 from a preceding position and stop the attachment 100 at the approach target position PS, the preceding position being a position at which the attachment 100 falls a little short of the approach target position PS.

With this working machine 1, the pipe W1 held by the attachment 100 can be gently stopped at the operation start position PSw. Therefore, wobbling of the pipe W1 stopped at the operation start position PSw can be reduced.

(Item B15) The working machine 1 according to any one of items B1 to B14, wherein the working device 20 includes a boom 21 including a proximal end portion supported by the machine body 2 such that the boom 21 is rotatable about a first rotation axis, an arm 22 supported by a distal end portion of the boom 21 such that the arm 22 is rotatable about a second rotation axis, and the attachment 100 provided at a distal end portion of the arm 22, the first sensor 81 is provided in or on one of the boom 21, the arm 22, and the attachment 100, and the position acquirer 83 is provided in or on one of the boom 21, the arm 22,0 and the attachment 100.

With this working machine 1, when the first sensor 81 or the position acquirer 83 is provided on the boom 21, the influence of vibration generated while the working device 20 is being driven is less than when the first sensor 81 or the position acquirer 83 is provided on the arm 22 or the attachment 100. Therefore, the first sensor 81 or the position acquirer 83 can perform the measurement with less influence of vibration. When the first sensor 81 or the position acquirer 83 is provided on the attachment 100, although the influence of vibration generated while the working device 20 is being driven is greater than when the first sensor 81 or the position acquirer 83 is provided on the boom 21 or the arm 22, the first sensor 81 or the position acquirer 83 can perform the measurement at a position closer to the pipe W1 held by the attachment 100 or the to-be-joined pipe W2. When the first sensor 81 or the position acquirer 83 is provided on the arm 22, the first sensor 81 or the position acquirer 83 can perform the measurement at a position at which the influence of vibration generated while the working device 20 is being driven is moderate and that is moderately close to the pipe W1 held by the attachment 100 or the to-be-joined pipe W2.

(Item B16) The working machine 1 according to any one of items A1 to A12 and B1 to B15, wherein the first sensor 81 is configured to recognize a position of a joining portion (for example, one end portion W1b) of a joining member (for example, pipe W1) that is to be joined to a to-be-joined member (for example, to-be-joined pipe W2), the joining member being the to-be-held object held by the attachment 100, and the working machine 1 includes a target-position setter (setter 57) to set, based on a recognition result from the first sensor 81, a target position PT to which the attachment 100 is to be moved such that the joining portion of the joining member is moved to a joining start position PTw at which an operation of joining the joining portion to the to-be-joined member is to be started, and a controller 51 to control the working device 20 such that the attachment 100 moves to the target position PT set by the target-position setter (setter 57).

With this working machine 1, the controller 51 is capable of performing a process of recognizing the position of the joining portion (for example, the one end portion W1b) of the joining member (for example, the pipe W1) held by the attachment 100 and moving the joining portion to the joining start position PTw. Therefore, the joining portion (for example, the one end portion W1b) of the joining member (for example, the pipe W1) can be accurately brought closer to a position at which the joining portion can be joined to the to-be-joined member (for example, the to-be-joined pipe W2).

(Item B 17) A method of controlling a working machine 1 including a machine body 2, a working device 20 provided on the machine body 2, and an attachment 100 to hold a joining member, the method including a position-recognizing step (S20) including recognizing a position of a joining portion of the joining member held by the attachment 100, the joining portion being a portion to be joined to a to-be-joined member, and a step (S25) of setting, based on a recognition result obtained in the position-recognizing step, an approach target position PS to which the attachment 100 is to be moved such that the joining member is moved to bring the joining portion to an operation start position PSw in the vicinity of the to-be-joined member.

With this method of controlling the working machine 1, the process of moving the joining portion to the operation start position PSw can be easily performed. Thus, the joining member held by the attachment 100 can be easily moved to the operation start position PSw.

### Automation of lowering of pipe W1 held by attachment 100

(Item C1) A working machine 1 including a machine body 2, a working device 20 provided on the machine body 2, an attachment 100 provided on the working device 20 to hold a joining member (for example, pipe W1), a first sensor 81 to recognize a position of a joining portion (for example, one end portion W1b) of the joining member held by the attachment 100, the joining portion being a portion to be joined to a to-be-joined member (for example, to-be-joined pipe W2), a target-position setter (setter 57) to set, based on a recognition result from the first sensor 81, a target position PT to which the attachment 100 is to be moved such that the joining portion of the joining member is moved to a joining start position PTw at which an operation of joining the joining portion to the to-be-joined member is to be started, and a controller51 to control the working device 20 such that the attachment 100 moves to the target position PT set by the target-position setter (setter 57).

With this working machine 1, the controller 51 is capable of performing a process of recognizing the position of the joining portion (for example, the one end portion W1b) of the joining member (for example, the pipe W1) held by the attachment 100 and moving the joining portion to the joining start position PTw. Therefore, the joining portion (for example, the one end portion W1b) of the joining member (for example, the pipe W1) can be accurately brought closer to a position at which the joining portion can be joined to the to-be-joined member (for example, the to-be-joined pipe W2).

(Item C2) The working machine 1 according to item B16 or C1, further including a position acquirer 83 to acquire a position of a to-be-joined portion (for example, one end portion W2b) of the to-be-joined member, the to-be-joined portion being a portion to which the joining portion is to be joined, and the target-position setter (setter 57) is configured or programmed to set the joining start position PTw based on the position of the to-be-joined portion acquired by the position acquirer 83.

With this working machine 1, the joining start position PTw can be appropriately set. In addition, since the one end portion W1b of the pipe W1 held by the attachment 100 can be positioned at the joining start position PTw, the pipe W1 held by the attachment 100 can be smoothly joined to the to-be-joined pipe W2, and the joining operation can be easily and reliably performed.

(Item C3) The working machine 1 according to item C2, further including a second sensor 82 to detect attitudes of the machine body 2 and the attachment 100 in a predetermined coordinate system, and a coordinate calculator 58 to calculate a first coordinate set PA1 representing coordinates of the position of the joining portion in the predetermined coordinate system based on the recognition result from the first sensor 81 and based on a detection result from the second sensor 82, wherein the position acquirer 83 is configured or programmed to acquire a second coordinate set PB1 representing coordinates of the position of the to-be-joined portion in the predetermined coordinate system, and the target-position setter (setter 57) is configured or programmed to set a joining-start-position coordinate set PA2 representing coordinates of the joining start position PTw in the predetermined coordinate system based on the second coordinate set PB1, calculate a relative position of the joining-start-position coordinate set PA2 with respect to the first coordinate set PA1, and set the target position PT based on a position of the attachment 100 detected by the second sensor 82 and based on the relative position.

With this working machine 1, the relative position from the held pipe W1 to the joining start position PTw is calculated. Therefore, the amount of movement from the position of the held pipe W1 to the joining start position PTw can be determined, and drive control for efficiently moving the held pipe W1 to the joining start position PTw can be performed. In other words, the attachment 100 can be efficiently moved to the target position PT.

The setter 57 may set the target position PT based on the recognition result obtained by the first sensor 81 and the coordinates of the position of the one end portion W2b of the to-be-joined pipe W2 in a coordinate system other than the working-machine coordinate system, for example, a global coordinate system. In this case, even when the position of the one end portion W2b of the to-be-joined pipe W2 cannot be acquired by the position acquirer 83, the target position PT can be set using the coordinates of the position of the one end portion W2b of the to-be-joined pipe W2 in the global coordinate system, and the target position PT can be accurately set.

(Item C4) The working machine 1 according to any one of items C1 to C3, wherein the working device 20 includes a boom 21 including a proximal end portion supported by the machine body 2 such that the boom 21 is rotatable, an arm 22 supported by a distal end portion of the boom 21 such that the arm 22 is rotatable, and the attachment 100 provided at a distal end portion of the arm 22, and the controller 51 is configured or programmed to, when the attachment 100 is to be moved to the target position PT, actuate the boom 21 and the arm 22 at the same speed or speeds within a predetermined range from start to end of movement of the attachment 100.

With this working machine 1, when the attachment 100 is moved to the target position PT, the controller 51 causes the boom 21 and the arm 22 to operate such that each of the movement speed of the boom 21 and the movement speed of the arm 22 is constant or within a predetermined range from the start to the end of movement of the attachment 100. Therefore, wobbling of the pipe W1 can be reduced when the pipe W1 held by the attachment 100 is moved to the joining start position PTw. Since wobbling of the pipe W1 moved to the joining start position PTw is reduced, it is not necessary to wait for the pipe W1 to stop wobbling or perform a process of reducing the wobbling of the pipe W1. Therefore, the process of joining the pipe W1 to the to-be-joined pipe W2 can be quickly performed.

When the pipe W1 held by the attachment 100 is moved to the target position PT, the controller 51 may cause each of the boom cylinder C1 and the arm cylinder C9 to operate at the same cylinder speed or speeds within a predetermined range from the start to the end of movement of the attachment 100. Also in this case, an effect similar to the above-described effect can be obtained.

(Item C5) The working machine 1 according to any one of items C1 to C4, wherein the working device 20 includes a boom 21 including a proximal end portion supported by the machine body 2 such that the boom 21 is rotatable, an arm 22 supported by a distal end portion of the boom 21 such that the arm 22 is rotatable, and the attachment 100 provided at a distal end portion of the arm 22, and the controller 51 is configured or programmed to, when the attachment 100 is to be moved to the target position PT, set movement speeds of the boom 21 and the arm 22 such that movements of the boom 21 and the arm 22 end at the same time or substantially at the same time.

With this working machine 1, the occurrence of wobbling due to one of the boom 21 and the arm 22 stopping before the other can be reduced.

When the attachment 100 is moved to the target position PT, the controller 51 may set movement speeds of the boom cylinder C1 and the arm cylinder C9 such that movements of the boom cylinder C1 and the arm cylinder C9 end at the same time or substantially at the same time. Also in this case, an effect similar to the above-described effect can be obtained.

(Item C6) The working machine 1 according to any one of items C1 to C5, wherein the target-position setter (setter 57) is configured or programmed to set an upper target position PU vertically above or substantially vertically above the target position PT, and the controller 51 is configured or programmed to move the attachment 100 to the upper target position PU and then vertically or substantially vertically lowers the attachment 100 from the upper target position PU to the target position PT.

With this working machine 1, the pipe W1 held by the attachment 100 is lowered from the upper position PUw to the joining start position PTw. Therefore, the possibility that the pipe W1 held by the attachment 100 or the attachment 100 itself will come into contact with another object (for example, the to-be-joined pipe W2 or the groove G in which the to-be-joined pipe W2 is embedded) can be reduced. In addition, when the pipe W1 held by the attachment 100 is at the upper position PUw, the worker can check whether or not the pipe W1 or the attachment 100 comes into contact with the other object and whether or not the target position PT is appropriately set before the held pipe W1 is lowered.

(Item C7) The working machine 1 according to any one of items C1 to C6, wherein the controller 51 is configured or programmed to gradually reduce a movement speed of the attachment 100 from a preceding position and stop the attachment 100 at the target position PT, the preceding position being a position at which the attachment 100 falls a little short of the target position PT.

With this working machine 1, the movement speed of the pipe W1 held by the attachment 100 is reduced from the preceding position of the target position PT, and the attachment 100 stops at the target position PT. Therefore, the pipe W1 held by the attachment 100 can be gently stopped at the joining start position PTw. Accordingly, wobbling of the pipe W1 can be reduced when the attachment 100 is stopped at the target position PT.

(Item C8) The working machine 1 according to any one of items C1 to C7, wherein the controller 51 is configured or programmed to, when the joining portion is located at an overshoot position PT1w which is closer to the to-be-joined portion than the joining start position PTw, control the working device 20 to move the joining portion in a direction returning from the overshoot position PT1w to the joining start position PTw or stop the joining portion at the overshoot position PT1w.

With this working machine 1, when the pipe W1 has been moved from the overshoot position PT1w to the joining start position PTw, the joining operation can be appropriately performed. When the held pipe W1 is stopped at the overshoot position PT1w, the possibility that the pipe W1 will come into contact with the to-be-joined pipe W2 or the like can be reduced.

(Item C9) The working machine 1 according to any one of items C1 to C8, wherein the target-position setter (setter 57) is configured or programmed to set a preliminary target position at a position at a predetermined distance from the target position PT, and the controller 51 is configured or programmed to move the attachment 100 to the preliminary target position and then move the attachment 100 from the preliminary target position to the target position PT.

With this working machine 1, the attachment 100 is positioned at the preliminary target position in front of the target position PT. Therefore, the possibility that the pipe W1 held by the attachment 100 or the attachment 100 itself will come into contact with another object (for example, the to-be-joined pipe W2 or the groove G in which the to-be-joined pipe W2 is embedded) can be reduced. In addition, when the attachment 100 is at the preliminary target position, the worker can check whether or not the pipe W1 or the attachment 100 comes into contact with the other object and whether or not the target position PT is appropriately set immediately before the held pipe W1 is moved to the joining start position PTw.

(Item C10) The working machine 1 according to item C2 or C3, wherein the working device 20 includes a boom 21 including a proximal end portion supported by the machine body 2 such that the boom 21 is rotatable, an arm 22 supported by a distal end portion of the boom 21 such that the arm 22 is rotatable, and the attachment 100 provided at a distal end portion of the arm 22, the first sensor 81 is provided in or on one of the boom 21, the arm 22, and the attachment 100, and the position acquirer 83 is provided in or on one of the boom 21, the arm 22, and the attachment 100.

With this working machine 1, when the first sensor 81 or the position acquirer 83 is provided on the boom 21, the influence of vibration generated while the working device 20 is being driven is less than when the first sensor 81 or the position acquirer 83 is provided on the arm 22 or the attachment 100. Therefore, the first sensor 81 or the position acquirer 83 can perform the measurement with less influence of vibration. When the first sensor 81 or the position acquirer 83 is provided on the attachment 100, although the influence of vibration generated while the working device 20 is being driven is greater than when the first sensor 81 or the position acquirer 83 is provided on the boom 21 or the arm 22, the first sensor 81 or the position acquirer 83 can perform the measurement at a position closer to the pipe W1 held by the attachment 100 or the to-be-joined pipe W2. When the first sensor 81 or the position acquirer 83 is provided on the arm 22, the first sensor 81 or the position acquirer 83 can perform the measurement at a position at which the influence of vibration generated while the working device 20 is being driven is moderate and that is moderately close to the pipe W1 held by the attachment 100 or the to-be-joined pipe W2.

(Item C11) The working machine 1 according to any one of items C1 to C10, wherein the to-be-joined member is in a groove G located lower than a ground surface, and the controller 51 is configured or programmed to cause the attachment 100 to hold the joining member located higher than the ground surface and move the joining member to the joining start position PTw in the groove G.

With this working machine 1, the pipe W1 held by the attachment 100 can be appropriately brought closer to the joining start position PTw set in the groove G.

(Item C12) The working machine 1 according to any one of items C1 to C11, wherein the joining member is an elongated member, and the joining portion is located at one of opposite ends of the joining member in a longitudinal direction such that the joining portion is separated from the attachment 100 when the joining member is held by the attachment 100.

With this working machine 1, the joining portion (for example, one end portion W1b) of the joining member (for example, pipe W1), which is an elongated member, can be accurately brought closer to a position at which the joining portion can be joined to the to-be-joined member (for example, to-be-joined pipe W2).

(Item C13) The working machine according to any one of items C1 to C12, wherein the controller 51 is configured or programmed to move the joining portion to the joining start position and then move the attachment 100 in a direction in which the joining portion approaches the to-be-joined portion to fit the joining portion to the to-be-joined portion.

With this working machine 1, the pipe W1 held by the attachment 100 can be smoothly joined to the to-be-joined pipe W2, and the joining operation can be easily and reliably performed.

(Item C14) A method of controlling a working machine 1 including a machine body 2, a working device 20 provided on the machine body 2, and an attachment 100 to hold a joining member (for example, pipe W1), the method including a position-recognizing step (S30) including recognizing a position of a joining portion (for example, one end portion W1b) of the joining member held by the attachment 100, the joining portion being a portion to be joined to a to-be-joined member (for example, to-be-joined pipe W2), and a target-position-setting step (S36) including setting, based on a recognition result obtained in the position-recognizing step, a target position PT to which the attachment 100 is to be moved such that the joining portion (for example, one end portion W1b) of the joining member is moved to a joining start position PTw at which an operation of joining the joining portion to the to-be-joined member is to be started.

With the control method of the working machine 1, the joining portion (for example, the one end portion W1b) of the joining member (for example, the pipe W1) can be accurately brought closer to a position at which the joining portion can be joined to the to-be-joined member (for example, to-be-joined pipe W2).

### Second Embodiment

A working machine 1 of a second embodiment differs from the working machine 1 of the first embodiment in that an operational limitation can be imposed while the to-be-held object W (for example, pipe W1) is held. Components similar to those in the first embodiment are denoted by the same reference signs, and description thereof will be omitted. Although the to-be-held object W is the pipe W1 in the second embodiment described below, the to-be-held object W may be pipes of various shapes, such as a U-shape, an S-shape, and an L-shape, instead of a straight pipe, and includes all objects other than pipes that can be held (for example, lumbers, iron rods, steel products, and components).

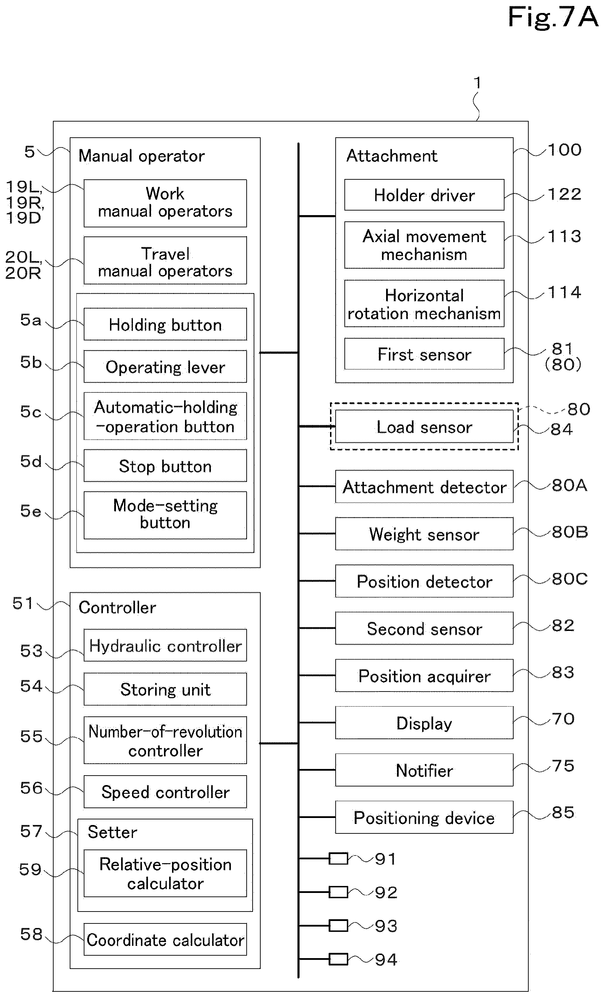

FIG. 7A is an electrical block diagram of the working machine according to the second embodiment. In an operation of causing the attachment to hold the to-be-held object W (for example, the pipe W1), a controller 51 according to the second embodiment imposes an operational limitation to limit one or both of an operational area and an operational speed of the working machine 1.

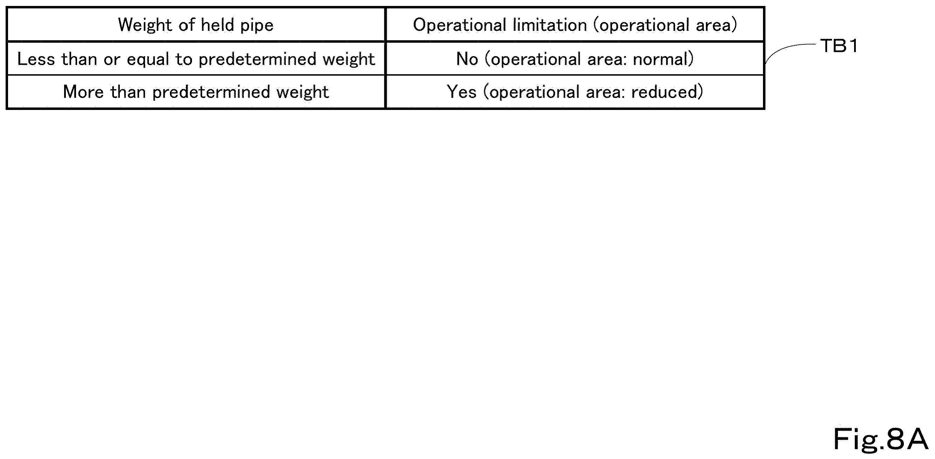

As illustrated in FIG. 7A, the working machine 1 of the second embodiment includes a detector 80 that detects when the pipe W1 is held by the attachment 100 (holding attachment). When the detector 80 detects that the pipe W1 is held, the controller 51 limits the operation of the working machine 1. The storing unit 54 includes six storage tables TB1 to TB6 illustrated in FIG. 8A to 8F. However, the number of storage tables included in the storing unit 54 may be at least one or more.

The detector 80 includes a load sensor 84 that detects a load applied to the working device 20 (for example, a load of a portion including the attachment 100). The detector 80 detects when the to-be-held object W is held based on whether or not the load detected by the load sensor 84 is greater than a load applied when the to-be-held object W is not held by a predetermined amount or more. The detector 80 is not limited to the load sensor 84, and may be structured as described below.

The working machine 1 may include an attachment detector 80A that detects when the attachment 100 is attached to the working device 20 or detects an instruction to select a holding operation mode that is an operational mode in which the attachment 100 is used. The controller 51 may impose the operational limitation when the attachment detector 80A detects that the attachment is attached or when the attachment detector 80A detects the instruction to select the holding operation mode. For example, the attachment detector 80A may be an attachment/removal sensor that detects an attachment/removal of the attachment 100 to detect when the attachment 100 is attached to the working device 20. Alternatively, the attachment detector 80A may detect that the holding operation mode is selected when an instruction to select the holding operation mode by the mode-setting button 5e is detected.

The detector 80 may also detect an instruction for the attachment 100 to perform the holding operation. More specifically, the attachment 100 includes a hydraulic actuator (for example, the holder driver 122) used to perform the holding operation. The detector 80 detects the presence or absence of the instruction for the attachment 100 to perform the holding operation based on the pressure of the hydraulic fluid supplied to the hydraulic actuator (holder driver 122) of the attachment 100 (pilot pressure on the pressure receiver of the first control valve V71) or a control signal for the control valve through which the hydraulic fluid is supplied to the hydraulic actuator (holder driver 122) of the attachment 100 (electrical signal supplied to the solenoid of the solenoid valve of the first control valve V71). The controller 51 imposes the operational limitation when the detector 80 detects the instruction to perform the holding operation.

The detector 80 may be the first sensor 81 that recognizes the pipe W1 held by the attachment 100. An image captured by a camera serving as the first sensor 81 may be subjected to an image-analyzing process, and it can be detected that the pipe W1 is held when it is recognized by pattern matching that the captured image includes an image of the attachment 100 holding the pipe W1.

The working machine 1 is switchable between a holding mode in which the attachment 100 performs an operation of holding the to-be-held object W (for example, the pipe W1) and a crane mode in which a lifting operation is performed with a lifting hook. The operational limitation is not imposed in the crane mode, or the degree of the operational limitation is greater in the holding mode than in the crane mode.

The working machine 1 may include a weight sensor 80B that detects the weight of the to-be-held object W (for example, the pipe W1), and the controller 51 may change the degree of the operational limitation in accordance with the weight of the to-be-held object W held by the attachment 100.

The working machine 1 may include a position detector 80C that detects a height position of the attachment 100, and the controller 51 may change the degree of the operational limitation in accordance with the height position of the attachment 100. For example, the position detector 80C may be a height detection sensor for the attachment 100, or detect the height of the attachment 100 based on the swing angle θ2 of the boom 21 detected by the boom angle sensor 91 and the swing angle θ3 of the arm 22 detected by the arm angle sensor 92.

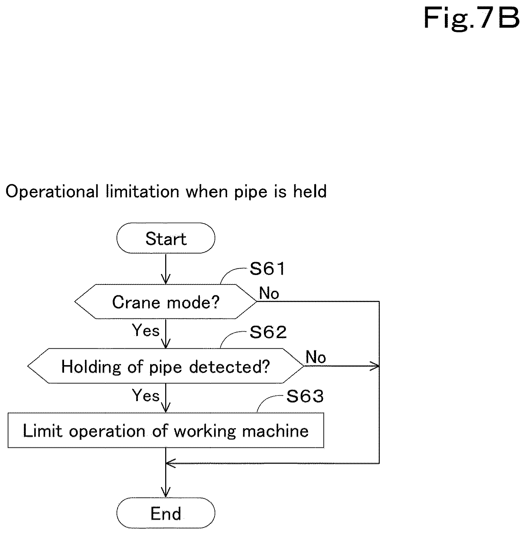

An operation-limiting process for when the pipe W1 is held is performed in accordance with a flowchart illustrated in FIG. 7B. FIG. 7B is a flowchart of an example of the operation-limiting process for when the pipe W1 is held according to the second embodiment.

The controller 51 determines whether or not the crane mode is selected (S61). When the controller 51 determines that the crane mode is selected (Yes in S61), the controller 51 determines whether or not the detector 80 detects that the pipe W1 is held (S62).

When the detector 80 detects that the pipe W1 is held (Yes in S62), the controller 51 limits the operation of the working machine 1 (S63). More specifically, when the detector 80 detects that the pipe W1 is held, the controller 51 imposes an operational limitation to limit the operational area or the operational speed of the working machine 1. However, the controller 51 may impose an operational limitation to limit both the operational area and the operational speed of the working machine 1.

The controller 51 changes the operational area of the working machine 1 based on the weight of the pipe W1 held by the attachment 100. For example, referring to FIG. 8A, the controller 51 does not limit the operational area when the weight of the pipe W1 held by the attachment 100 is less than or equal to a predetermined weight, but limits the operational area, that is, reduces the operational area, when the weight of the pipe W1 held by the attachment 100 is more than the predetermined weight. The operational area (for example, an operational radius or an operational width) of the working machine 1 may be reduced gradually or stepwise as the weight of the pipe W1 increases. In other words, the operational area of the working machine 1 may be limited by an amount that increases gradually or stepwise as the weight of the pipe W1 increases.

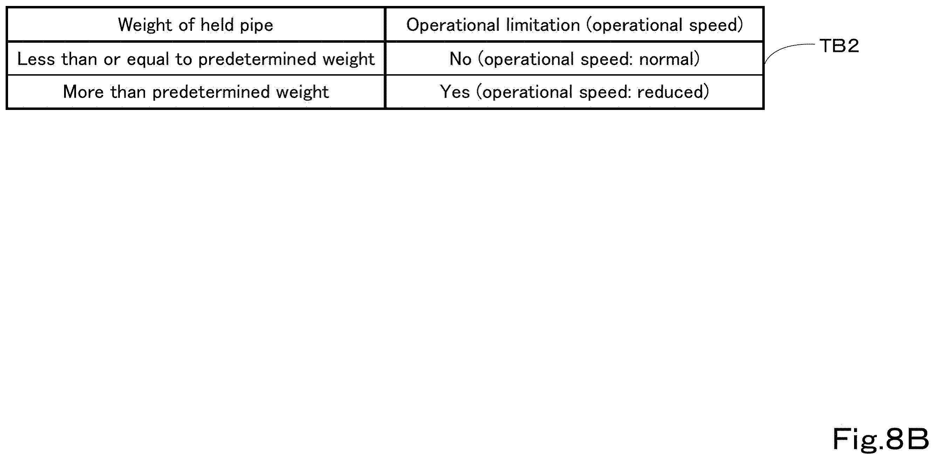

The controller 51 changes the operational speed of the working machine 1 based on the weight of the pipe W1 held by the attachment 100. For example, referring to FIG. 8B, the controller 51 does not limit the operational speed when the weight of the pipe W1 held by the attachment 100 is less than or equal to a predetermined weight, but limits the operational speed, that is, reduces the operational speed, when the weight of the pipe W1 held by the attachment 100 is more than the predetermined weight. The operational speed of the working machine 1 may be reduced gradually or stepwise as the weight of the pipe W1 increases. In other words, the operational speed of the working machine 1 may be limited by an amount that increases gradually or stepwise as the weight of the pipe W1 increases.

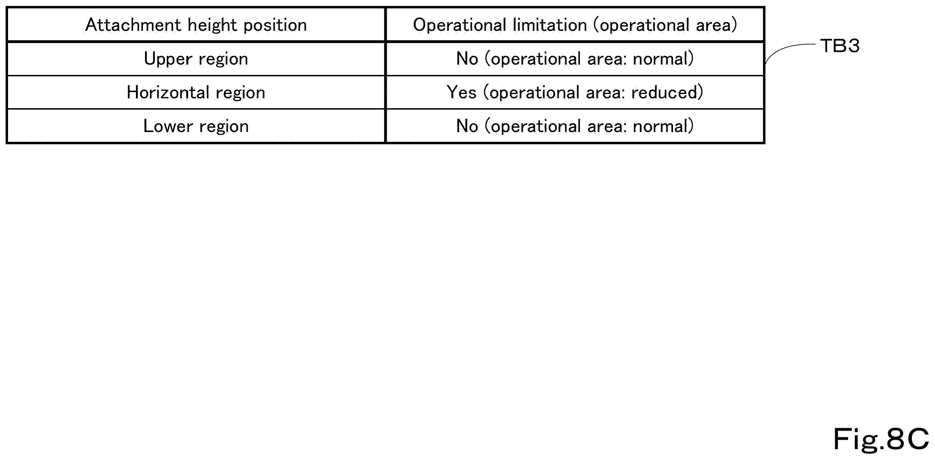

The controller 51 changes the operational area of the working machine 1 based on the height position of the attachment 100. For example, referring to FIG. 8C, the controller 51 limits the operational radius when the height position of the attachment 100 is in a horizontal region at a predetermined distance from the ground in the up-down direction, and does not limit the operational radius in regions above or below the horizontal region. The operational area of the working machine 1 may be limited by an amount that gradually decreases as the height position of the attachment 100 moves upward or downward from the ground.

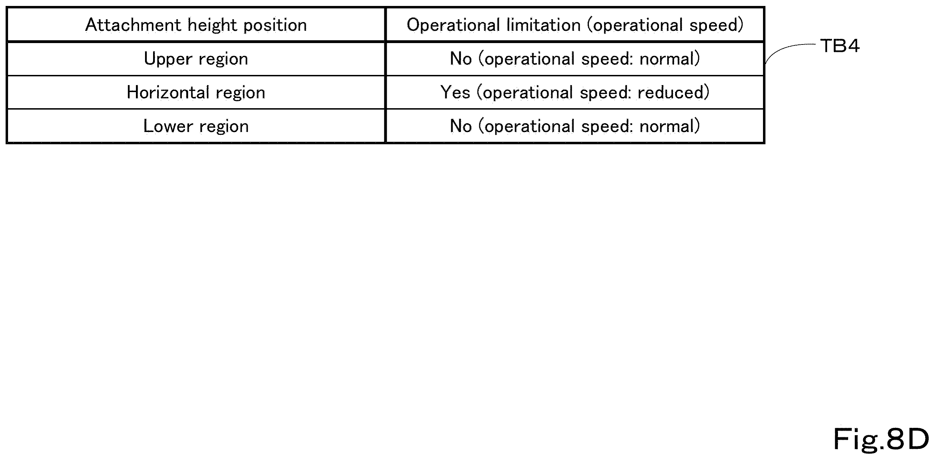

The controller 51 changes the operational speed of the working machine 1 based on the height position of the attachment 100. For example, referring to FIG. 8D, the controller 51 limits the operational speed when the height position of the attachment 100 is in the horizontal region, and does not limit the operational speed in regions above or below the horizontal region. The operational speed of the working machine 1 may be limited by an amount that decreases gradually or stepwise as the height position of the attachment 100 moves upward or downward from the ground. In other words, the operational speed may be lowest on the ground and highest at the uppermost and lowermost positions.

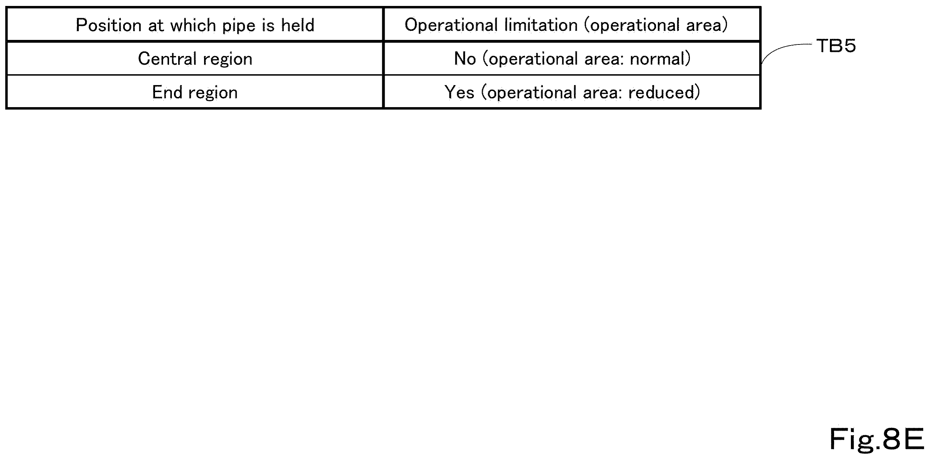

The controller 51 changes the operational area of the working machine 1 based on the position at which the pipe W1 is held by the attachment 100. For example, referring to FIG. 8E, the controller 51 limits the operational area of the working machine 1 when the position at which the pipe W1 is held by the attachment 100 is in an end region of the pipe W1 in the pipe axial direction, and does not limit the operational area of the working machine 1 when the position at which the pipe W1 is held by the attachment 100 is in a central region of the pipe W1 in the pipe axial direction. When the position at which the pipe W1 is held by the attachment 100 is at an end, the operational area may be limited not for a movement in which the end functions as the leading end but for a movement in which the opposite end functions as the leading end. The operational area of the working machine 1 may be limited by an amount that increases as the position at which the pipe W1 is held by the attachment 100 approaches an end of the pipe W1.

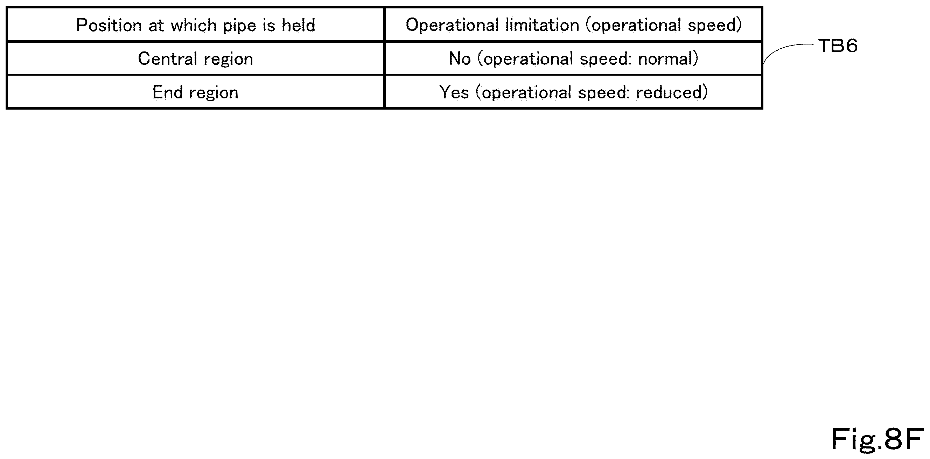

The controller 51 changes the operational speed of the working machine 1 based on the height position of the attachment 100. For example, referring to FIG. 8F, the controller 51 limits the operational speed when the height position of the attachment 100 is in a horizontal region at a predetermined distance from the ground in the up-down direction, and does not limit the operational speed in regions above or below the horizontal region. The operational speed of the working machine 1 may be limited by an amount that gradually decreases as the height position of the attachment 100 moves upward or downward from the ground.

The controller 51 may limit the operational area of the working machine 1 such that the movement area of an end portion W1c of the to-be-held object W is within a predetermined area. In addition, the controller 51 may reduce the upper limit of the operational speed of the working machine 1 as the distance from the attachment 100 to the end portion W1c of the to-be-held object W increases.

Main characteristic items of and effects achieved by working machines 1 according to the above-described second embodiment are as follows.

(Item D1) A working machine 1 including a machine body 2, a working device 20 provided on the machine body 2 to attach thereto an attachment 100 to hold a to-be-held object W, and a controller 51 to impose an operational limitation to limit one or both of an operational area and an operational speed of the working machine 1 when causing the attachment 100 to perform an operation of holding the to-be-held object W.

With this working machine 1, safety can be enhanced in an operation using the attachment 100 that holds the to-be-held object W.

(Item D2) The working machine 1 according to item D1, further including a detector 80 to detect that the to-be-held object W is held by the attachment W, wherein the controller 51 is configured or programmed to impose the operational limitation when the detector 80 detects that the to-be-held object W is held.

With this working machine 1, when the detector 80 detects that the to-be-held object W is held by the attachment 100 (that is, in a held state), the operation of the working machine 1 can be automatically limited without any specific operation by the operator of the working machine 1. Therefore, the operational safety of the working machine 1 can be ensured regardless of the operator of the working machine 1 when the to-be-held object W is held.

(Item D3) The working machine 1 according to item D2, wherein the detector 80 includes a load sensor 84 to detect a load applied to the working device 20 and is configured to detect that the to-be-held object W is held based on whether or not the load is greater by a predetermined amount or more than when the to-be-held object W is not held.

With this working machine 1, it can be determined that the to-be-held object W is held by the attachment 100 when a load of a portion including the attachment 100 is heavier than the attachment 100 by a predetermined amount or more. Therefore, it can be indirectly detected that the to-be-held object W is held by the attachment 100.

(Item D4) The working machine 1 according to any one of items D1 to D3, further including an attachment detector 80A to detect that the attachment 100 is attached to the working device 20 or detect an instruction to select a holding operation mode which is an operational mode in which the attachment is used, wherein the controller 51 is configured or programmed to impose the operational limitation when the attachment detector 80A detects that the attachment 100 is attached or when the instruction to select the holding operation mode is detected.

With this working machine 1, when the attachment detector 80A detects that the attachment 100 is attached or when the attachment detector 80A detects the instruction to select the holding operation mode, it is determined that holding of the to-be-held object W is detected because there is a high probability that the operation of holding the to-be-held object W will be performed by the attachment 100. Thus, the operation of the working machine 1 can be limited immediately before the to-be-held object W is actually held by the attachment 100 and while the to-be-held object W is held.

(Item D5) The working machine 1 according to item D2, wherein the detector 80 is configured to detect an instruction for the attachment 100 to perform a holding operation, and the controller 51 is configured or programmed to impose the operational limitation when the detector 80 detects the instruction to perform the holding operation.

With this working machine 1, when receives the instruction for the attachment 100 to perform the holding operation is issued, the attachment 100 holds the to-be-held object W. Therefore, instead of directly detecting the state in which the to-be-held object W is actually held by the attachment 100, it can be indirectly detected that the to-be-held object W is held.

(Item D6) The working machine 1 according to item D5, wherein the attachment 100 includes a hydraulic actuator (holder driver 121) to perform the holding operation, and the detector 80 is configured to determine whether the instruction to perform the holding operation is issued or not based on a pressure of hydraulic fluid supplied to the hydraulic actuator or based on a control signal for a control valve through which hydraulic fluid is supplied to the hydraulic actuator.

With this working machine 1, the presence or absence of the holding instruction for the attachment 100 is determined based on the pressure of the hydraulic fluid supplied to the hydraulic actuator (holder driver 122) of the attachment 100 or the control signal for the control valve through which the hydraulic fluid is supplied to the hydraulic actuator (holder driver 122) of the attachment 100. Therefore, it can be appropriately detected that the to-be-held object W is held.

(Item D7) The working machine 1 according to item D2, further including a first sensor 81 to recognize the to-be-held object W held by the attachment 100, wherein the detector 80 is configured to detect that the to-be-held object W is held based on a recognition result from the first sensor 81.

With this working machine 1, the first sensor 81 can directly detect the state in which the to-be-held object W is actually held by the attachment 100. Thus, it can be appropriately detected when the to-be-held object W is held by the attachment 100.

(Item D8) The working machine 1 according to any one of items D1 to D7, wherein the working machine 1 is switchable between a holding mode in which the attachment 100 performs an operation of holding the to-be-held object W and a crane mode in which a lifting operation is performed; and the operational limitation is not imposed in the crane mode, or the degree of the operational limitation is greater in the holding mode than in the crane mode.

With this working machine 1, in the crane mode in which the lifting operation can be performed by using the lifting hook, it is not detected that the to-be-held object W is held, and the operation of the working machine 1 is not limited based on whether the to-be-held object W is held. Therefore, the crane mode can be distinguished from the holding operation mode, and can be appropriately carried out. Alternatively, the degree of the operational limitation can be made greater in the holding mode than in the crane mode, so that safety can be enhanced in the holding mode.

(Item D9) The working machine 1 according to any one of items D1 to D8, further including a weight sensor 80B to detect a weight of the to-be-held object W, wherein the controller 51 is configured or programmed to change the degree of the operational limitation in accordance with the weight of the to-be-held object W held by the attachment 100.

With this working machine 1, the degree of the operational limitation is changed in accordance with the weight of the to-be-held object W held by the attachment 100. Therefore, safety can be provided in consideration of the weight of the to-be-held object W held by the attachment 100. For example, the degree of the operational limitation of the working machine 1 can be increased as the weight of the to-be-held object W increases. Thus, the operational safety can be ensured even when the weight of the to-be-held object W increases.

For example, one or both of the operational area (for example, the operational radius or the operational width) and the operational speed of the working machine 1 can be changed based on the weight of the pipe W1 held by the attachment 100. Thus, one or both of the operational area and the operational speed can be appropriately set in accordance with the weight of the pipe W1. For example, the operational area of the working machine 1 or the operational speed of the working machine 1 can be reduced as the weight of the pipe W1 increases. Thus, one or both of the operational area and the operational speed can be appropriately set in accordance with the weight of the pipe W1.

(Item D10) The working machine 1 according to any one of items D1 to D9, further including a position detector 80C to detect a height position of the attachment 100, wherein the controller 51 is configured or programmed to change the degree of the operational limitation in accordance with the height position of the attachment 100.

With this working machine 1, the degree of the operational limitation is changed in accordance with the height position of the to-be-held object W held by the attachment 100. Therefore, the operational safety can be ensured in consideration of the height of the to-be-held object W that is held.

For example, the operational area of the working machine 1 may be changed based on the height position of the attachment 100. Thus, the operational area can be appropriately set in accordance with the height position of the attachment 100. The operational speed of the working machine 1 may also be changed based on the height position of the attachment 100. Thus, the operational speed can be appropriately set in accordance with the height position of the attachment 100.

(Item D11) The working machine 1 according to item D7, wherein the first sensor 81 is configured to recognize an end portion W1c of a projecting portion of the to-be-held object W held by the attachment 100 that projects from the attachment 100, and the controller 51 is configured or programmed to limit the operational area of the working machine such that a movement area of the end portion W1c of the to-be-held object W is within a predetermined area.

With this working machine 1, the to-be-held object W held by the attachment 100 moves within the predetermined area, so that the areas outside the predetermined area are safe. Thus, the operational safety of the working machine 1 can be ensured when the to-be-held object W is held.

(Item D12) The working machine 1 according to item D7, wherein the first sensor 81 is configured to recognize an end portion W1c of a projecting portion of the to-be-held object W held by the attachment 100 that projects from the attachment 100, and the controller 51 is configured or programmed to reduce an upper limit of the operational speed of the working machine 1 as a distance from the attachment 100 to the end portion W1c of the to-be-held object W increases.

With this working machine 1, the operational safety can be ensured even when the to-be-held object W projects from the attachment 100 by a large distance. In other words, the operational safety can be ensured irrespective of the distance by which the to-be-held object W projects from the attachment 100.

(Item D13) The working machine 1 according to item D7, wherein the first sensor 81 is configured to recognize an end portion of a projecting portion (protruding portion) of the to-be-held object W held by the attachment 100 that projects from the attachment 100, and the working machine 1 includes a peripheral monitor 88 to detect a position of a to-be-avoided object around the to-be-held object W, and a relative-position calculator 59 to calculate a relative position between a position of the end portion of the to-be-held object W recognized by the first sensor 81 and the position of the to-be-avoided object detected by the peripheral monitor 88.

With this working machine 1, the relative position between the to-be-held object W and the to-be-avoided object can be easily recognized, so that safety can be enhanced in an operation using the attachment 100 that holds the to-be-held object W. Moreover, the relative-position calculator 59 calculates the relative position between the position of the to-be-held object W held by the attachment 100 and the position of the to-be-avoided object around the to-be-held object W. Therefore, even when the attachment 100 holds a different type of to-be-held object W and when the state in which the to-be-held object W is held by the attachment 100 differs from a previous state or a predetermined state, the relative position between the position of the to-be-held object W held by the attachment 100 and the position of the to-be-avoided object around the to-be-held object W can be accurately determined. Thus, the relative positional relationship between the to-be-held object W held by the attachment 100 and the to-be-avoided object around the to-be-held object W can be accurately recognized in consideration of the actual state in which the to-be-held object W is held by the attachment 100.

(Item D14) A method of controlling a working machine 1 including a machine body 2 and a working device 20 provided on the machine body 2 to attach thereto an attachment 100 to hold a to-be-held object W, the method including limiting (S63) one or both of an operational area and an operational speed of the working machine 1 when causing the attachment 100 to perform an operation of holding the to-be-held object W.

With this method of controlling the working machine 1, safety can be enhanced in an operation using the attachment 100 that holds the to-be-held object W.

### Third Embodiment

A working machine 1 of a third embodiment differs from the working machine 1 of the second embodiment in that peripheral monitoring can be performed while the to-be-held object W (for example, pipe W1) is held. Components similar to those in the second embodiment are denoted by the same reference signs, and description thereof will be omitted.

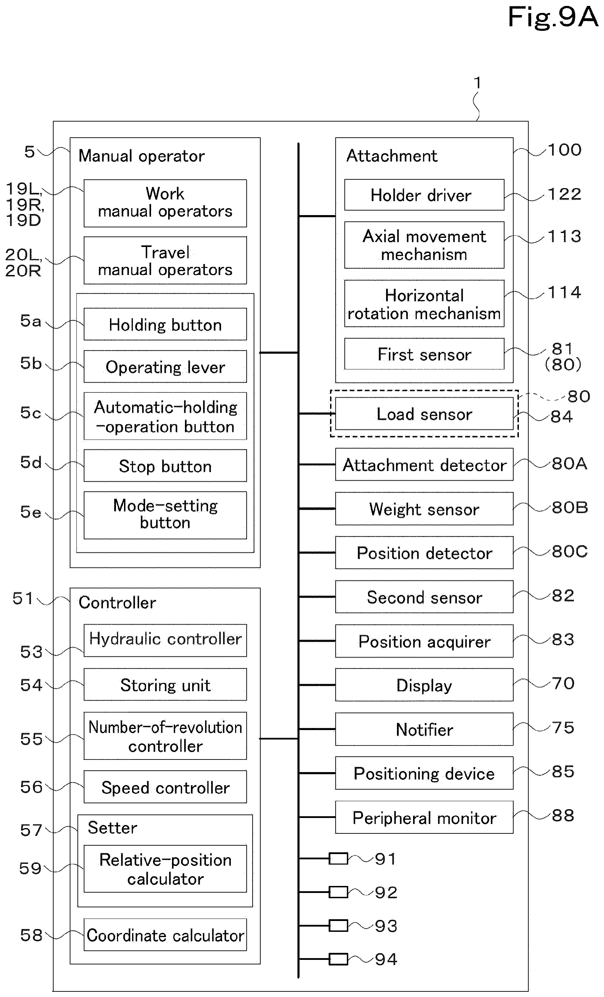

FIG. 9A is an electrical block diagram of a working machine according to the third embodiment. The first sensor 81 recognizes the position of an end portion (at least an end portion W1c) of a protruding portion of the to-be-held object W (for example, the pipe W1) held by the attachment 100, the protruding portion protruding from the attachment 100.

The working machine 1 of the third embodiment includes a peripheral monitor 88 that detects the position of a to-be-avoided object around the to-be-held object W (for example, the pipe W1) held by the attachment 100. As described below, the "to-be-avoided object" referred to herein is, for example, a human HM, an obstacle, the working machine 1 itself, or an operation prohibited area IA, and includes an object, a region, or a space that the to-be-held object W held by the attachment 100 is not allowed to come into contact, approach, or enter. The peripheral monitor 88 is, for example, a camera, a time-of-flight (TOF) camera, a LiDAR system, or a millimeter wave radar/sensor, and is capable of detecting the human HM, the obstacle, or the working machine 1 itself. The storing unit 54 stores position data of the operation prohibited area IA in, for example, the global coordinate system or the working-machine coordinate system in advance. The peripheral monitor 88 is capable of acquiring the operation prohibited area IA in the global coordinate system, the working-machine coordinate system, or the like based on the position data of the operation prohibited area IA stored in the storing unit 54.

The relative-position calculator 59 of the third embodiment also calculates the relative position between the position of the end portion W1c of the pipe W1 recognized by the first sensor 81 and the position of the to-be-avoided object detected by the peripheral monitor 88. The relative-position calculator 59 calculates the relative position when the detector 80 detects that the pipe W1 is held.

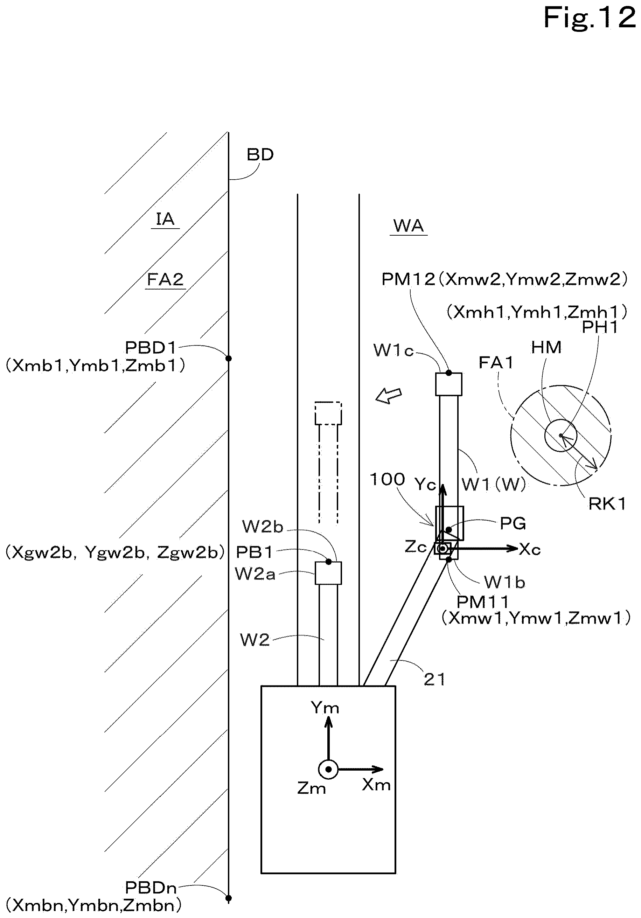

FIG. 12 illustrates a permitted area set around the working machine based on the relative position between the held pipe and the to-be-avoided object around the pipe. The controller 51 of the third embodiment sets a permitted area WA in which the pipe W1 held by the attachment 100 does not come into contact with the to-be-avoided object based on the relative position calculated by the relative-position calculator 59. The permitted area WA is basically an operation permitted area including a land, a road, and a site in which the operation involving the to-be-held object W held by the attachment 100 is performed, a road and an alley on which the working machine 1 holding the to-be-held object W is movable, and a standby area in which the working machine 1 is in a standby state.

The controller 51 controls the operation of the working machine 1 so that the pipe W1 held by the attachment 100 is within the permitted area WA.

The display 70 displays relative position information indicating the relative position. The notifier 75 provides the relative position information indicating the relative position. The notifier 75 provides a notification when a distance between the relative position is less than a predetermined distance.

The peripheral monitor 88 detects a position PH1 of the human HM or the obstacle positioned around the pipe W1 held by the attachment 100 as the position of the to-be-avoided object. For example, the position PH1 may be defined by coordinates (Xmh1, Ymh1, Zmh1) in the working-machine coordinate system or coordinates in the global coordinate system. The relative-position calculator 59 calculates the relative position between the position of the pipe W1 recognized by the first sensor 81 and the position PH1 of the human HM or the obstacle detected by the peripheral monitor 88. A circular region having an origin at the position PH1 and a radius RK1 (radius RK1 is, for example, 1 m) may be regarded as a restricted area FA1.

The peripheral monitor 88 also detects the position of the working machine 1 around the pipe W1 held by the attachment 100 as the position of the to-be-avoided object. The relative-position calculator 59 calculates the relative position between the position of the pipe W1 recognized by the first sensor 81 and the position of the working machine 1 detected by the peripheral monitor 88.

Referring to FIG. 12, the operation prohibited area IA is positioned around the pipe W1 held by the attachment 100. The peripheral monitor 88 detects the position of a boundary BD (a plurality of positions PBD1 to PBDn forming the boundary BD) of the operation prohibited area IA for the working machine 1 as the position of the to-be-avoided object. For example, the positions PBD1 and PBDn may be defined by coordinates (Xmb1, Ymb1, Zmb1) and (Xmbn, Ymbn, Zmbn) in the working-machine coordinate system or coordinates in the global coordinate system. The operation prohibited area IA is a restricted area FA2 that the pipe W1 held by the attachment 100 and the working machine 1 are not allowed to enter. The relative-position calculator 59 calculates the relative position between the position of the pipe W1 recognized by the first sensor 81 and the position of the boundary BD (positions PBD1 to PBDn) detected by the peripheral monitor 88.

The peripheral monitor 88 may detect the position of the boundary of an operation prohibited space for the working machine 1 as the position of the to-be-avoided object. The operation prohibited space is positioned around the pipe W1 held by the attachment 100. The operation prohibited space is a space that the pipe W1 held by the attachment 100 and the working machine 1 are not allowed to enter and that includes the operation prohibited area IA. An allowable space (space including a permitted area WA) is, for example, an operation permitted space including a space extending above and below a land, a road, and a site in which the operation involving the to-be-held object W (for example, the pipe W1) held by the attachment 100 is performed, a space extending above and below a road and an alley on which the working machine 1 holding the to-be-held object W (for example, the pipe W1) is movable, and a space extending above and below a standby area in which the working machine 1 is in a standby state. The relative-position calculator 59 calculates the relative position between the position of the pipe W1 recognized by the first sensor 81 and the position of the boundary of the operation prohibited space detected by the peripheral monitor 88.

The first sensor 81 recognizes a position PM12 of an end portion of the pipe W1 held by the attachment 100. For example, the position PM12 may be defined by coordinates (Xmw2, Ymw2, Zmw2) in the working-machine coordinate system or coordinates in the global coordinate system. The relative-position calculator 59 calculates the relative position between the position PM12 of the end portion W1c, which is an end portion closest to the to-be-avoided object among end portions of the pipe W1 recognized by the first sensor 81, and the position of the to-be-avoided object around the pipe W1.

The first sensor 81 recognizes positions PM11 and PM12 of both end portions W1b and W1c of the elongated pipe W1 held by the attachment 100 in the longitudinal direction. For example, the position PM11 may be defined by coordinates (Xmw1, Ymw1, Zmw1) in the working-machine coordinate system or coordinates in the global coordinate system. The relative-position calculator 59 calculates the relative position between each of the positions PM11 and PM12 of the end portions W1b and W1c of the pipe W1 recognized by the first sensor 81 and the position of the to-be-avoided object around the pipe W1.

The first sensor 81 recognizes a plurality of positions on the outer surface of the pipe W1 held by the attachment 100 including the end portions W1b and W1c (for example, a plurality of positions arranged along the outer peripheral surface of the pipe W1 in the longitudinal direction or a plurality of intermediate positions between the end portions W1b and W1c). The relative-position calculator 59 calculates the relative position between each of the positions recognized by the first sensor 81 and the position of the to-be-avoided object. The relative-position calculator 59 may calculate the relative position between each position on a line segment connecting the end portions W1b and W1c of the pipe W1 recognized by the first sensor 81 and the position of the to-be-avoided object.

The relative-position calculator 59 may calculate the relative position between each of the positions obtained by adding a predetermined thickness of the pipe W1 to the positions on the line segment connecting the end portions W1b and W1c of the pipe W1 recognized by the first sensor 81 and the position of the to-be-avoided object around the pipe W1.

The storing unit 54 stores a setting to detect one end portion W1b of the held pipe W1, a setting to detect both end portions W1b and W1c, a setting to detect the line segment between the end portions W1b and W1c when the end portions W1b and W1c are detected, and a setting to add a thickness when the line segment is detected. The operator may operate the manual operator 5 or the setter 57 to change the settings stored in the storing unit 54 as appropriate.

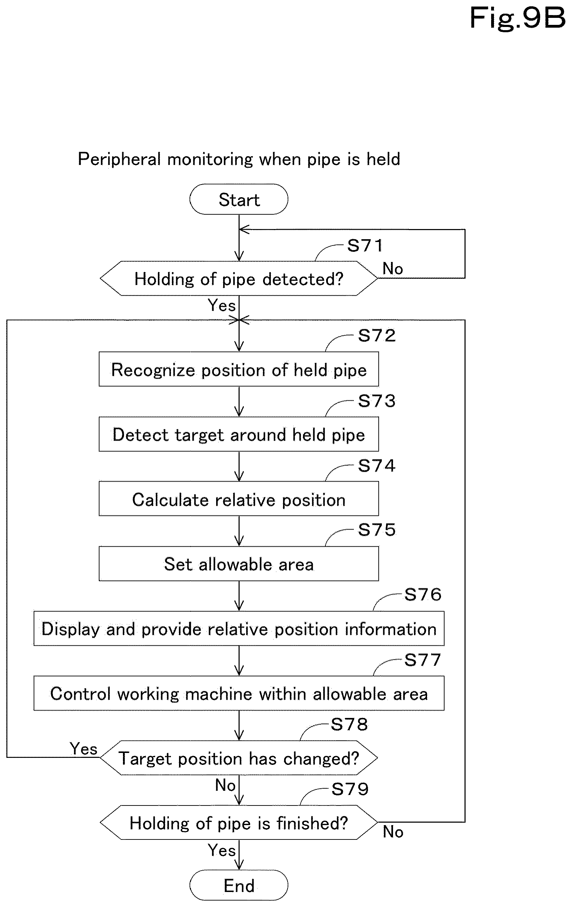

A peripheral monitoring process for when the pipe W1 is held is performed in accordance with a flowchart illustrated in FIG. 9B. FIG. 9B is a flowchart of an example of the peripheral monitoring process performed when the pipe is held.

The controller 51 determines whether or not it is detected by the detector 80 that the pipe W1 is held (S71). When it is detected that the pipe W1 is held (Yes in S71), the controller 51 causes the first sensor 81 to recognize the position of the held pipe W1 (S72).

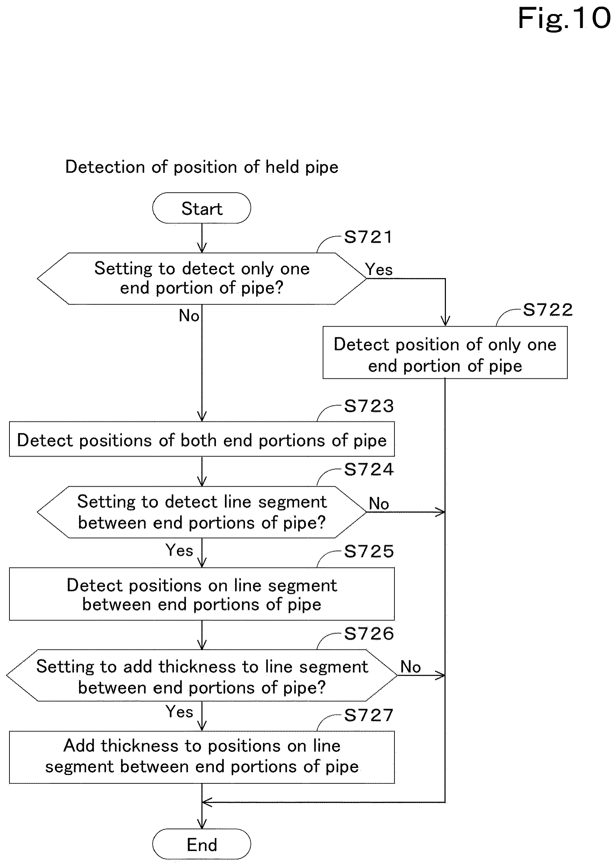

The process of recognizing the position of the pipe W1 (S72) is performed in accordance with a flowchart illustrated in FIG. 10. FIG. 10 is a flowchart of an example of the process of recognizing the position of the pipe.

When the storing unit 54 stores a setting to detect only one end portion W1b of the pipe W1 (Yes in S721), the controller 51 detects only the position of one end portion W1b of the pipe W1 (S722). When the setting to detect only one end portion W1b of the pipe W1 is not stored (No in S721), the controller 51 detects the positions of both end portions W1b and W1c of the pipe W1 (S723).

When the storing unit 54 stores a setting to detect a line segment between the end portions W1b and W1c of the pipe W1 (Yes in S724), the controller 51 detects the positions on the line segment between the end portions W1b and W1c of the pipe W1 (S725).

After S725, when the storing unit 54 stores a setting to add a thickness to the line segment between the end portions W1b and W1c of the pipe W1 (Yes in S726), the controller 51 adds the thickness to the line segment between the end portions W1b and W1c of the pipe W1 (S727). After S727 or S722, or if No in S724 or S726, the controller 51 ends this process and proceeds to S73 in FIG. 9B.

The peripheral monitor 88 detects the position of the to-be-avoided object around the to-be-held object W (for example, the pipe W1) held by the attachment 100 (S73).

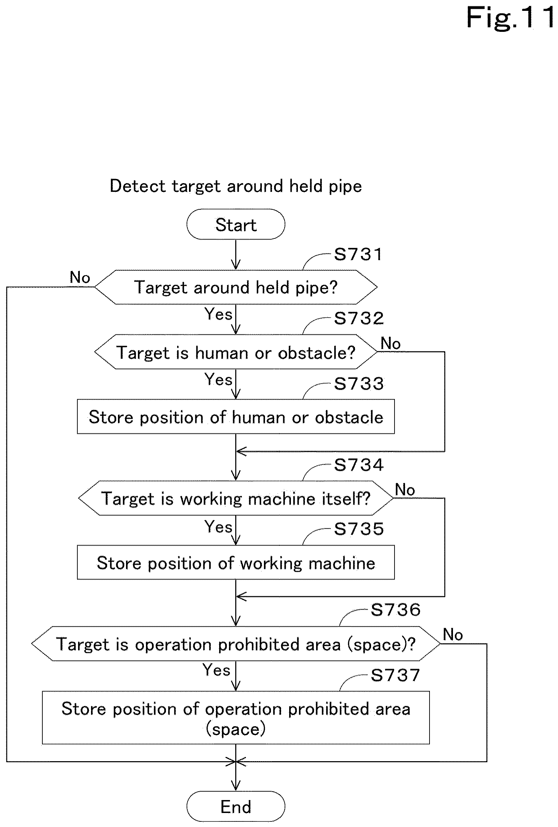

The process of detecting the to-be-avoided object around the pipe W1 (S73) is performed in accordance with a flowchart illustrated in FIG. 11. FIG. 11 is a flowchart of an example of the process of detecting the to-be-avoided object around the pipe.

When the peripheral monitor 88 detects that there is a to-be-avoided object around the pipe W1 held by the attachment 100 (Yes in S731), the controller 51 determines whether or not the to-be-avoided object is the human HM or the obstacle (S732). When it is determined that the to-be-avoided object is the human HM or the obstacle (Yes in S732), the controller 51 stores the position PH1 of the human HM or the obstacle in the storing unit 54 (S733).

The controller 51 determines whether or not the to-be-avoided object is the working machine itself (for example, the boom 21, the main body 30, or the protection mechanism 6)

(S734). When it is determined that the to-be-avoided object is the working machine itself (Yes in S734), the controller 51 stores the position of the working machine 1 in the storing unit 54 (S735).

The controller 51 determines whether or not the to-be-avoided object is the operation prohibited area IA or the operation prohibited space (S736). When it is determined that the to-be-avoided object is the operation prohibited area IA or the operation prohibited space (Yes in S736), the controller 51 stores the position of the operation prohibited area IA or the operation prohibited space in the storing unit 54 (S737).

If No in S731, S732, or S736 or after S737, the controller 51 ends this process and proceeds to S74 in FIG. 9B.

The relative-position calculator 59 calculates the relative position between the position of the pipe W1 recognized by the first sensor 81 and the position (positions PBD1 to PBDn) of the boundary BD detected by the peripheral monitor 88 (S74).

If the setting is to detect one end portion W1b of the held pipe W1, the relative-position calculator 59 calculates the relative position between the position PM12 of the end portion W1c, which is one of the end portions the pipe W1 that is farthest from the attachment 100, and the position of the to-be-avoided object around the pipe W1. If the setting is to detect both end portions W1b and W1c, the relative-position calculator 59 calculates the relative position between each of the positions PM11 and PM12 of the end portions W1b and W1c of the pipe W1 and the position of the to-be-avoided object around the pipe W1. If the setting is to detect the end portions W1b and W1c and the line segment between the end portions W1b and W1c, the relative-position calculator 59 calculates the relative position between each position on the line segment connecting the end portions W1b and W1c of the pipe W1 and the position of the to-be-avoided object around the pipe W1. If the setting is to detect the line segment and add the thickness to the line segment, the relative-position calculator 59 calculates the relative position between each of the positions obtained by adding the predetermined thickness of the pipe W1 to the positions on the line segment connecting the end portions W1b and W1c of the pipe W1 and the position of the to-be-avoided object around the pipe W1.

The controller 51 sets the permitted area WA in which the pipe W1 held by the attachment 100 does not come into contact with the to-be-avoided object based on the relative position calculated by the relative-position calculator 59 (S75).

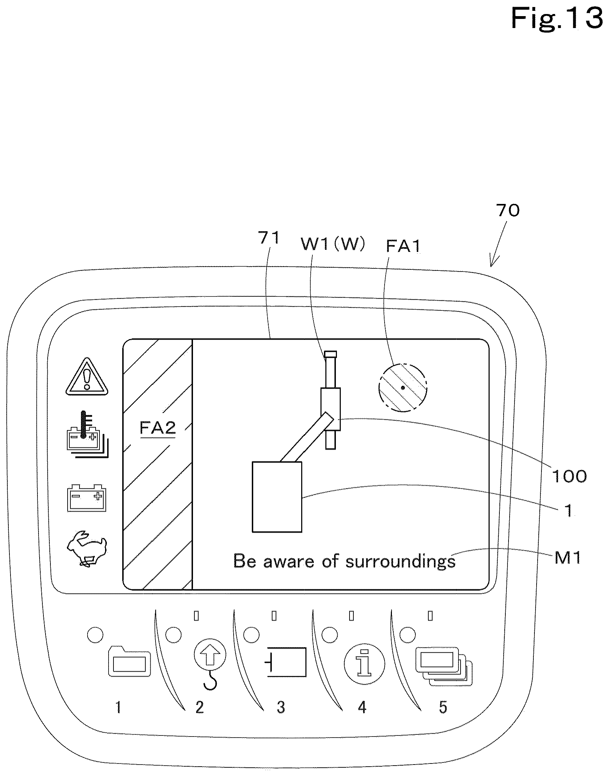

FIG. 13 illustrates an example of relative position information displayed on the display. The display 70 displays the relative position information indicating the relative position on the display unit 71 (S75). The display unit 71 displays, as the relative position information, information indicating the relative positional relationship between the pipe W1 held by the attachment 100 of the working machine 1 and the restricted areas FA1 and FA2 present around the pipe W1, and a message M1 stating "Be aware of surroundings". The notifier 75 provides the relative position information indicating the relative position (S75). For example, the notifier 75 outputs a voice saying "Be aware of surroundings".

The controller 51 controls the working machine 1 such that the pipe W1 held by the attachment 100 is within the permitted area WA (S77). For example, when the pipe W1 held by the attachment 100 is within the permitted area WA, the controller 51 enables a manual operation performed using the holding button 5a and the operating lever 5b by an operator or an automatic holding operation of the attachment 100 in the holding operation mode. The controller 51 may limit the operational speed of the working machine 1 when the relative position calculated by the relative-position calculator 59 is less than a predetermined distance. For example, the operational speed of at least one or more of the working device 20 (the boom cylinder C1, the attachment swing cylinder C2, the swing cylinder C4, the arm cylinder C9, and the like), the traveling device 10 (the left traveling motor ML and the right traveling motor MR), and the swiveling device 25 (swivel motor MT) is limited. When the relative position is less than the predetermined distance, the controller 51 may reduce the upper limit of the operational speed of the working machine 1 as the distance corresponding to the relative position decreases.

The controller 51 determines whether or not the position of the to-be-avoided object has changed (S78). If it is determined that the position of the to-be-avoided object has changed (Yes in S78), the controller 51 proceeds to S72. If it is determined that the position of the to-be-avoided object has not changed (No in S78), the controller 51 determines whether or not holding of the pipe W1 is finished (S79). If holding of the pipe W1 is not finished (No in S79), the controller 51 returns to S72. If holding of the pipe W1 is finished (Yes in S79), the controller 51 ends this process.

Main characteristic items of and effects achieved by working machines 1 according to the above-described third embodiment are as follows.

(Item E1) A working machine 1 including a machine body 2, a working device 20 provided on the machine body 2 to attach thereto an attachment 100 to hold a to-be-held object W, a first sensor 81 to recognize a position of an end portion of a protruding portion of the to-be-held object W held by the attachment 100 that protrudes from the attachment 100, a peripheral monitor 888 to detect a position of a to-be-avoided object in a surrounding area of the to-be-held object W, and a relative-position calculator 59 to calculate a relative position between the position of the end portion of the to-be-held object W recognized by the first sensor 81 and the position of the to-be-avoided object detected by the peripheral monitor 88.

With this working machine 1, the relative position between the to-be-held object W and the to-be-avoided object can be easily recognized, so that safety can be enhanced in an operation using the attachment 100 that holds the to-be-held object W. Moreover, the relative-position calculator 59 calculates the relative position between the position of the to-be-held object W held by the attachment 100 and the position of the to-be-avoided object around the to-be-held object W. Therefore, even when the attachment 100 holds a different type of to-be-held object W and when the state in which the to-be-held object W is held by the attachment 100 differs from a previous state or a predetermined state, the relative position between the position of the to-be-held object W held by the attachment 100 and the position of the to-be-avoided object around the to-be-held object W can be accurately determined. Thus, the relative positional relationship between the to-be-held object W held by the attachment 100 and the to-be-avoided object around the to-be-held object W can be accurately recognized in consideration of the actual state in which the to-be-held object W is held by the attachment 100.

(Item E2) The working machine 1 according to item D13 or E1, further including a controller 51 to control an operation of the working machine 1 based on the relative position such that the to-be-held object W is within a permitted area WA in which the to-be-held object W does not come into contact with the to-be-avoided object.

With this working machine 1, the to-be-held object W held by the attachment 100 can be prevented from coming into contact with or entering the to-be-avoided object around the to-be-held object W. Therefore, drive control of the working device 20 can be safely performed while the to-be-held object W is held.

(Item E3) The working machine 1 according to item D13, E1, or E2, further including a display 70 to display relative position information indicating the relative position.

With this working machine 1, the display 70 displays the relative position information indicating the relative position. Thus, the operator of the working machine 1 can be informed of the relative positional relationship between the to-be-held object W held by the attachment 100 and the to-be-avoided object around the to-be-held object W.

(Item E4) The working machine 1 according to any one of items D13 and E1 to E3, further including a notifier 75 to provide a notification when a distance corresponding to the relative position is less than a predetermined distance.

With this working machine 1, the notifier 75 provides the relative position information indicating the relative position. Thus, the operator of the working machine 1 can be notified of the relative positional relationship between the to-be-held object W held by the attachment 100 and the to-be-avoided object around the to-be-held object W.

(Item E5) The working machine 1 according to any one of items D13 and E1 to E4, wherein the peripheral monitor 88 is configured to detect a position PH1 of a human H or an obstacle in the surrounding area of the to-be-held object W as the position of the to-be-avoided object.

With this working machine 1, the relative positional relationship between the to-be-held object W held by the attachment 100 and the human HM or obstacle around the to-be-held object W can be acquired. Therefore, the relative positional relationship between the to-be-held object W held by the attachment 100 and the human HM or obstacle around the to-be-held object W can be accurately recognized in consideration of the actual state in which the to-be-held object W is held by the attachment 100.

(Item E6) The working machine 1 according to any one of D13 and E1 to E5, wherein the peripheral monitor 88 is configured or programmed to detect a position of the working machine 1 as the position of the to-be-avoided object.

With this working machine 1, the relative positional relationship between the to-be-held object W held by the attachment 100 and the working machine 1 around the to-be-held object W can be acquired. Therefore, the relative positional relationship between the to-be-held object W held by the attachment 100 and the working machine 1 around the to-be-held object W can be accurately recognized in consideration of the actual state in which the to-be-held object W is held by the attachment 100.

(Item E7) The working machine 1 according to any one of items D13 and E1 to E6, wherein the peripheral monitor 88 is configured or programmed to detect a position (position PBD1 to PBDn) of a boundary BD of an operation prohibited area IA for the working machine 1 as the position of the to-be-avoided object, the operation prohibited area IA being set in a surrounding area of the to-be-held object W.

With this working machine 1, the relative positional relationship between the to-be-held object W held by the attachment 100 and the boundary BD of the operation prohibited area IA for the working machine 1 around the to-be-held object W can be acquired. Therefore, the relative positional relationship between the to-be-held object W held by the attachment 100 and the boundary BD of the operation prohibited area IA around the to-be-held object W can be accurately recognized in consideration of the actual state in which the to-be-held object W is held by the attachment 100. Examples of the operation permitted area include a land, a road, and a site in which the operation involving the to-be-held object W held by the attachment 100 is performed, a road and an alley on which the working machine 1 holding the to-be-held object W is movable, and a standby area in which the working machine 1 is in a standby state.

Additionally, the relative positional relationship between the to-be-held object W held by the attachment 100 and the boundary BD of the operation prohibited space for the working machine 1 around the to-be-held object W can be acquired. Therefore, the relative positional relationship between the to-be-held object W held by the attachment 100 and the boundary BD of the operation prohibited space around the to-be-held object W can be accurately recognized in consideration of the actual state in which the to-be-held object W is held by the attachment 100. Examples of the operation permitted space include a space extending above and below a land, a road, and a site in which the operation involving the to-be-held object W held by the attachment 100 is performed, a space extending above and below a road and an alley on which the working machine 1 holding the to-be-held object W is movable, and a space extending above and below a standby area in which the working machine 1 is in a standby state.

(Item E8) The working machine 1 according to any one of items D13 and E1 to E7, wherein the relative-position calculator 59 is configured or programmed to calculate a relative position between a position PM1 of an end portion W1c closest to the to-be-avoided object among end portions of the to-be-held object W recognized by the first sensor 81 and the position of the to-be-avoided object.

With this working machine 1, only the relative position between the end portion W1c, which is one of the end portions of the to-be-held object W held by the attachment 100 that is closest to the to-be-avoided object, and the to-be-avoided object need to be calculated. In other words, only the minimum necessary relative position needs to be calculated. Therefore, the processing load for calculating the relative position can be reduced.

(Item E9) The working machine 1 according to any one of items D13 and E1 to E8, wherein the first sensor is configured to recognize positions of opposite end portions W1b, W1c of the to-be-held object W having an elongated shape in a longitudinal direction, and the relative-position calculator 59 is configured or programmed to calculate a relative position between each of the positions PM11, PM12 of the end portions W1b, W1c recognized by the first sensor 81 and the position of the to-be-avoided object.

With this working machine 1, the relative position between each of the positions PM11 and PM12 of the end portions W1b and W1c of the to-be-held object W held by the attachment 100 and the position of the to-be-avoided object around the to-be-held object W can be acquired. In other words, two relative positions can be acquired. In addition, since only two relative positions are calculated, the processing load for calculating the relative positions is maintained at a low level.

(Item E10) The working machine 1 according to item E9, wherein the first sensor 81 is configured to recognize a plurality of positions on an outer surface of the to-be-held object W including the end portions W1b, W1c, and the relative-position calculator 59 is configured or programmed to calculate a relative position between each of the positions recognized by the first sensor 81 and the position of the to-be-avoided object.

With this working machine 1, the relative position between each of the plurality of positions on the outer surface of the to-be-held object W held by the attachment 100 including the end portions W1b and W1c and the position of the to-be-avoided object is calculated. The relative position between each of the plurality of positions on the outer surface of the to-be-held object W including the end portions W1b and W1c and the to-be-avoided object can be acquired. Therefore, the relative positions can be acquired in more detail.

For example, the relative position between each position on a line segment connecting the end portions W1b and W1c of the to-be-held object W and the to-be-avoided object may be acquired. In such a case, the relative position can be acquired for each position on the line segment connecting the end portions W1b and W1c of the to-be-held object W held by the attachment 100. Therefore, the relative positions can be acquired in more detail.

The relative-position calculator 59 may calculate the relative position between each of the positions obtained by adding a predetermined thickness of the to-be-held object W to the positions on the line segment connecting the end portions W1b and W1c of the to-be-held object W recognized by the first sensor 81 and the position of the to-be-avoided object around the to-be-held object W.

In this case, the relative position between each of the positions obtained by adding the predetermined thickness of the to-be-held object W to the positions on the line segment connecting the end portions W1b and W1c of the to-be-held object W held by the attachment 100 and the position of the to-be-avoided object around the to-be-held object W is calculated. Thus, the relative position between each of the positions determined in consideration of the thickness of the to-be-held object W based on the positions on the line segment connecting the end portions W1b and W1c of the to-be-held object W and the to-be-avoided object can be acquired. In other words, the relative position can be acquired for each of the positions determined in consideration of the thickness of the to-be-held object W based on the positions on the line segment connecting the end portions W1b and W1c of the to-be-held object W held by the attachment 100. Therefore, the relative positions can be acquired in still more detail.

(Item E11) The working machine 1 according to any one of items D13 and E1 to E10, further including a detector 80 to detect that the to-be-held object W is held by the attachment 100, wherein the relative-position calculator 59 is configured or programmed to calculate the relative position when the detector 80 detects that the to-be-held object W is held.

With this working machine 1, the relative-position calculator 59 calculates the relative position when the detector 80 detects that the to-be-held object W is held (that is, when the to-be-held object W is held by the attachment 100). Therefore, the relative position between the to-be-held object W held by the attachment 100 and the to-be-avoided object around the to-be-held object W can be acquired. In other words, the relative position can be acquired at an appropriate time during an operation of the working device 20 in which the to-be-held object W is held by the attachment 100.

(Item E12) The working machine 1 according to any one of items D13 and E1 to E11, further including a controller 51 to limit an operational speed of the working machine when a distance corresponding to the relative position is less than a predetermined distance.

With this working machine 1, the operation using the attachment 100 that holds the to-be-held object W can be limited at an appropriate time.

(Item E13) The working machine 1 according to item E12, wherein the controller 51 is configured or programmed to reduce an upper limit of the operational speed of the working machine as a distance corresponding to the relative position decreases.

With this working machine 1, the safety of the operation using the attachment 100 that holds the to-be-held object W can be appropriately ensured in accordance with the distance corresponding to the relative position.

(Item E14) A method of controlling a working machine 1 including a machine body 2, a working device 20 provided on the machine body 2, an attachment 100 provided on the working device 20 to hold a to-be-held object W, a first sensor 81 to recognize a position of the to-be-held object W held by the attachment 100, a peripheral monitor 88 to detect a position of a to-be-avoided object in a surrounding area of the to-be-held object W, and a relative-position calculator 59 to calculate a relative position between the to-be-held object W and the to-be-avoided object, the method including a first step (S72) including causing the first sensor 81 to recognize a position of an end portion of a protruding portion of the to-be-held object W held by the attachment 100 that protrudes from the attachment 100, a second step (S73) including causing the peripheral monitor 88 to detect the position of the to-be-avoided object W in the surrounding area of the to-be-held object W, and a third step (S74) including causing the relative-position calculator 59 to calculate a relative position between the position of the to-be-held object W recognized in the first step and the position of the to-be-avoided object detected in the second step.

With this method of controlling the working machine 1, the relative position between the to-be-held object W and the to-be-avoided object can be easily recognized, so that safety can be enhanced in an operation using the attachment 100 that holds the to-be-held object W.

**In** each embodiment, the positions calculated by the coordinate calculator 58 and the relative-position calculator 59 are not limited to positions in the working-machine coordinate system, and may be positions in the coordinate system of the first sensor 81 or the global coordinate system. The coordinate systems can be converted to each other by a known coordinate conversion operation.

Although the first sensor 81 and the position acquirer 83 are provided in each embodiment, the first sensor 81 may function as the position acquirer 83. In other words, the first sensor 81 may additionally detect (acquire) the position of the one end portion W2b of the to-be-joined pipe W2.

Although the working machine 1 is configured such that the first hydraulic pump P1, the second hydraulic pump P2, and the third hydraulic pump P3 are powered by the prime mover E1 in each embodiment, the working machine may be of an electric type or a hybrid type including a drive battery and an electric motor instead of or in addition to the prime mover E1. In such a case, the working machine 1 may be configured such that the drive battery powers the electric motor and that the electric motor powers the first hydraulic pump P1, the second hydraulic pump P2, and the third hydraulic pump P3. The hydraulic fluid delivered by the first hydraulic pump P1 and the second hydraulic pump P2 may drive the hydraulic actuators (the boom cylinder C1, the attachment swing cylinder C2, the dozer cylinder C3, the swing cylinder C4, and the arm cylinder C9), the left traveling motor ML, the right traveling motor MR, and the swivel motor MT, and the working device 20 and the traveling device 10 may be powered by the hydraulic actuators (the boom cylinder C1, the attachment swing cylinder C2, the dozer cylinder C3, the swing cylinder C4, and the arm cylinder C9), the left traveling motor ML, the right traveling motor MR, and the swivel motor MT.

Alternatively, some or all of the actuators included in the working device 20 and the traveling device 10 may be composed of electric actuators. The electric actuators may be powered of a battery, and the working device 20 and the traveling device 10 may be powered by the electric actuators. For example, all of the actuators may be electric actuators, or at least an electric motor for driving a hydraulic pump or a swivel electric motor may be provided.

While embodiments of the present invention have been described above, it is to be understood that the embodiments disclosed herein are considered as examples in all aspects and are not considered as limitations. The scope of the present invention is to be determined not by the foregoing description but by the claims, and is intended to include all variations and modifications within the scope of the claims and their equivalents.

In each of the above-described embodiments, the present invention is applied to the working machine 1, such as a backhoe. However, the application of the present invention is not limited to this. For example, the present invention is also applicable to other construction machines, such as a wheel loader, a compact track loader, and a skid-steer loader.

### Reference Signs List

- 1: working machine

- 2: machine body
- 10: traveling device
- 20: working device
- 21: boom
- 22: arm
- 24: swing bracket
- 25: swiveling device
- 30: main body
- 51: controller
- 57: setter
- 58: coordinate calculator
- 59: relative-position calculator
- 80: detector
- 80A: attachment detector
- 80B: weight sensor
- 80C: position detector
- 81: first sensor (detector)
- 82: second sensor
- 83: position acquirer
- 84: load sensor (detector)
- 100: attachment
- 112: holder
- 114: horizontal rotation mechanism
- 115: joining functional unit
- 121: holding claw
- C1: boom cylinder
- C2: attachment swing cylinder
- C4: swing cylinder
- C9: arm cylinder
- MT: swivel motor
- W: to-be-held object (joining member)
- W1: pipe (joining member)
- W2: to-be-joined pipe (to-be-joined member)

## Claims

1. A working machine comprising:
a machine body;
a working device provided on the machine body;
an attachment provided on the working device to hold an elongated to-be-held object;
a first sensor to recognize a position of one end portion of the to-be-held object;
a setter to set a holding position based on a recognition result from the first sensor, the holding position being a position at which the to-be-held object is to be held by the attachment; and
a controller to control the working device; wherein
the controller is configured or programmed to control the working device to allow the attachment to hold the to-be-held object at the holding position set by the setter.

2. The working machine according to claim 1, wherein the setter is configured or programmed to set the holding position to a position at a predetermined distance from the one end portion of the to-be-held object recognized by the first sensor.

3. The working machine according to claim 1, wherein the setter is configured or programmed to set the holding position such that the one end portion of the to-be-held object is recognizable by the first sensor when the to-be-held object is held by the attachment.

4. The working machine according to claim 1, wherein
the attachment includes a holder to hold the to-be-held object and a joining functional unit positioned on an extension line extending in a longitudinal direction of the to-be-held object from the one end portion of the to-be-held object held by the holder, the joining functional unit being configured to approach or contact a to-be-joined member when the one end portion of the to-be-held object is joined to the to-be-joined member, the to-be-joined member being a member to which the one end portion of the to-be-held object is to be joined; and
the setter is configured or programmed to set the holding position to a position at which a distance between the one end portion of the to-be-held object and the joining functional unit is a predetermined separation distance when the to-be-held object is held by the holder.

5. The working machine according to claim 4, wherein
the attachment includes a horizontal rotation mechanism to horizontally rotate the holder; and
the controller is configured or programmed to control an operation of the horizontal rotation mechanism such that a holding direction of the holder coincides with a direction perpendicular to the longitudinal direction of the to-be-held object.

6. The working machine according to claim 5, wherein
the setter is configured or programmed to set a pre-holding position to a position facing the holding position; and
the controller is configured or programmed to control the attachment and the working device to move the attachment to the pre-holding position, move the attachment from the pre-holding position to the holding position with the holder in an open state, and bring the holder into a closed state to hold the to-be-held object when the attachment is moved to the holding position.

7. The working machine according to claim 6, wherein
the holder includes a pair of holding claws; and
the closed state of the holder is a state in which an interval between the pair of holding claws is less than when the holder is in the open state such that the to-be-held object is held between the pair of holding claws.

8. The working machine according to claim 1, wherein the working device includes a boom including a proximal end portion supported by the machine body such that the boom is rotatable, an arm supported by a distal end portion of the boom such that the arm is rotatable, and the attachment provided at a distal end portion of the arm.

9. The working machine according to any one of claims 6 to 8, wherein the controller is configured or programmed to, when the amount of displacement of (i) a position of the one end portion of the to-be-held object recognized by the first sensor while the working device and the attachment are controlled based on the holding position set by the setter to hold the to-be-held object from (ii) an expected position of the one end portion of the to-be-held object corresponding to the holding position set by the setter is greater than or equal to a predetermined value, control the working device to perform re-holding of the to-be-held object such that the amount of displacement is less than the predetermined value.

10. The working machine according to claim 9, wherein the controller is configured or programmed to perform the re-holding by bringing the holder into the open state, moving the attachment in a direction that reduces the amount of displacement, and then bringing the holder into the closed state.

11. The working machine according to claim 1, further comprising a notifier to provide a notification using sound, light or a display when the first sensor fails to recognize the position of the one end portion of the to-be-held object.

12. The working machine according to any one of claims 1 to 11, wherein
the first sensor is configured to recognize a position of a joining portion of a joining member that is to be joined to a to-be-joined member, the joining member being the to-be-held object held by the attachment; and
the working machine comprises:
an approach-target-position setter to set, based on a recognition result from the first sensor, an approach target position to which the attachment is to be moved such that the joining member is moved to bring the joining portion to an operation start position in the vicinity of the to-be-joined member; and
a controller to control the working device such that the attachment moves to the approach target position set by the approach-target-position setter.

13. A working machine comprising:
a machine body;
a working device provided on the machine body;
an attachment provided on the working device to hold a joining member;
a first sensor to recognize a position of a joining portion of the joining member held by the attachment, the joining portion being a portion to be joined to a to-be-joined member;
an approach-target-position setter to set, based on a recognition result from the first sensor, an approach target position to which the attachment is to be moved such that the joining member is moved to bring the joining portion to an operation start position in the vicinity of the to-be-joined member; and
a controller to control the working device such that the attachment moves to the approach target position set by the approach-target-position setter.

14. The working machine according to claim 12 or 13, wherein
the to-be-joined member is in a groove located lower than a ground surface or on a base including at least a portion located higher than the ground surface; and
the approach-target-position setter is configured or programmed to set the approach target position on or above the ground surface in the vicinity of the to-be-joined member or on a platform provided on the ground surface in the vicinity of the to-be-joined member.

15. The working machine according to claim 14, wherein
the to-be-joined member is in the groove located lower than the ground surface; and
the approach-target-position setter is configured or programmed to set the approach target position on or above the ground surface in the vicinity of the groove.

16. The working machine according to claim 13 or 14, further comprising a position acquirer to acquire a position of a to-be-joined portion of the to-be-joined member, the to-be-joined portion being a portion to which the joining portion is to be joined, and
the approach-target-position setter is configured or programmed to set the operation start position based on the recognition result from the first sensor and based on the position of the to-be-joined portion acquired by the position acquirer, the operation start position being set to a position at which the joining portion is in the vicinity of the to-be-joined portion.

17. The working machine according to claim 16, wherein the position acquirer is configured or programmed to acquire the position of the to-be-joined portion based on an image of the to-be-joined portion captured by an imager or a ranging result from a ranging sensor.

18. The working machine according to claim 16, wherein the position acquirer is configured or programmed to acquire the position of the to-be-joined portion based on three-dimensional design data indicating a position of the to-be-joined member or a result of detection performed by an underground radar to detect the position of the to-be-joined member embedded underground.

19. The working machine according to claim 16, wherein the position acquirer is configured or programmed to, when the to-be-joined member is to be joined to a second to-be-joined member and the joining member is to be joined to the to-be-joined member joined to the second to-be-joined member, acquire the position of the to-be-joined portion based on a position of a second to-be-joined portion of the second to-be-joined member that is joined to the to-be-joined member and dimension information about a dimension to the to-be-joined portion from the second to-be-joined portion of the to-be-joined member that is joined to the second to-be-joined member.

20. The working machine according to any one of claims 16 to 19, further comprising:
a second sensor to detect attitudes of the machine body and the attachment in a predetermined coordinate system; and
a coordinate calculator to calculate a first coordinate set representing coordinates of the position of the joining portion in the predetermined coordinate system based on the recognition result from the first sensor and a detection result from the second sensor; wherein
the position acquirer is configured or programmed to acquire a second coordinate set representing coordinates of the position of the to-be-joined portion in the predetermined coordinate system; and
the approach-target-position setter is configured or programmed to set the operation start position to a third coordinate set representing coordinates in the vicinity of the second coordinate set, calculate a relative position of the third coordinate set with respect to the first coordinate set, and set the approach target position based on a position of the attachment detected by the second sensor and based on the relative position.

21. The working machine according to claim 13 or 14, further comprising:
a traveling device to support the machine body such that the machine body is allowed to travel; and
a swiveling device to swivel the machine body relative to the traveling device; wherein
the working device includes a boom including a proximal end portion supported by the machine body such that the boom is rotatable about a first rotation axis, a boom driver to rotate the boom about the first rotation axis, an arm supported by a distal end portion of the boom such that the arm is rotatable about a second rotation axis, an arm driver to rotate the arm about the second rotation axis, and the attachment provided at a distal end portion of the arm; and
the controller is configured or programmed to calculate driving amounts by which actuators of the traveling device, the swiveling device, the boom driver, and the arm driver are to be driven to move the attachment to the approach target position, and drive the actuators based on the calculated driving amounts to move the attachment to the approach target position.

22. The working machine according to claim 21, further comprising:
a swing device to horizontally rotate the working device relative to the machine body; wherein
the controller is configured or programmed to calculate driving amounts by which actuators of the traveling device, the swiveling device, the swing device, the boom driver, and the arm driver are to be driven to move the attachment to the approach target position, and drive the actuators based on the calculated driving amounts to move the attachment to the approach target position.

23. The working machine according to claim 21 or 22, wherein
the boom includes a first boom including a proximal end portion supported by the machine body such that the first boom is rotatable about the first rotation axis, a first boom driver to rotate the first boom about the first rotation axis, a second boom supported by a distal end portion of the first boom such that the second boom is rotatable about a third rotation axis, and a second boom driver to rotate the second boom about the third rotation axis;
the arm is supported by a distal end portion of the second boom such that the arm is rotatable about the second rotation axis; and
the controller is configured or programmed to calculate driving amounts by which actuators of the traveling device, the swiveling device, the first boom driver, the second boom driver, and the arm driver are to be driven to move the attachment to the approach target position, and drive the actuators based on the calculated driving amounts to move the attachment to the approach target position.

24. The working machine according to claim 21, wherein the controller is configured or programmed to, when the attachment is to be moved to the approach target position, actuate each of a portion of or all of to-be-driven actuators at the same speed or speeds within a predetermined range from start to end of movement of the attachment, the to-be-driven actuators being one or more of the actuators that are to be driven.

25. The working machine according to claim 21, wherein the controller is configured or programmed to, when the attachment is to be moved to the approach target position, set movement speeds of to-be-driven actuators such that movements of a portion of or all of the to-be-driven actuators end at the same time or substantially at the same time, the to-be-driven actuators being one or more of the actuators that are to be driven.

26. The working machine according to claim 13 or 14, wherein the controller is configured or programmed to control the working device to reduce a movement speed of the attachment from a preceding position and stop the attachment at the approach target position, the preceding position being a position at which the attachment falls a little short of the approach target position.

27. The working machine according to claim 16, wherein
the working device includes a boom including a proximal end portion supported by the machine body such that the boom is rotatable about a first rotation axis, an arm supported by a distal end portion of the boom such that the arm is rotatable about a second rotation axis, and the attachment provided at a distal end portion of the arm;
the first sensor is provided in or on one of the boom, the arm, and the attachment; and
the position acquirer is provided in or on one of the boom, the arm, and the attachment.

28. The working machine according to any one of claims 1 to 27, wherein
the first sensor is configured to recognize a position of a joining portion of a joining member that is to be joined to a to-be-joined member, the joining member being the to-be-held object held by the attachment; and
the working machine comprises:
a target-position setter to set, based on a recognition result from the first sensor, a target position to which the attachment is to be moved such that the joining portion of the joining member is moved to a joining start position at which an operation of joining the joining portion to the to-be-joined member is to be started; and
a controller to control the working device such that the attachment moves to the target position set by the target-position setter.

29. A working machine comprising:
a machine body;
a working device provided on the machine body;
an attachment provided on the working device to hold a joining member;
a first sensor to recognize a position of a joining portion of the joining member held by the attachment, the joining portion being a portion to be joined to a to-be-joined member;
a target-position setter to set, based on a recognition result from the first sensor, a target position to which the attachment is to be moved such that the joining portion of the joining member is moved to a joining start position at which an operation of joining the joining portion to the to-be-joined member is to be started; and
a controller to control the working device such that the attachment moves to the target position set by the target-position setter.

30. The working machine according to claim 28 or 29, further comprising a position acquirer to acquire a position of a to-be-joined portion of the to-be-joined member, the to-be-joined portion being a portion to which the joining portion is to be joined; and
the target-position setter is configured or programmed to set the joining start position based on the position of the to-be-joined portion acquired by the position acquirer.

31. The working machine according to claim 30, further comprising:
a second sensor to detect attitudes of the machine body and the attachment in a predetermined coordinate system; and
a coordinate calculator to calculate a first coordinate set representing coordinates of the position of the joining portion in the predetermined coordinate system based on the recognition result from the first sensor and based on a detection result from the second sensor; wherein
the position acquirer is configured or programmed to acquire a second coordinate set representing coordinates of the position of the to-be-joined portion in the predetermined coordinate system; and
the target-position setter is configured or programmed to set a joining-start-position coordinate set representing coordinates of the joining start position in the predetermined coordinate system based on the second coordinate set, calculate a relative position of the joining-start-position coordinate set with respect to the first coordinate set, and set the target position based on a position of the attachment detected by the second sensor and based on the relative position.

32. The working machine according to claim 28 or 29, wherein
the working device includes a boom including a proximal end portion supported by the machine body such that the boom is rotatable, an arm supported by a distal end portion of the boom such that the arm is rotatable, and the attachment provided at a distal end portion of the arm; and
the controller is configured or programmed to, when the attachment is to be moved to the target position, actuate the boom and the arm at the same speed or speeds within a predetermined range from start to end of movement of the attachment.

33. The working machine according to claim 28 or 29, wherein
the working device includes a boom including a proximal end portion supported by the machine body such that the boom is rotatable, an arm supported by a distal end portion of the boom such that the arm is rotatable, and the attachment provided at a distal end portion of the arm; and
the controller is configured or programmed to, when the attachment is to be moved to the target position, set movement speeds of the boom and the arm such that movements of the boom and the arm end at the same time or substantially at the same time.

34. The working machine according to claim 31, wherein
the target-position setter is configured or programmed to set an upper target position vertically above or substantially vertically above the target position; and
the controller is configured or programmed to move the attachment to the upper target position and then vertically or substantially vertically lowers the attachment from the upper target position to the target position.

35. The working machine according to claim 28 or 29, wherein the controller is configured or programmed to gradually reduce a movement speed of the attachment from a preceding position and stop the attachment at the target position, the preceding position being a position at which the attachment falls a little short of the target position.

36. The working machine according to claim 28 or 29, wherein the controller is configured or programmed to, when the joining portion is located at an overshoot position which is closer to the to-be-joined portion than the joining start position, control the working device to move the joining portion in a direction returning from the overshoot position to the joining start position or stop the joining portion at the overshoot position.

37. The working machine according to claim 28 or 29, wherein
the target-position setter is configured or programmed to set a preliminary target position at a position at a predetermined distance from the target position; and
the controller is configured or programmed to move the attachment to the preliminary target position and then move the attachment from the preliminary target position to the target position.

38. The working machine according to claim 30, wherein
the working device includes a boom including a proximal end portion supported by the machine body such that the boom is rotatable, an arm supported by a distal end portion of the boom such that the arm is rotatable, and the attachment provided at a distal end portion of the arm;
the first sensor is provided in or on one of the boom, the arm, and the attachment, and
the position acquirer is provided in or on one of the boom, the arm, and the attachment.

39. The working machine according to claim 28 or 29, wherein the to-be-joined member is in a groove located lower than a ground surface, and the controller is configured or programmed to cause the attachment to hold the joining member located higher than the ground surface and move the joining member to the joining start position in the groove.

40. The working machine according to claim 28 or 29, wherein the joining member is an elongated member, and the joining portion is located at one of opposite ends of the joining member in a longitudinal direction such that the joining portion is separated from the attachment when the joining member is held by the attachment.

41. The working machine according to claim 28 or 29, wherein the controller is configured or programmed to move the joining portion to the joining start position and then move the attachment in a direction in which the joining portion approaches the to-be-joined portion to fit the joining portion to the to-be-joined portion.

42. A method of controlling a working machine including a machine body, a working device provided on the machine body, and an attachment provided on the working device to hold an elongated to-be-held object, the method comprising:
a position-recognizing step including recognizing a position of one end portion of the to-be-held object;
a holding-position-setting step including setting a holding position based on a recognition result obtained in the position-recognizing step, the holding position being a position at which the to-be-held object is to be held by the attachment; and
a holding step including holding the to-be-held object based on the holding position set in the holding-position-setting step.

43. A method of controlling a working machine including a machine body, a working device provided on the machine body, and an attachment to hold a joining member, the method comprising:
a position-recognizing step including recognizing a position of a joining portion of the joining member held by the attachment, the joining portion being a portion to be joined to a to-be-joined member; and
a step of setting, based on a recognition result obtained in the position-recognizing step, an approach target position to which the attachment is to be moved such that the joining member is moved to bring the joining portion to an operation start position in the vicinity of the to-be-joined member.

44. A method of controlling a working machine including a machine body, a working device provided on the machine body, and an attachment to hold a joining member, the method comprising:
a position-recognizing step including recognizing a position of a joining portion of the joining member held by the attachment, the joining portion being a portion to be joined to a to-be-joined member; and
a target-position-setting step including setting, based on a recognition result obtained in the position-recognizing step, a target position to which the attachment is to be moved such that the joining portion of the joining member is moved to a joining start position at which an operation of joining the joining portion to the to-be-joined member is to be started.
